(19) Europäisches Patentamt / European Patent Office / Office européen des brevets

(11) **EP 4 518 475 A1**

(12) **EUROPEAN PATENT APPLICATION**
published in accordance with Art. 153(4) EPC

(43) Date of publication:
**05.03.2025 Bulletin 2025/10**

(21) Application number: **22939027.3**

(22) Date of filing: **27.04.2022**

(51) International Patent Classification (IPC):
**H04W 72/04** (2023.01)    **H04W 24/10** (2009.01)

(52) Cooperative Patent Classification (CPC):
**H04W 24/10; H04W 72/04**

(86) International application number:
**PCT/CN2022/089672**

(87) International publication number:
**WO 2023/206174 (02.11.2023 Gazette 2023/44)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Beijing Xiaomi Mobile Software Co., Ltd.**
**Beijing 100085 (CN)**

(72) Inventor: **LI, Mingju**
**Beijing 100085 (CN)**

(74) Representative: **Hersina, Günter et al**
**Schoppe, Zimmermann, Stöckeler**
**Zinkler, Schenk & Partner mbB**
**Patentanwälte**
**Radlkoferstrasse 2**
**81373 München (DE)**

(54) **CODEBOOK-BASED PRECODING DETERMINATION METHODS AND APPARATUSES, AND DEVICE AND STORAGE MEDIUM**

(57) Codebook-based precoding determination methods and apparatuses, and a device and a storage medium, which relate to the field of mobile communications. A codebook-based precoding determination method comprises: according to determined channel information corresponding to each channel status information (CSI)-RS resource, and codebook parameter information, a terminal sending CSI to a network device, wherein the CSI comprises indication information corresponding to a plurality of CSI-RS resources and indication information corresponding to each CSI-RS resource, or indication information corresponding to a plurality of port groups in one CSI-RS resource and indication information corresponding to each port group, and the CSI is used for determining precoding for the terminal on the basis of a codebook structure corresponding to the codebook parameter information.

terminal — network device

step 301: determining by the terminal channel information corresponding to each CSI-RS resource based on at least one CSI-RS resource

step 302: sending by the terminal CSI to a network device, according to the channel information determined corresponding to each CSI-RS resource and codebook parameter information, in which the CSI includes indication information corresponding to a plurality of CSI-RS resources and indication information corresponding to each CSI-RS resource, or the CSI includes indication information corresponding to a plurality of port groups in one CSI-RS resource and indication information corresponding to each port group, the port group includes a plurality of CSI-RS ports corresponding to the CSI-RS resource; and the CSI is configured to determine precoding of the terminal based on a codebook structure corresponding to the codebook parameter information

step 303: receiving by the network device CSI from the terminal, in which the CSI includes indication information corresponding to a plurality of CSI-RS resources and indication information corresponding to each CSI-RS resource, or the CSI includes indication information corresponding to a plurality of port groups in one CSI-RS resource and indication information corresponding to each port group, the port group includes a plurality of CSI-RS ports corresponding to the CSI-RS resource, and the CSI is determined by the terminal based on channel information corresponding to each CSI-RS resource in at least one CSI-RS resource and codebook parameter information

step 304: determining by the network device precoding of the terminal, according to the CSI and a codebook structure corresponding to the codebook parameter information

FIG. 3

**Description**

**TECHNICAL FIELD**

The disclosure relates to the field of mobile communication, in particular to a method and an apparatus for determining precoding based on a codebook, a device, and a storage medium.

**BACKGROUND**

In a mobile communication system, a network device and a terminal may communicate with each other. The terminal may feed channel status information (CSI) back to the network device, and the network device determines precoding of the terminal according to the received CSI and a corresponding codebook structure. However, when a plurality of network devices such as a plurality of transmission reception points (TRPs) jointly serve one terminal, it is necessary to determine precoding used by the plurality of TRPs to transmit data to the terminal. It becomes an urgent problem that needs to be solved how the network device determines precoding for collaboration of the plurality of TRPs based on a codebook.

**SUMMARY**

The disclosure provides a method and an apparatus for determining precoding based on a codebook, a device, and a storage medium. The disclosure jointly utilizes a plurality of pieces of transmission reception point (TRP) channel information and proposes a method for reporting channel status information (CSI), which not only reduces a feedback overhead, but also improves the determined precoding accuracy of the terminal. The technical solution is as follows:

According to an aspect of the disclosure, a method for determining precoding based on a codebook is provided, performed by a terminal. The method includes: determining, based on at least one channel status information reference signal (CSI-RS) resource, channel information corresponding to each CSI-RS resource; and sending, according to the channel information determined corresponding to each CSI-RS resource and codebook parameter information, CSI to a network device, in which the CSI includes indication information corresponding to a plurality of CSI-RS resources and indication information corresponding to each CSI-RS resource, or the CSI includes indication information corresponding to a plurality of port groups in one CSI-RS resource and indication information corresponding to each port group, the port group includes a plurality of CSI-RS ports corresponding to the CSI-RS resource; and the CSI is configured to determine precoding of the terminal based on a codebook structure corresponding to the codebook parameter information.

According to an aspect of the disclosure, a method for determining precoding based on a codebook is provided, performed by a network device. The method includes: receiving CSI from a terminal, in which the CSI includes indication information corresponding to a plurality of CSI-RS resources and indication information corresponding to each CSI-RS resource, or the CSI includes indication information corresponding to a plurality of port groups in one CSI-RS resource and indication information corresponding to each port group, the port group includes a plurality of CSI-RS ports corresponding to the CSI-RS resource, and the CSI is determined by a terminal based on channel information corresponding to each CSI-RS resource in at least one CSI-RS resource and codebook parameter information; determining, according to the CSI and a codebook structure corresponding to the codebook parameter information, precoding of the terminal.

According to an aspect of the disclosure, an apparatus for determining precoding based on a codebook is provided. The apparatus includes a determination module and a sending module. The determination module is configured to determine, based on at least one CSI-RS resource, channel information corresponding to each CSI-RS resource. The sending module is configured to send, according to the channel information determined corresponding to each CSI-RS resource and codebook parameter information, CSI to a network device, in which the CSI includes indication information corresponding to a plurality of CSI-RS resources and indication information corresponding to each CSI-RS resource, or the CSI includes indication information corresponding to a plurality of port groups in one CSI-RS resource and indication information corresponding to each port group, the port group includes a plurality of CSI-RS ports corresponding to the CSI-RS resource; and the CSI is configured to determine precoding of the terminal based on a codebook structure corresponding to the codebook parameter information.

According to an aspect of the disclosure, an apparatus for determining precoding based on a codebook is provided. The apparatus includes a receiving module and a determination module. The receiving module is configured to receive CSI from a terminal, in which the CSI includes indication information corresponding to a plurality of CSI-RS resources and indication information corresponding to each CSI-RS resource, or the CSI includes indication information corresponding to a plurality of port groups in one CSI-RS resource and indication information corresponding to each port group, the port group includes a plurality of CSI-RS ports corresponding to the CSI-RS resource, and the CSI is determined by a terminal based on channel information corresponding to each CSI-RS resource in at least one CSI-RS resource and codebook parameter information. The determination module is configured to determine, according to the CSI and a codebook structure corresponding to the codebook parameter information, precoding of the terminal.

According to an aspect of the disclosure, a terminal is provided, including a processor, a transceiver connected to the processor and a memory for storing instructions executable by the processor. The processor is configured to load and execute executable instructions, to implement the method for determining precoding based on a codebook according to the above-described aspect.

According to an aspect of the disclosure, a network device is provided, including a processor, a transceiver connected to the processor and a memory for storing instructions executable by the processor. The processor is configured to load and execute executable instructions, to implement the method for determining precoding based on a codebook according to the above-described aspect.

According to an aspect of the disclosure, a computer-readable storage medium having executable program codes stored is provided. When the executable program codes are loaded and executed by a processor, the method for determining precoding based on a codebook is implemented according to the above-described aspect.

According to an aspect of the disclosure, a chip is provided, including a programmable logic circuit and/or program instructions. When the chip is running on a terminal, the method for determining precoding based on a codebook is implemented according to the above-described aspect.

According to an aspect of the disclosure, a computer program product is provided. When the computer program product is executed by a processor of a terminal, the method for determining precoding based on a codebook is implemented according to the above-described aspect.

In the solution of determining precoding based on a codebook according to the embodiments of the disclosure, after the terminal measures the CSI-RS corresponding to each CSI-RS resource, the indication information reported to the network device indicates the codebook parameter information corresponding to the plurality of CSI-RS resources and the codebook parameter information corresponding to each CSI-RS resource, or indicates the codebook parameter information corresponding to the plurality of port groups in one CSI-RS resource and the codebook parameter information corresponding to each port group. The plurality of CSI-RS resources or the plurality of port groups may be understood as corresponding to the plurality of TRPs. That is, the disclosure determines parameters shared by the plurality of TRPs and individual parameters for each TRP, so the network device may determine the precoding of the terminal according to the parameters reported by the terminal. The disclosure jointly utilizes channel information of the plurality of TRPs and proposes a method for reporting CSI, which not only reduces the feedback overhead, but also improves the determined precoding accuracy of the terminal.

## BRIEF DESCRIPTION OF THE DRAWINGS

In order to clearly illustrate technical solutions of embodiments of the disclosure, a brief description of drawings required for use in the description of the embodiments is given below. Obviously, the drawings in the following description are only some embodiments of the disclosure, and for those skilled in the art, other drawings may be obtained according to these drawings without inventive works.

FIG. 1 illustrates a block diagram of a communication system according to an exemplary embodiment of the disclosure.

FIG. 2 illustrates a block diagram of another communication system according to an exemplary embodiment of the disclosure.

FIG. 3 illustrates a flowchart of a method for determining precoding based on a codebook according to an exemplary embodiment of the disclosure.

FIG. 4 illustrates a flowchart of a method for determining precoding based on a codebook according to an exemplary embodiment of the disclosure.

FIG. 5 illustrates a flowchart of a method for determining precoding based on a codebook according to an exemplary embodiment of the disclosure.

FIG. 6 illustrates a flowchart of a method for determining precoding based on a codebook according to an exemplary embodiment of the disclosure.

FIG. 7 illustrates a flowchart of a method for determining precoding based on a codebook according to an exemplary embodiment of the disclosure.

FIG. 8 illustrates a block diagram of an apparatus for determining precoding based on a codebook according to an exemplary embodiment of the disclosure.

FIG. 9 illustrates a block diagram of another apparatus for determining precoding based on a codebook according to an exemplary embodiment of the disclosure.

FIG. 10 illustrates a block diagram of an apparatus for determining precoding based on a codebook according to an exemplary embodiment of the disclosure.

FIG. 11 illustrates a block diagram of another apparatus for determining precoding based on a codebook according to an exemplary embodiment of the disclosure.

FIG. 12 illustrates a structure diagram of a communication device according to an exemplary embodiment of the disclosure.

## DETAILED DESCRIPTION

In order to make the objectives, technical solutions and advantages of the disclosure more clear, the implementations of the disclosure may be further described in detail below with reference to the accompanying drawings.

Reference will now be made in detail to exemplary embodiments, examples of which are illustrated in the accompanying drawings. When the following description refers to the drawings, unless otherwise indicated, the same numbers in different drawings represent the same or similar elements. The implementations described in the following exemplary embodiments do not represent all implementations consistent with the disclosure. Rather, they are merely examples of apparatuses and methods consistent with some aspects of the disclosure as detailed in the appended claims.

The terms used in the embodiments of the disclosure are only for the purpose of describing specific embodiments, and are not intended to limit the embodiments of the disclosure. The singular forms of "a/an" and "the/said" used in the disclosure and appended claims are also intended to include plural forms, unless the context clearly indicates other meanings. It should also be understood that the term "and/or" as used herein refers to and includes any or all possible combinations of one or more associated listed items.

It should be understood that although the terms "first", "second", and "third" may be used in the embodiments of the disclosure to describe various information, the information should not be limited to these terms. These terms are only used to distinguish the same type of information from each other. For example, without departing from the scope of the disclosure, first information may also be referred to as second information, and similarly, second information may also be referred to as first information. Depending on the context, the term "if" as used herein can be interpreted as "when", "while" or "in response to determining".

It should be noted that the information (including but not limited to user device information, user personal information, etc.), data (including but not limited to data used for analysis, stored data, displayed data, etc.) and signals involved in the disclosure are all authorized by users or fully authorized by all parties, and the collection, use and processing of relevant data must comply with relevant laws, regulations and standards of relevant countries and regions.

The following is an explanation of application scenarios of the disclosure.

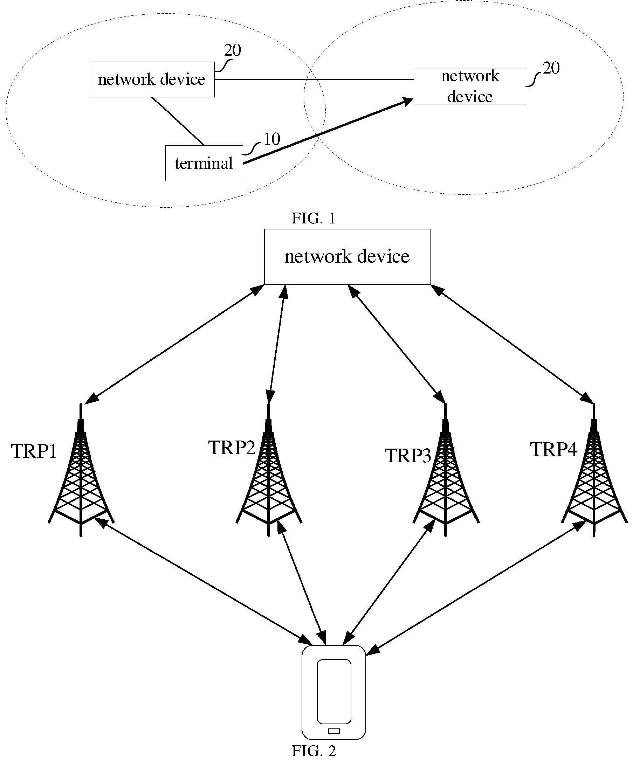

FIG. 1 illustrates a block diagram of a communication system according to an exemplary embodiment of the disclosure. The communication system may include a terminal 10 and a network device 20.

There are usually a plurality of terminals 10, and one or more terminals 10 may be distributed in a cell managed by each network device 20. The terminal 10 may include various handheld devices with wireless communication functions, vehicle-mounted devices, wearable devices, computing devices or other processing devices connected to a wireless modem, as well as various forms of user equipment (UE), mobile stations (MS), etc. For the convenience of description, the above-mentioned devices in the embodiments of the disclosure are collectively referred to as terminals.

The network device 20 is a device deployed in an access network to provide a wireless communication function for the terminal 10. For the convenience of description, the above-mentioned devices in the embodiments of the disclosure that provide the wireless communication function for the terminal 10 are collectively referred to as network devices. A connection may be established between the network device 20 and the terminal 10 via a radio interface, so that communication is performed via the connection, including the interactions of signaling and data. There may be a plurality of network devices 20, and two adjacent network devices 20 may communicate with each other via wired or wireless means. The terminal 10 may switch between different network devices 20, that is, establish connections with different network devices 20.

The network device 20 may include various forms of macro base stations, micro base stations, relay stations, access points, transmission reception points (TRPs), etc. In systems using different radio access technologies, the names of devices with network device functions may be different. For example, in 5G new radio (NR) systems, they are called gNodeB or gNB. The name "network device" may varied with the evolution of the communication technology.

In some embodiments, a network device may include one or more TRPs, or a network device may include one or more antenna panels.

If the network device includes a plurality of TRPs, the network device may communicate with the terminal through each TRP in the plurality of TRPs. That is, the network device establishes a transmission channel with each TRP in the plurality of TRPs, and then communicates with the terminal based on the established transmission channel.

If the network device includes a plurality of antenna panels, the network device may communicate with the terminal through each of the plurality of antenna panels. That is, the network device establishes a transmission channel with each of the plurality of antenna panels, and then communicates with the terminal based on the established transmission channel.

For example, as illustrated in FIG. 2, a network device is configured with four TRPs, namely TRP1, TRP2, TRP3 and TRP4. The network device establishes communication connections with the terminal through the four TRPs, and then the network device can communicate with the terminal through the four TRPs.

In some embodiments, the plurality of TRPs included in the network device can collaborate with each other using coherent joint transmission (CJT) technology to complete data transmission between the network device and the terminal. The CJT technology means that each data stream will be mapped to a TRP participating in the collaboration through a weighted vector.

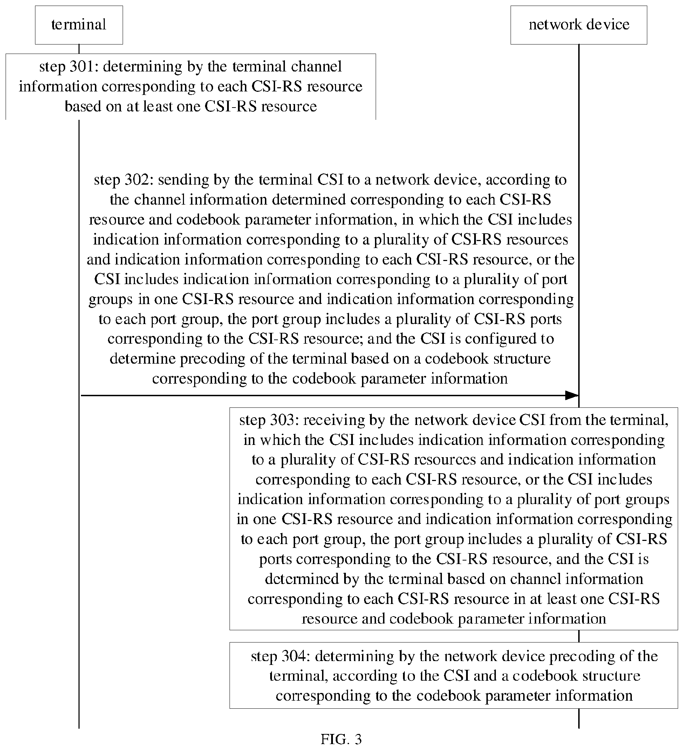

FIG. 3 illustrates a flowchart of a method for determining precoding based on a codebook according to an exemplary embodiment of the disclosure, which can be exemplarily applied to a terminal and a network device as illustrated in FIG. 1, and the method includes at least part of the following contents.

At step 301, the terminal determines channel information corresponding to each CSI-RS resource based on at least one CSI-RS resource.

The CSI-RS resources are used to transmit a CSI-RS. In addition, the CSI-RS resource is configured by the network device, and then the network device can send the CSI-RS to the terminal through the configured CSI-RS resources.

In embodiments of the disclosure, the terminal measures the CSI-RS based on at least one CSI-RS resource to obtain measured channel information corresponding to each CSI-RS resource.

In some embodiments, the CSI-RS resource is a channel measurement resource (CMR). That is, the CSI-RS resource in this embodiment of the disclosure is a CMR.

Optionally, different CMRs belong to the same CSI-RS resource set, or different CMRs belong to different CSI-RS resource sets.

In some embodiments, each CSI-RS resource in at least one CSI-RS resource corresponds to one TRP, and at least two TRPs are used for CJT.

In some other embodiments, each of a plurality of port groups in one CSI-RS resource corresponds to one TRP, and at least two TRPs are used for CJT.

One CSI-RS resource corresponds to a plurality of CSI-RS ports, the plurality of CSI-RS ports are grouped to obtain a plurality of port groups, each port group includes at least one CSI-RS port, and each port group corresponds to one TRP.

At step 302, the terminal sends CSI to a network device according to the channel information determined corresponding to each CSI-RS resource and codebook parameter information. The CSI includes indication information corresponding to a plurality of CSI-RS resources and indication information corresponding to each CSI-RS resource, or the CSI includes indication information corresponding to a plurality of port groups in one CSI-RS resource and indication information corresponding to each port group, the port group includes a plurality of CSI-RS ports corresponding to the CSI-RS resource. The CSI is configured to determine precoding of the terminal based on a codebook structure corresponding to the codebook parameter information.

The codebook parameter information is used by the terminal to report indication information so that the network device can determine the precoding of the terminal. In addition, the codebook parameter information corresponds to a codebook structure, which means that the precoding of the terminal can be determined according to the codebook structure corresponding to the codebook parameter information and the CSI. In addition, the CSI in embodiments of the disclosure is configured to determine the precoding of the terminal based on the codebook structure corresponding to the codebook parameter information, and the CSI includes indication information. That is, the indication information included in the CSI is configured to determine the precoding of the terminal based on the codebook structure corresponding to the codebook parameter information.

The CSI includes indication information corresponding to the plurality of CSI-RS resources and indication information corresponding to each CSI-RS resource. The indication information corresponding to the plurality of CSI-RS resources means that the indication information for determining the precoding of the terminal included in the CSI can be applied to each CSI-RS resource. That is, sending indication information can be applied to each CSI-RS resource. The indication information corresponding to each CSI-RS resource means that precoding parameters for the terminal included in the CSI are applied to one CSI-RS resource. That is, the indication information corresponding to each CSI-RS resource is applied to the corresponding CSI-RS resource, but not applied to other CSI-RS resources.

Alternatively, the CSI includes indication information corresponding to the plurality of port groups in one CSI-RS resource and indication information corresponding to each port group, and the port group includes a plurality of CSI-RS ports corresponding to the CSI-RS resource. The indication information corresponding to the plurality of port groups means that the indication information for determining the precoding of the terminal included in the CSI can be applied to each port group. That is, sending indication information can be applied to each port group. The indication information corresponding to each port group means that the indication information for determining the precoding of the terminal included in the CSI is applied to one port group. That is, the parameters corresponding to each port group are applied to the corresponding port group, but not applied to other port groups.

In embodiments of the disclosure, after the terminal determines the channel information corresponding to each CSI-RS resource in at least one CSI-RS resource, indication information that the terminal needs to report to the network device is determined according to the acquired channel information and codebook parameter information. The terminal then sends CSI including the indication information to the network device, and the CSI is configured to determine the precoding parameters of the terminal.

If the at least one CSI-RS resource includes a plurality of CSI-RS resources, the terminal determines the channel information corresponding to each CSI-RS resource. If the at least one CSI-RS resource includes one CSI-RS resource, and the CSI-RS resource corresponds to a plurality of CSI-RS ports, the terminal determines the channel information corresponding to each of the plurality of port groups.

In some embodiments, the network device configures the codebook parameter information for the terminal through a radio resource control (RRC) signaling, or the network device configures the codebook parameter information for the terminal through other signaling.

At step 303, the network device receives CSI from the terminal. The CSI includes indication information corresponding to a plurality of CSI-RS resources and indication information corresponding to each CSI-RS resource, or the CSI includes indication information corresponding to a plurality of port groups in one CSI-RS resource and indication information corresponding to each port group. The port group includes a plurality of CSI-RS ports corresponding to the CSI-RS resource, and the CSI is determined by the terminal based on channel information corresponding to each CSI-RS resource in at least one CSI-RS resource and codebook parameter information.

At step 304, the network device determines precoding of the terminal according to the CSI and the codebook structure corresponding to the codebook parameter information.

The codebook parameter information corresponds to a codebook structure. If the codebook structure is different, the network device determines the precoding of the terminal based on the codebook structure in different ways.

In an embodiment of the disclosure, after the network device receives the CSI, the network device can determine, according to the CSI, the indication information corresponding to the plurality of CSI-RS resources and the indication information corresponding to each CSI-RS resource included in the CSI, or the indication information corresponding to the plurality of port groups in one CSI-RS resource and the indication information corresponding to each port group indicated by the CSI, and then determine the precoding of the terminal according to the determined CSI and the codebook structure corresponding to the codebook parameter information.

It should be noted that the steps executed by the network device can form an independent embodiment, and the steps executed by the terminal can also form an independent embodiment, which is not limited in the disclosure.

In the solution according to embodiments of the disclosure, after the terminal measures the CSI-RS corresponding to each CSI-RS resource, the CSI reported to the network device includes the indication information corresponding to the plurality of CSI-RS resources and the indication information corresponding to each CSI-RS resource, or the indication information corresponding to the plurality of port groups in one CSI-RS resource and the indication information corresponding to each port group. The plurality of CSI-RS resources or the plurality of port groups may be understood as corresponding to the plurality of TRPs. That is, the disclosure determines parameters shared by the plurality of TRPs and individual parameters for each TRP, so the network device may determine the precoding of the terminal according to the parameters reported by the terminal. The disclosure jointly utilizes a plurality of TRP channel information and proposes a channel CSI reporting method, which not only reduces the feedback overhead, but also improves the accuracy of the determined terminal precoding.

Based on the embodiment illustrated in FIG. 3, the CSI sent by the terminal includes types of information, and the included types of information includes different situations.

In the first type of information, the CSI includes at least one of following information (1)-(3).

(1) N pieces of spatial domain (SD) basis vector indication information or N pieces of port selection indication information, where N is the same as a number of CSI-RS resources and N is a positive integer greater than 1.

The SD basis vector indication information is represented by a SD basis vector. The SD basis vector indication information indicates $L_i$ SD basis vectors selected by the terminal, where i belongs to {1,2...,N}. In some embodiments, the SD basis vector indication information is a SD beam basis vector, which may be referred to as a beam basis vector, or as a SD basis vector, or as a beam. The port selection indication information indicates $L_i$ CSI-RS ports selected by the terminal.

In addition, the CSI sent by the terminal to the network device includes N pieces of SD basis vector indication information or N pieces of port selection indication information, which actually correspond to the number of CSI-RS resources. It may also be understood as a one-to-one correspondence between pieces of SD basis vector indication information or pieces of port selection indication information and CSI-RS resources. In addition, each CSI-RS resource corresponds to one TRP, that is, the N CSI-RS resources correspond to N TRPs, and the terminal reports the piece of SD basis vector indication information or the piece of port selection indication information corresponding to each TRP.

For example, the SD basis vector indication information is used for explanation. The SD basis vector indicated by the SD basis vector indication information is $W_{1,i}$, where $W_{1,i} \in \mathbb{C}^{N_t \times 2L_i}$, or $W_{1,i} \in \mathbb{C}^{P \times 2L_i}$. $W_{1,i}$ represents a matrix consisting of $L_i$ SD basis vectors corresponding to an ith CSI-RS resource, $N$ represents the number of the CSI-RS resources, $N_t$ represents a number of transmitting antenna ports, $L_i$ represents a number of SD basis vectors or a number of CSI-RS ports corresponding to the ith CSI-RS resource, $i \in \{1, ..., N\}$, and $P$ is a number of CSI-RS ports. $\mathbb{C}^{X \times Y}$ represents a complex matrix with dimensions of X rows and Y columns, for example, X is $N_t$ and Y is $2L_i$, that is, $\mathbb{C}^{N_t \times 2L_i}$. The complex matrix in the following embodiments is similar to $\mathbb{C}^{N_t \times 2L_i}$ in this embodiment of the disclosure, which is not repeated herein.

Optionally, if the number of CSI-RS resources is 2, the number of SD basis vectors corresponding to each CSI-RS resource is 4, and $L_i$ is 4, then $W_{1,i} \in \mathbb{C}^{N_t \times 8}$.

It should be noted that this embodiment of the disclosure is described by taking N pieces of SD basis vector indication information or N pieces of port selection indication information corresponding to CSI-RS resources as an example. In another embodiments, the N pieces of SD basis vector indication information or the N pieces of port selection indication information may also correspond to the plurality of port groups in one CSI-RS resource.

The CSI includes N pieces of SD basis vector indication information or N pieces of port selection indication information, and N is the same as the number of port groups, and N is a positive integer greater than 1.

The CSI sent by the terminal to the network device includes N pieces of SD basis vector indication information or N pieces of port selection indication information, which actually correspond to the number of port groups. It may also be understood as a one-to-one correspondence between pieces of SD basis vector indication information or pieces of port selection indication information and port groups. In addition, each port group corresponds to one TRP, that is, the N port groups correspond to N TRPs, and the terminal reports the piece of SD basis vector indication information or the piece of port selection indication information corresponding to each TRP.

For example, the SD basis vector indication information is used for explanation. The SD basis vector indicated by the SD basis vector indication information is $W_{1,i}$, where $W_{1,i} \in \mathbb{C}^{N_t \times 2L_i}$, or $W_{1,i} \in \mathbb{C}^{P \times 2L_i}$. $W_{1,i}$ represents a matrix consisting of $L_i$ SD basis vectors corresponding to an ith port group, $N$ represents the number of at least two port groups, $N_t$ represents a number of transmitting antenna ports, $L_i$ represents a number of SD basis vectors or a number of CSI-RS ports corresponding to the ith port group, $i \in \{1, ..., N\}$, and $P$ is a number of CSI-RS ports.

Optionally, if the number of port groups is 2, the number of SD basis vectors corresponding to each port group is 4, and $L_i$ is 4, then $W_{1,i} \in \mathbb{C}^{N_t \times 8}$.

(2) combination coefficient indication information, and the combination coefficient indication information corresponds to the plurality of CSI-RS resources.

In an embodiment of the disclosure, the CSI sent by the terminal to the network device includes combination coefficient indication information, which is actually shared by the plurality of CSI-RS resources. It may also be understood as combination coefficient indication information corresponding to the plurality of CSI-RS resources. In addition, each CSI-RS resource corresponds to one TRP, that is, the N CSI-RS resources correspond to N TRPs, and the terminal reports combination coefficient indication information shared by the plurality of TRPs.

For example, a combination coefficient matrix indicated by the combination coefficient indication information is $\tilde{W}_2$, where $\widetilde{W}_2 \in \mathbb{C}^{\sum_{i=1}^{N} 2L_i \times M}$. $N$ represents the number of CSI-RS resources, $L_i$ represents a number of pieces of SD basis vector indication information or a number of CSI-RS ports corresponding to the ith CSI-RS resource, $i \in \{1, ..., N\}$, and $M$ represents a number of frequency domain (FD) basis vectors corresponding to the CSI-RS resource.

Optionally, if the number of CSI-RS resources is 2, the number of SD basis vectors corresponding to each CSI-RS resource is 4, $L_i$ is 4, and the number of FD basis vectors corresponding to at least two CSI-RS resources is 4, then M is 4, and $\widetilde{W}_2 \in \mathbb{C}^{12 \times 4}$.

It should be noted that this embodiment of the disclosure is described by taking combination coefficient indication information corresponding to one CSI-RS resource as an example. In another embodiment, combination coefficient indication information may also correspond to a plurality of port groups in one CSI-RS resource.

The CSI includes combination coefficient indication information, and the combination coefficient indication information corresponds to the plurality of port groups.

In an embodiment of the disclosure, the CSI sent by the terminal to the network device includes combination coefficient indication information, which is actually shared by the plurality of port groups. It may also be understood as combination coefficient indication information corresponding to the plurality of port groups. In addition, each port group corresponds to one TRP, that is, the N port groups correspond to N TRPs, and the terminal reports combination coefficient indication information shared by the plurality of TRPs.

For example, a combination coefficient matrix indicated by the combination coefficient indication information is $\tilde{W}_2$, where $\widetilde{W}_2 \in \mathbb{C}^{\sum_{i=1}^{N} 2L_i \times M}$. $N$ represents the number of port groups, $L_i$ represents a number of SD basis vectors or a number of CSI-RS ports corresponding to the $i^{th}$ port group, $i \in \{1, \ldots, N\}$, and $M$ represents a number of FD basis vectors corresponding to the port group.

Optionally, if the number of port groups is 2, and the number of SD basis vectors corresponding to each port group is 4, $L_i$ is 4, and the number of FD basis vectors corresponding to at least two port groups is 4, then $M$ is 4, and $\widetilde{W}_2 \in \mathbb{C}^{12 \times 4}$.

(3) FD basis vector indication information, and the FD basis vector indication information corresponds to the plurality of CSI-RS resources.

The FD basis vector indication information indicates M FD basis vectors selected by the terminal. The FD basis vector indication information is used to represent a change rule of the channel in the FD. Specifically, the FD basis vectors can be used to represent a change rule of a weighted coefficient of each SD basis vector in each FD unit. The change rule represented by the FD base is related to factors such as a multipath delay.

In an embodiment of the disclosure, the CSI sent by the terminal to the network device includes FD basis vector indication information, which is actually shared by the plurality of CSI-RS resources. It may also be understood as FD basis vector indication information corresponding to the plurality of CSI-RS resources. In addition, each CSI-RS resource corresponds to one TRP, that is, the N CSI-RS resources correspond to N TRPs, and the terminal reports FD basis vector indication information shared by the plurality of TRPs.

For example, a FD basis vector indicated by the FD basis vector indication information is $W_f$, representing a FD basis vector matrix, where $W_f \in \mathbb{C}^{N_3 \times M}$. $N_3$ represents a number of precoding matrix indication (PMI) subbands, and $M$ represents a number of FD basis vectors corresponding to the CSI-RS resources.

Optionally, if the number of FD basis vectors corresponding to at least two CSI-RS resources is 4, then $M$ is 4, and $W_f \in \mathbb{C}^{N_3 \times 4}$.

It should be noted that this embodiment of the disclosure is described by taking FD basis vector indication information corresponding to one CSI-RS resource as an example. In another embodiment, FD basis vector indication information may also correspond to a plurality of port groups in one CSI-RS resource.

The CSI includes FD basis vector indication information, and the FD basis vector indication information corresponds to the plurality of port groups.

In an embodiment of the disclosure, the CSI sent by the terminal to the network device includes FD basis vector indication information, which is actually shared by the plurality of port groups. It may also be understood as FD basis vector indication information corresponding to the plurality of port groups. In addition, each port group corresponds to one TRP, that is, the N port groups correspond to N TRPs, and the terminal reports FD basis vector indication information shared by the plurality of TRPs.

For example, a FD basis vector indicated by the FD basis vector indication information is $W_f$, representing a FD basis vector matrix, $W_f \in \mathbb{C}^{N_3 \times M}$, $N_3$ represents a number of PMI subbands, and $M$ represents a number of FD basis vectors corresponding to the port group.

Optionally, if the number of FD basis vectors corresponding to at least two port groups is 4, then $M$ is 4, and $W_f \in \mathbb{C}^{N_3 \times 4}$.

It should be noted that the SD basis vector indication information, the combination coefficient indication information and the FD basis vector indication information indicated by the CSI in embodiments of the disclosure correspond to the CSI-RS resources or the port groups at the same time.

In addition, it should be noted that this embodiment of the disclosure is described by taking specific information indicated by the CSI sent by the terminal to the network device as an example. In another embodiment, the network device needs to configure codebook parameter information for the terminal first, and then the terminal sends CSI to the network device according to the codebook parameter information.

The codebook parameter information configured by the network device for the terminal includes at least one of: a number of SD basis vectors corresponding to each CSI-RS resource, a number of FD basis vectors corresponding to the CSI-RS resource, a number of PMI subbands, or a number of transmitting antenna ports. Alternatively, the codebook parameter information configured by the network device for the terminal includes at least one of: a number of SD basis vectors corresponding to each port group, a number of FD basis vectors corresponding to the port group, a number of PMI subbands, or a number of transmitting antenna ports.

In some embodiments, after the network device configures codebook parameter information for the terminal, the terminal determines parameters indicated by the CSI according to the configured codebook parameter information, and then sends the CSI to the network device.

It should be noted that, in the first situation, the codebook structure is expressed by following formulas:

$$W = \begin{bmatrix} W_{1,1} & & \\ & \ddots & \\ & & W_{1,N} \end{bmatrix} \widetilde{W}_2 W_f^H, \quad W_{1,i} \in \mathbb{C}^{N_t \times 2L_i}, \text{ or } W_{1,i} \in \mathbb{C}^{P \times 2L_i}, \widetilde{W}_2 \in \mathbb{C}^{\sum_{i=1}^N 2L_i \times M}, W_f \in \mathbb{C}^{N_3 \times M},$$

where $W$ represents the codebook structure, $N$ represents the number of the CSI-RS resources, $N_t$ represents a number of transmitting antenna ports, $P$ is a number of CSI-RS ports, $L_i$ represents a number of SD basis vectors or a number of CSI-RS ports corresponding to an $i^{th}$ CSI-RS resource, i E *{1, ..., N}, M* represents a number of FD basis vectors corresponding to the $i^{th}$ CSI-RS resource, or a number of FD basis vectors corresponding to the $i^{th}$ port group, $N_3$ represents a number of PMI subbands, $W_{1,i}$ represents a matrix consisting of $L_i$ SD basis vectors or unit basis vectors for port selection corresponding to the $i^{th}$ CSI-RS resource, $\tilde{W}_2$ represents a matrix consisting of the combination coefficient indication information, $W_f$ represents a matrix consisting of M FD basis vectors, and $\mathbb{C}^{X \times Y}$ represents a complex matrix with dimensions of X rows and Y columns.

Alternatively, where the $W$ represents the codebook structure, $N$ represents the number of the port groups, $N_t$ represents a number of transmitting antenna ports, $P$ is a number of CSI-RS ports, $L_i$ represents a number of SD basis vectors or a number of CSI-RS ports corresponding to an $i^{th}$ port group, i E {1, ... , N}, M represents a number of FD basis vectors corresponding to the $i^{th}$ port group, $N_3$ represents a number of PMI subbands, $W_{1,i}$ represents a matrix consisting of $L_i$ SD basis vectors or unit basis vectors for port selection corresponding to the $i^{th}$ port group, $\tilde{W}_2$ represents a matrix consisting of the combination coefficient indication information, $W_f$ represents a matrix consisting of M FD basis vectors, and $\mathbb{C}^{X \times Y}$ represents a complex matrix with dimensions of X rows and Y columns.

In some embodiments, if $W_f$ is off, M=1. The terminal selects $L_1$=2, $L_2$=4 and $L_3$=8 ports respectively according to estimated valid information of each port, and calculates, based on the selected ports, a port combination coefficient as $W_2 \in \mathbb{C}^{28 \times 1}$ . The network device determines a calculation formula for the precoding of the terminal

$$W = \begin{bmatrix} W_{1,1} & & \\ & \ddots & \\ & & W_{1,3} \end{bmatrix} W_2$$

. The UE reports indication information of $W_{1,1}$, $W_{1,2}$ and $W_{1,3}$, respectively and each quantization coefficient information in $\tilde{W}_2$, so that the network device uses them to calculate the precoding of the terminal.

In the second type of information, the plurality of CSI-RS resources are grouped to obtain G CSI-RS resource groups, and the CSI indicates information corresponding to each of the G CSI-RS resource groups. G is the same as the number of CSI-RS resource groups in the plurality of CSI-RS resources, the CSI-RS resource group includes at least one CSI-RS resource, and G is a positive integer greater than 1. Alternatively, the plurality of port groups are grouped to obtain G first groups, and the CSI indicates information corresponding to each of the G first groups. G is the same as the number of first groups among the plurality of port groups, the first group includes at least one port group, and G is a positive integer greater than 1.

The CSI indicates at least one of following information:

(1) G pieces of SD basis vector indication information or G pieces of port selection indication information (1)-(3).

The SD basis vector indication information is represented by a SD basis vector. The SD basis vector indication information indicates $L_g$ SD basis vectors selected by the terminal, where $L_g$ represents a number of SD basis vectors corresponding to a $g^{th}$ CSI-RS resource group, g ∈ {1, ... , G}. $L_g$ represents a number and a value of SD basis vectors corresponding to each CSI-RS resource in the $g^{th}$ CSI-RS resource group, Alternatively, the port selection indication information indicates $L_g$ CSI-RS ports selected by the terminal, where $L_g$ represents a number of CSI-RS ports corresponding to a $g^{th}$ first group, g E {1, ..., G}. $L_g$ represents a number and a value of CSI-RS ports corresponding to each port group in the $g^{th}$ first group.

In addition, the CSI sent by the terminal to the network device indicates G pieces of SD basis vector indication information or G pieces of port selection indication information, which actually correspond to the number of G CSI-RS resource groups. It may also be understood as a one-to-one correspondence between pieces of SD basis vector indication information or pieces of port selection indication information and CSI-RS resource groups. In addition, each CSI-RS resource group includes at least one CSI-RS resource, and each CSI-RS resource corresponds to one TRP, that is, the terminal reports the piece of SD basis vector indication information or the piece of port selection indication information corresponding to the CSI-RS resource in each CSI-RS resource group.

For example, the SD basis vector is used for explanation. The SD basis vector is $W_{1,g}$, where $W_{1,g} \in \mathbb{C}^{N_g N_t \times 2L_g}$. $W_{1,g}$ represents a matrix consisting of one or more SD basis vectors corresponding to the g$^{th}$ CSI-RS resource group, $N_g$ represents a number of CSI-RS resources or a number of port groups in the g$^{th}$ group, $N_t$ represents a number of transmitting antenna ports, $L_g$ represents a number of SD basis vectors or a number of CSI-RS ports selected for the g$^{th}$ group, and $\mathbb{C}^{N_g N_t \times 2L_g}$ represents a complex matrix with dimensions of $N_g N_t \times 2L_g$.

Optionally, this embodiment of the disclosure includes 4 CSI-RS resources, where CSI-RS resource 1 and CSI-RS resource 2 are the 1$^{st}$ CSI-RS resource group, CSI-RS resource 3 and CSI-RS resource 4 are the 2$^{nd}$ CSI-RS resource group, and the CSI-RS resource 1, the CSI-RS resource 2, the CSI-RS resource 3 and the CSI-RS resource 4 correspond to TRP1, TRP2, TRP3 and TRP4 respectively, which may also be understood as TRP1 and TRP2 being the 1$^{st}$ CSI-RS resource group, TRP3 and TRP4 being the 2$^{nd}$ CSI-RS resource group. The number of SD basis vectors is $L_1 = L_2 = 4$, $L_3 = L_4 = 3$, then $W_{1,1} \in \mathbb{C}^{2N_t \times 16}$ and $W_{1,2} \in \mathbb{C}^{2N_t \times 12}$. $\mathbb{C}^{2N_t \times 16}$ represents a complex matrix with dimensions of $2N_t \times 16$, and $\mathbb{C}^{2N_t \times 12}$ represents a complex matrix with dimensions of $2N_t \times 12$.

It should be noted that this embodiment of the disclosure is described by taking grouping CSI-RS resources to obtain G CSI-RS resource groups as an example. In another embodiment, G first groups may be obtained by grouping a plurality of port groups in one CSI-RS resource.

In addition, the CSI sent by the terminal to the network device indicates G pieces of SD basis vector indication information or G pieces of port selection indication information, which actually correspond to the number of G first groups. It may also be understood as a one-to-one correspondence between pieces of SD basis vector indication information or pieces of port selection indication information and first groups. In addition, each first group includes at least one port group, and each port group corresponds to one TRP, that is, the terminal reports the piece of SD basis vector indication information or the piece of port selection indication information corresponding to the port group in each first group.

For example, the SD basis vector is used for explanation. The SD basis vector is $W_{1,g}$, where $W_{1,g} \in \mathbb{C}^{N_g N_t \times 2L_g}$. $W_{1,g}$ represents a matrix consisting of SD basis vectors corresponding to the g$^{th}$ first group, $N_g$ represents a number of CSI-RS resources or a number of port groups in the g$^{th}$ group, $N_t$ represents a number of transmitting antenna ports, $L_g$ represents a number of SD basis vectors or a number of CSI-RS ports selected for the g$^{th}$ group, and $\mathbb{C}^{N_g N_t \times 2L_g}$ represents a complex matrix with dimensions of $N_g N_t \times 2L_g$.

Optionally, this embodiment of the disclosure includes 4 port groups, where port group 1 and port group 2 are the 1$^{st}$ first group, port group 3 and port group 4 are the 2$^{nd}$ first group, and the port group 1, the port group 2, the port group 3 and the port group 4 correspond to TRP1, TRP2, TRP3 and TRP4 respectively, which may also be understood as TRP1 and TRP2 being the 1$^{st}$ first group, TRP3 and TRP4 being the 2$^{nd}$ first group. The number of SD basis vectors is $L_1 = L_2 = 4$, $L_3 = L_4 = 3$, then $W_{1,1} \in \mathbb{C}^{2N_t \times 16}$ and $W_{1,2} \in \mathbb{C}^{2N_t \times 12}$. $\mathbb{C}^{2N_t \times 16}$ represents a complex matrix with dimensions of $2N_t \times 16$, and $\mathbb{C}^{2N_t \times 12}$ represents a complex matrix with dimensions of $2N_t \times 12$.

(2) G pieces of combination coefficient indication information.

In an embodiment of the disclosure, the CSI sent by the terminal to the network device indicates G pieces of combination coefficient indication information, which actually correspond to the number of G CSI-RS resource groups. It may also be understood as a one-to-one correspondence between pieces of combination coefficient indication information and CSI-RS resource groups. In addition, each CSI-RS resource group includes at least one CSI-RS resource, and each CSI-RS resource corresponds to one TRP, that is, the terminal reports the piece of combination coefficient indication information corresponding to the CSI-RS resource in each CSI-RS resource group.

For example, the combination coefficient indication information is $\tilde{W}_{2,g}$, representing a combination coefficient matrix. In $\tilde{W}_{2,g} \mathbb{C}^{2L_g \times M_g}$, $N_g$ represents a number of CSI-RS resources in the g$^{th}$ group, $L_g$ represents a number of CSI-RS ports selected for the g$^{th}$ group, $M_g$ represents a number of FD basis vectors selected for the g$^{th}$ group, and $\mathbb{C}^{2L_g \times M_g}$ represents a complex matrix with dimensions of $2L_g \times M_g$.

Optionally, this embodiment of the disclosure includes 4 CSI-RS resources, where CSI-RS resource 1 and CSI-RS resource 2 are the 1$^{st}$ CSI-RS resource group, CSI-RS resource 3 and CSI-RS resource 4 are the 2$^{nd}$ CSI-RS resource group, and the CSI-RS resource 1, the CSI-RS resource 2, the CSI-RS resource 3 and the CSI-RS resource 4 correspond to TRP1, TRP2, TRP3 and TRP4 respectively, which may also be understood as TRP1 and TRP2 being the 1$^{st}$ CSI-RS resource group, TRP3 and TRP4 being the 2$^{nd}$ CSI-RS resource group. The number of SD basis vectors is $L_1 = L_2 = 4$, $L_3 = L_4 = 3$. The number of FD basis vectors corresponding to one of the two groups is $M_1 = 4$, the number of FD basis vectors corresponding to the other of the two groups is $M_2 = 7$, $\widetilde{W}_{2,1} \in \mathbb{C}^{16 \times 4}$, and $\widetilde{W}_{2,2} \in \mathbb{C}^{12 \times 3}$.

It should be noted that this embodiment of the disclosure is described by taking grouping CSI-RS resources to obtain G CSI-RS resource groups as an example. In another embodiment, G first groups may be obtained by grouping a plurality of port groups in one CSI-RS resource.

In an embodiment of the disclosure, the CSI sent by the terminal to the network device indicates G pieces of combination coefficient indication information, which actually correspond to the number of G first groups. It may also be understood as a one-to-one correspondence between pieces of combination coefficient indication information and first groups. In addition, each first group includes at least one port group, and each port group corresponds to one TRP, that is, the terminal reports combination coefficient indication information corresponding to the port group in each first group.

For example, the combination coefficient indication information is $\tilde{W}_{2,g}$, representing a combination coefficient matrix. In $\widetilde{W}_{2,g} \mathbb{C}^{2L_g \times M_g}$, $N_g$ represents a number of port groups in the $g^{th}$ group, $L_g$ represents a number of CSI-RS ports selected for the $g^{th}$ group, $M_g$ represents a number of FD basis vectors selected for the $g^{th}$ group, and $\mathbb{C}^{2L_g \times M_g}$ represents a complex matrix with dimensions of $2L_g \times M_g$.

Optionally, this embodiment of the disclosure includes 4 port groups, where port group 1 and port group 2 are the 1st first group, port group 3 and port group 4 are the 2nd first group, and the port group 1, the port group 2, the port group 3 and the port group 4 correspond to TRP1, TRP2, TRP3 and TRP4 respectively, which may also be understood as TRP1 and TRP2 being the 1st first group, TRP3 and TRP4 being the 2nd first group. The number of SD basis vectors is $L_1 = L_2 = 4$, $L_3 = L_4 = 3$. The number of FD basis vectors corresponding to one of the two groups is $M_1 = 4$, the number of FD basis vectors corresponding to the other of the two groups is $M_2 = 7$, $\widetilde{W}_{2,1} \in \mathbb{C}^{16 \times 4}$, and $\widetilde{W}_{2,2} \in \mathbb{C}^{12 \times 3}$.

(3) G pieces of FD basis vector indication information.

In an embodiment of the disclosure, the CSI sent by the terminal to the network device indicates G pieces of FD basis vectors, which actually correspond to the number of G CSI-RS resource groups. It may also be understood as a one-to-one correspondence between pieces of FD basis vector indication information and CSI-RS resource groups. In addition, each CSI-RS resource group includes at least one CSI-RS resource, and each CSI-RS resource corresponds to one TRP, that is, the terminal reports the FD basis vector corresponding to the CSI-RS resource in each CSI-RS resource group.

For example, the FD basis vector is $W_{f,g}^H$, representing a FD basis vector matrix. In $W_{f,g}^H \in \mathbb{C}^{N_3 \times M_g}$, $N$ represents a number of CSI-RS resources, $M_g$ represents a number of FD basis vectors selected for the $g^{th}$ group, $H$ is a conjugate transpose, and $\mathbb{C}^{N_3 \times M_g}$ represents a complex matrix with dimensions of $N_3 \times M_g$.

Optionally, this embodiment of the disclosure includes 4 CSI-RS resources, where CSI-RS resource 1 and CSI-RS resource 2 are the 1st CSI-RS resource group, CSI-RS resource 3 and CSI-RS resource 4 are the 2nd CSI-RS resource group, and the CSI-RS resource 1, the CSI-RS resource 2, the CSI-RS resource 3 and the CSI-RS resource 4 correspond to TRP1, TRP2, TRP3 and TRP4 respectively, which may also be understood as TRP1 and TRP2 being the 1st CSI-RS resource group, TRP3 and TRP4 being the 2nd CSI-RS resource group. The number of SD basis vectors is $L_1 = L_2 = 4$, $L_3 = L_4 = 3$. The number of FD basis vectors corresponding to one of the two groups is $M_1 = 4$, the number of FD basis vectors corresponding to the other of the two groups is $M_2 = 7$, $W_{f,1} \in \mathbb{C}^{N_3 \times 4}$, and $W_{f,2} \in \mathbb{C}^{N_3 \times 7}$.

It should be noted that this embodiment of the disclosure is described by taking grouping CSI-RS resources to obtain G CSI-RS resource groups as an example. In another embodiment, G first groups may be obtained by grouping a plurality of port groups in one CSI-RS resource.

In an embodiment of the disclosure, the CSI sent by the terminal to the network device indicates G FD basis vectors. The G pieces of FD basis vector indication information actually corresponds to the number of G first groups, which may also be understood as a one-to-one correspondence between pieces of FD basis vector indication information and first groups. In addition, each first group includes at least one port group, and each port group corresponds to one TRP, that is, the terminal reports the FD basis vector corresponding to the port group in each first group.

For example, the FD basis vector is $W_{f,g}^H$, representing a FD basis vector matrix. In $W_{f,g}^H \in \mathbb{C}^{N_3 \times M_g}$, $H$ is a conjugate transpose, $N_g$ represents a number of CSI-RS resources or a number of port groups in the $g^{th}$ group, H is the conjugate transpose, $N_3$ represents a number of PMI subbands, $M_g$ represents a number of FD basis vectors selected for the $g^{th}$ group, and $\mathbb{C}^{N_3 \times M_g}$ represents a complex matrix with dimensions of $N_3 \times M_g$.

Optionally, this embodiment of the disclosure includes 4 port groups, where port group 1 and port group 2 are the 1st first group, port group 3 and port group 4 are the 2nd first group, and the port group 1, the port group 2, the port group 3 and the port group 4 correspond to TRP1, TRP2, TRP3 and TRP4 respectively, which may also be understood as TRP1 and TRP2 being the 1st first group, TRP3 and TRP4 being the 2nd first group. The number of SD basis vectors is $L_1=L_2 = 4$, $L_3 = L_4 = 3$. The number of FD basis vectors corresponding to one of the two groups is $M_1 = 4$, the number of FD basis vectors corresponding to the other of the two groups is $M_2 = 7$, $W_{f,1} \in \mathbb{C}^{N_3 \times 4}$, and $W_{f,1} \in \mathbb{C}^{N_3 \times 7}$.

It should be noted that the SD basis vector indication information, the combination coefficient indication information and the FD basis vector indication information indicated by the CSI in this embodiment of the disclosure correspond to the CSI-RS resource group or the first group in the port group at the same time.

It should be noted that this embodiment of the disclosure is described by taking specific information indicated by the CSI sent by the terminal to the network device as an example. In another embodiment, the network device needs to configure codebook parameter information for the terminal first, and then the terminal sends CSI to the network device according to the codebook parameter information.

The codebook parameter information configured by the network device for the terminal includes at least one of: a number of SD basis vectors corresponding to each CSI-RS resource, a number of FD basis vectors corresponding to the CSI-RS resource, a number of PMI subbands, or a number of transmitting antenna ports. Alternatively, the codebook parameter information configured by the network device for the terminal includes at least one of: a number of SD basis vectors corresponding to each port group, a number of FD basis vectors corresponding to the port group, a number of PMI subbands, or a number of transmitting antenna ports.

In some embodiments, after the network device configures codebook parameter information for the terminal, the terminal determines parameters indicated by the CSI according to the configured codebook parameter information, and then sends the CSI to the network device.

It should be noted that, in the second situation, the codebook structure is expressed by following formulas:

$$ W = \begin{bmatrix} W_{1,1} \widetilde{W}_{2,1} W_{f,1}^H \\ \vdots \\ W_{1,g} \widetilde{W}_{2,g} W_{f,g}^H \end{bmatrix}, \ W_{1,g} \in \mathbb{C}^{N_g N_t \times 2L_g}, \ \widetilde{W}_{2,g} \mathbb{C}^{2L_g \times M_g}, \ W_{f,g}^H \in \mathbb{C}^{N_3 \times M_g} $$

where W represents the codebook structure, $W_{1,g}$ represents a matrix consisting of SD basis vectors or unit basis vectors for port selection corresponding to CSI-RS resources in the $g^{th}$ group, $N_g$ represents a number of CSI-RS resources in the $g^{th}$ group, $N_t$ represents a number of transmitting antenna ports, $W_{f,g}$ represents a matrix consisting of $M_g$ FD basis vectors corresponding to the CSI-RS resource in the $g^{th}$ group, $M_g$ represents a number of FD basis vectors selected for the $g^{th}$ group, $\breve{W}_{2,g}$ represents a matrix consisting of combination coefficients corresponding to CSI-RS resources in the $g^{th}$ group, $L_g$ represents a number of SD basis vectors or a number of CSI-RS ports selected for the $g^{th}$ group, G represents being the same as the number of CSI-RS resource groups in the plurality of CSI-RS resources, G is a positive integer greater than 1, **H** is a conjugate transpose, $N_3$ represents a number of PMI subbands, $\mathbb{C}^{X \times Y}$ represents a complex matrix with dimensions of X rows and Y columns.

Alternatively, where **W** represents the codebook structure, $W_{1,g}$ represents a matrix consisting of SD basis vectors or unit basis vectors for port selection corresponding to port groups in the $g^{th}$ group, $N_g$ represents a number of port groups in the $g^{th}$ group, $N_t$ represents a number of transmitting antenna ports, $W_{f,g}$ represents a matrix consisting of $M_g$ FD basis vectors corresponding to port groups in the $g^{th}$ group, $M_g$ represents a number of FD basis vectors selected for the $g^{th}$ group, $\breve{W}_{2,g}$ represents a matrix consisting of combination coefficients corresponding to port groups in the $g^{th}$ group, $L_g$ represents a number of SD basis vectors or a number of CSI-RS ports selected for the $g^{th}$ group, G represents being the same as the number of first groups among the port groups, G is a positive integer greater than 1, **H** is a conjugate transpose, $N_3$ represents a number of PMI subbands, and $\mathbb{C}^{X \times Y}$ represents a complex matrix with dimensions of X rows and Y columns.

In the third type of information, the CSI indicates at least one of following information (1)-(3).

(1) SD basis vector indication information or port selection indication information, and the SD basis vector indication information or the port selection indication information corresponds to a plurality of CSI-RS resources.

The SD basis vector indication information is represented by a SD basis vector. The SD basis vector indication information indicates $N*N_t$ SD basis vectors selected by the terminal. The port selection indication information indicates $N*N_t$ CSI-RS ports selected by the terminal, where N represents a number of CSI-RS resources or a number of port groups, and $N_t$ represents a number of transmitting antenna ports.

In addition, the CSI sent by the terminal to the network device indicates SD basis vector indication information or port selection indication information, which actually corresponds to the number of CSI-RS resources. It may also be understood as the SD basis vector indication information or the port selection indication information being applied to a plurality of CSI-RS resources. In addition, each CSI-RS resource corresponds to one TRP, that is, the SD basis vector indication information or the port selection indication information corresponds to N TRPs, and the terminal reports the SD basis vector indication information or the port selection indication information corresponding to the N TRPs.

For example, the SD basis vector is used for explanation. The SD basis vector is $W_1$, where $W_1 \in \mathbb{C}^{NN_t \times 2L}$ or $W_1 \in \mathbb{C}^{NP \times 2L}$. $W_1$ represents a matrix consisting of L SD basis vectors corresponding to the plurality of CSI-RS resources, N represents a number of CSI-RS resources, $N_t$ represents a number of transmitting antenna ports, L represents a number of SD basis vectors or a number of CSI-RS ports corresponding to the CSI-RS resources, P is a number of CSI-RS ports, $\mathbb{C}^{NN_t \times 2L}$ represents a complex matrix with dimensions of $NN_t \times 2L$, and $\mathbb{C}^{NP \times 2L}$ represents a complex matrix with dimensions of $NP \times 2L$.

It should be noted that this embodiment of the disclosure is described by taking SD basis vector indication information or port selection indication information corresponding to CSI-RS resources as an example. In another embodiment, SD basis vector indication information or port selection indication information may also correspond to a plurality of port groups in one CSI-RS resource.

The CSI indicates SD basis vector indication information or port selection indication information, and the SD basis vector indication information or the port selection indication information corresponds to the plurality of port groups.

In addition, the CSI sent by the terminal to the network device indicates the SD basis vector indication information or the port selection indication information, which actually corresponds to the number of port groups. It may also be understood as the SD basis vector indication information or the port selection indication information being applied to the plurality of port groups. In addition, each port group corresponds to one TRP, that is, the SD basis vector indication information or the port selection indication information corresponds to N TRPs, and the terminal reports a SD basis vector corresponding to the N TRPs.

For example, the SD basis vector is used for explanation. The SD basis vector is $W_1$, where $W_1 \in \mathbb{C}^{NN_t \times 2L}$ or $W_1 \in \mathbb{C}^{NP \times 2L}$. $W_1$ represents a matrix consisting of L SD basis vectors corresponding to the plurality of port groups, N represents a number of port groups, $N_t$ represents a number of transmitting antenna ports, L represents a number of SD basis vectors or a number of CSI-RS ports corresponding to the CSI-RS resources, P is a number of CSI-RS ports, $\mathbb{C}^{NN_t \times 2L}$ represents a complex matrix with dimensions of $NN_t \times 2L$, and $\mathbb{C}^{NP \times 2L}$ represents a complex matrix with dimensions of $NP \times 2L$.

(2) combination coefficient indication information, and the combination coefficient indication information corresponds to a plurality of CSI-RS resources.

In an embodiment of the disclosure, the CSI sent by the terminal to the network device indicates combination coefficient indication information, which is actually shared by the plurality of CSI-RS resources. It may also be understood as combination coefficient indication information corresponding to the plurality of CSI-RS resources. In addition, each CSI-RS resource corresponds to one TRP, that is, the N CSI-RS resources correspond to N TRPs, and the terminal reports combination coefficient indication information shared by the plurality of TRPs.

For example, the combination coefficient indication information is $\tilde{W}_2$, representing a combination coefficient matrix, where $\widetilde{W}_2 \in \mathbb{C}^{2L \times M}$. N represents a number of CSI-RS resources, L represents a number of SD basis vectors or a number of CSI-RS ports corresponding to the CSI-RS resources, M represents a number of FD basis vectors corresponding to the CSI-RS resources, and $\mathbb{C}^{2L \times M}$ represents a complex matrix with dimensions of $2L \times M$.

Optionally, if the number of CSI-RS resources is 2, the number of SD basis vectors corresponding to each CSI-RS resource is 4, $L_i$ is 4, and the number of FD basis vectors corresponding to at least two CSI-RS resources is 4, then M is 4, and $\widetilde{W}_2 \in \mathbb{C}^{12 \times 4}$.

It should be noted that this embodiment of the disclosure is described by taking combination coefficient indication information corresponding to one CSI-RS resource as an example. In another embodiment, combination coefficient indication information may also correspond to a plurality of port groups in one CSI-RS resource.

In an embodiment of the disclosure, the CSI sent by the terminal to the network device includes combination coefficient indication information, which is actually shared by the plurality of port groups. It may also be understood as combination coefficient indication information corresponding to the plurality of port groups. In addition, each port group corresponds to one TRP, that is, the N port groups correspond to N TRPs, and the terminal reports combination coefficient indication information shared by the plurality of TRPs.

For example, the combination coefficient indication information is $\tilde{W}_2$, represents a combination coefficient

matrix, where $\widetilde{W}_2 \in \mathbb{C}^{2L \times M}$. N represents a number of port groups, L represents a number of SD basis vectors or a number of CSI-RS ports corresponding to the CSI-RS resources, and M represents a number of FD basis vectors corresponding to the port groups.

Optionally, if the number of port groups is 2, and the number of SD basis vectors corresponding to each port group is 4, $L_i$ is 4, and the number of FD basis vectors corresponding to at least two port groups is 4, then $M$ is 4, and $\widetilde{W}_2 \in \mathbb{C}^{12 \times 4}$.

(3) FD basis vector indication information, and the FD basis vector indication information corresponds to the plurality of CSI-RS resources.

The FD basis vector indication information indicates M FD basis vectors selected by the terminal. In an embodiment of the disclosure, the CSI sent by the terminal to the network device indicates FD basis vector indication information, which is actually shared by the plurality of CSI-RS resources. It may also be understood as FD basis vector indication information corresponding to the plurality of CSI-RS resources. In addition, each CSI-RS resource corresponds to one TRP, that is, the N CSI-RS resources correspond to N TRPs, and the terminal reports FD basis vector indication information shared by the plurality of TRPs.

For example, the FD basis vector indication information is $W_f$, representing a FD basis vector matrix, where $W_f \in \mathbb{C}^{N_3 \times M}$. $N_3$ represents a number of PMI subbands, $M$ represents a number of FD basis vectors corresponding to the CSI-RS resources, and $\mathbb{C}^{N_3 \times M}$ represents a complex matrix with dimensions of $N_3 \times M$.

Optionally, if the number of FD basis vectors corresponding to at least two CSI-RS resources is 4, then $M$ is 4, and $W_f \in \mathbb{C}^{N_3 \times 4}$.

It should be noted that this embodiment of the disclosure is described by taking SD basis vector indication information corresponding to one CSI-RS resource as an example. In another embodiment, SD basis vector indication information may also correspond to a plurality of port groups in one CSI-RS resource.

In an embodiment of the disclosure, the CSI sent by the terminal to the network device includes FD basis vector indication information, which is actually shared by the plurality of port groups. It may also be understood as FD basis vector indication information corresponding to the plurality of port groups. In addition, each port group corresponds to one TRP, that is, the N port groups correspond to N TRPs, and the terminal reports FD basis vector indication information shared by the plurality of TRPs.

For example, the FD basis vector indication information is $W_f$, representing a FD basis vector matrix, where $W_f \in \mathbb{C}^{N_3 \times M}$. $N_3$ represents a number of PMI subbands, and $M$ represents a number of FD basis vectors corresponding to the port group, and $\mathbb{C}^{N_3 \times M}$ represents a complex matrix with dimensions of $N_3 \times M$.

Optionally, if the number of FD basis vectors corresponding to at least two port groups is 4, then M is 4, and $W_f \in \mathbb{C}^{N_3 \times 4}$.

It should be noted that this embodiment of the disclosure is described by taking specific information indicated by the CSI sent by the terminal to the network device as an example. In another embodiment, the network device needs to configure codebook parameter information for the terminal first, and then the terminal sends CSI to the network device according to the codebook parameter information.

The codebook parameter information configured by the network device for the terminal includes at least one of: a number of SD basis vectors corresponding to each CSI-RS resource, a number of FD basis vectors corresponding to the CSI-RS resource, a number of PMI subbands, or a number of transmitting antenna ports. Alternatively, the codebook parameter information configured by the network device for the terminal includes at least one of: a number of SD basis vectors corresponding to each port group, a number of FD basis vectors corresponding to the port group, a number of PMI subbands, or a number of transmitting antenna ports.

In some embodiments, after the network device configures codebook parameter information for the terminal, the terminal determines parameters indicated by the CSI according to the configured codebook parameter information, and then sends the CSI to the network device.

It should be noted that, in the third situation, the codebook structure is expressed by following formulas:

$$W = W_1 \widetilde{W}_2 W_f^H, \quad W_1 \in \mathbb{C}^{NN_t \times 2L}, \text{ or } W_1 \in \mathbb{C}^{NP \times 2L}, \quad \widetilde{W}_2 \in \mathbb{C}^{2L \times M}, \quad W_f \in \mathbb{C}^{N_3 \times M}$$

where W represents the codebook structure, N represents the number of the CSI-RS resources, $N_t$ represents a number of transmitting antenna ports, L represents a number of SD basis vectors or CSI-RS ports corresponding to the CSI-RS resources, M represents a number of FD basis vectors corresponding to the CSI-RS resources, $N_3$ represents a number of PMI subbands, $W_1$ represents a matrix consisting of L SD basis vectors or unit basis vectors for port selection for the CSI-RS resources, $\bar{W}_2$ represents a matrix consisting of the combination coefficient indication information, $W_f$ represents a matrix consisting of M frequency domain basis vectors, H is a conjugate transpose, and $\mathbb{C}^{X \times Y}$ represents a complex matrix with dimensions of X rows and Y columns.

It should be noted that all the above three ways are described by taking the combination coefficient indication information as an example. In another embodiment, the combination coefficient indication information includes a plurality of types of information.

Optionally, the combination coefficient indication information includes non-zero coefficient information and non-zero coefficient position information, the non-zero coefficient information indicates a non-zero coefficient in the combination coefficient indication information, and the non-zero coefficient position information indicates a position of the non-zero coefficient in the combination coefficient indication information.

It should be noted that this embodiment of the disclosure is described by taking specific information indicated by the CSI sent by the terminal to the network device as an example. In another embodiment, the network device needs to configure codebook parameter information for the terminal first, and then the terminal sends CSI to the network device according to the codebook parameter information.

The codebook parameter information configured by the network device for the terminal includes at least one of: a number of SD basis vectors corresponding to each CSI-RS resource, a number of FD basis vectors corresponding to the CSI-RS resource, a number of PMI subbands, or a number of transmitting antenna ports. Alternatively, the codebook parameter information configured by the network device for the terminal includes at least one of: a number of SD basis vectors corresponding to each port group, a number of FD basis vectors corresponding to the port group, a number of PMI subbands, or a number of transmitting antenna ports.

In some embodiments, after the network device configures codebook parameter information for the terminal, the terminal determines parameters indicated by the CSI according to the configured codebook parameter information, and then sends the CSI to the network device.

In the solution according to this embodiment of the disclosure, the parameters indicated by the CSI include a plurality of situations, which expands the ways of the indicated parameters and thus improves the diversity of the indicated parameters.

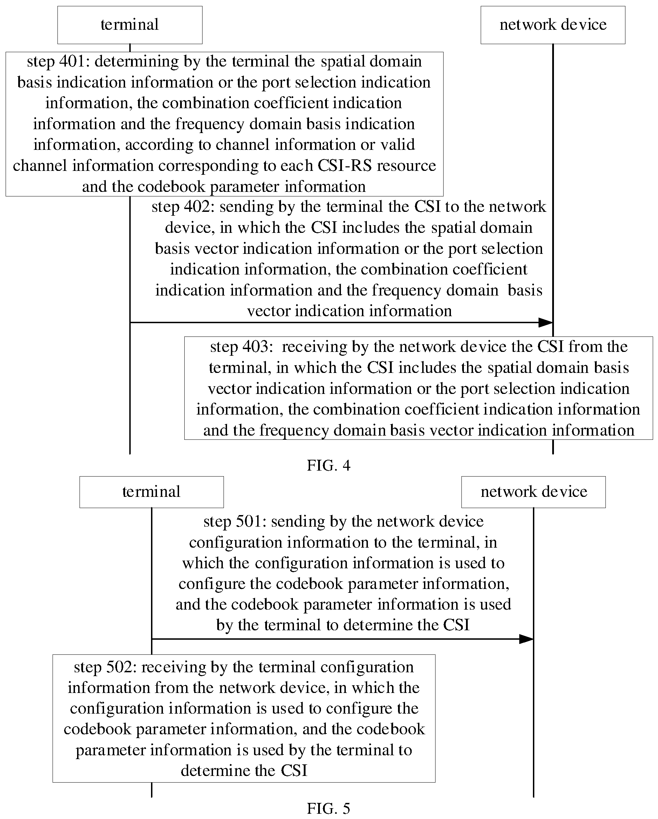

Based on the embodiment illustrated in FIG. 3, a specific process of the terminal sending the CSI is illustrated in FIG. 4. Referring to FIG. 4, the method includes the following steps at 401-403.

At 401, the terminal determines, according to channel information or valid channel information corresponding to each CSI-RS resource and the codebook parameter information, the SD basis vector indication information or the port selection indication information, the combination coefficient indication information and the FD basis vector indication information.

The valid channel information refers to channel information that can be used, which may also be understood as channel information including valid parameters.

In an embodiment of the disclosure, after measuring each CSI-RS resource, the terminal may determine the channel information or valid channel information corresponding to each CSI-RS resource, and the terminal can also determine the SD basis vector indication information or the port selection indication information according to the determined channel information or valid channel information and the codebook parameter information, and after the terminal determines the SD basis vector indication information or the port selection indication information, the terminal can also determine the combination coefficient indication information and the FD basis vector indication information.

At 402, the terminal sends the CSI to the network device, in which the CSI includes the SD basis vector indication information or the port selection indication information, the combination coefficient indication information and the FD basis vector indication information.

At 403, the network device receives the CSI from the terminal, in which the CSI includes the SD basis vector indication information or the port selection indication information, the combination coefficient indication information and the FD basis vector indication information.

In this embodiment of the disclosure, after the terminal determines the SD basis vector indication information or the port selection indication information, the combination coefficient indication information and the FD basis vector indication information, the CSI can be further determined. The CSI can indicate the above three types of information determined by the terminal, and the CSI is then sent to the network device. The network device can then receive the CSI from the terminal.

In the solution according to this embodiment of the disclosure, after measuring the CSI-RS corresponding to each CSI-RS resource, the indication information reported to the network device includes information shared by the plurality of TRPs and individual parameters for each TRP, so the network device may determine the precoding of the terminal according to the parameters reported by the terminal, which not only reduces the feedback overhead by reporting the shared parameters, but also improves the precoding gain of the terminal by integrating the parameters of the plurality of TRPs.

Based on the embodiment illustrated in FIG. 3, the network device configures codebook parameters for the terminal via configuration information. Referring to FIG. 5, the method includes the following steps at 501-502.

At 501, the network device sends configuration information to the terminal, in which the configuration information is used to configure codebook parameter information, and the codebook parameter information is used by the terminal to determine the CSI.

At 502, the terminal receives configuration information from the network device, in which the configuration information is used to configure codebook parameter information, and the codebook parameter information is used by the terminal to determine the CSI.

In an embodiment of the disclosure, the network device sends configuration information to the terminal, and configures the codebook parameter information for the terminal via the configuration information. Subsequently, the terminal can send the CSI to the network device based on the codebook parameter information.

In some embodiments, before the network device sends the configuration information to the terminal, the network device also determines the codebook structure first, so as to configure, based on the codebook structure, the terminal with codebook parameter information matching the codebook structure.

Optionally, the terminal determines the codebook structure, and then indicates the determined codebook structure to the network device via indication information.

The terminal sends first indication information to the network device, in which the first indication information indicates an adopted codebook structure.

Optionally, the network device determines the codebook structure, and then indicates the codebook structure to the terminal via indication information.

The terminal receives second indication information from the network device, in which the second indication information indicates an adopted codebook structure.

It should be noted that this embodiment of the disclosure is described by taking the indication information indicating the codebook structure as an example. In another embodiment, the codebook structure between the network device and the terminal is agreed upon by a protocol, and the network device directly configures the terminal with codebook parameter information corresponding to the agreed codebook structure.

In the solution according to this embodiment of the disclosure, after the network device determines the codebook structure, the network device configures codebook parameter information for the terminal according to the codebook structure, which improves the accuracy of the codebook parameter information configured by the network device.

It should be noted that the above-mentioned embodiments can be split into new embodiments, or combined with other embodiments to form new embodiments. The combination of the embodiments is not limited in the disclosure.

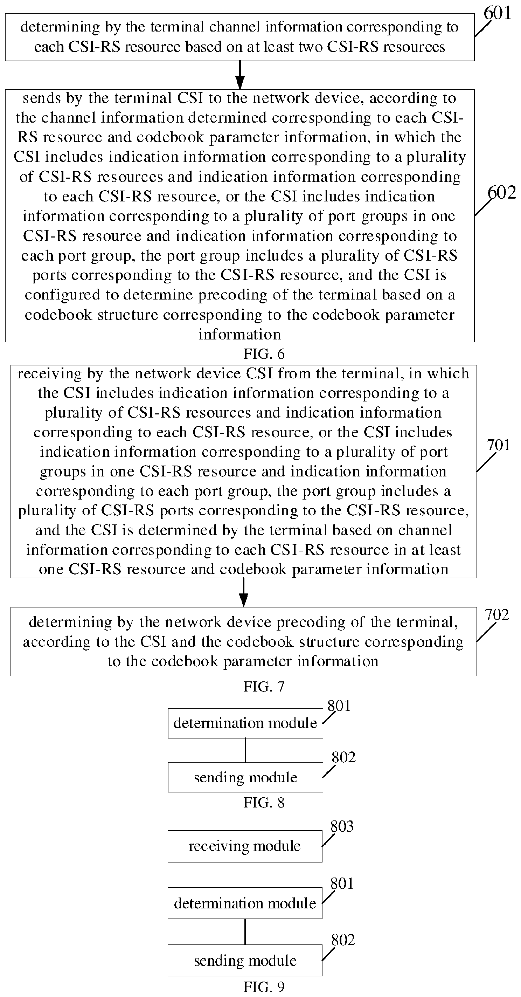

FIG. 6 illustrates a flowchart of a method for determining precoding based on a codebook according to an exemplary embodiment of the disclosure, which can be exemplarily applied to a terminal as illustrated in FIG. 1. The method includes at least part of following contents.

At 601, the terminal determines channel information corresponding to each CSI-RS resource based on at least two CSI-RS resources.

The CSI-RS resources are used to transmit the CSI-RS. In addition, the CSI-RS resources are configured by the network device, and the network device can send the CSI-RS to the terminal via the configured CSI-RS resources.

In this embodiment of the disclosure, the terminal measures the CSI-RS based on the at least one CSI-RS resource to obtain channel information corresponding to each CSI-RS resource measured.

In some embodiments, the CSI-RS resource is a channel measurement resource (CMR). That is, the CSI-RS resource in this embodiment of the disclosure is a CMR resource.

Optionally, different CMRs belong to the same CSI-RS resource set or different CSI-RS resource sets.

In some embodiments, each of the at least one CSI-RS resource corresponds to one TRP, and at least two TRPs are configured for coherent joint transmission (CJT).

In some other embodiments, each of the plurality of port groups in the one CSI-RS resource corresponds to one TRP, and at least two TRPs are configured for CJT.

One CSI-RS resource corresponds to a plurality of CSI-RS ports, a plurality of port groups are obtained by grouping the plurality of CSI-RS ports, each port group includes at least one CSI-RS port, and each port group corresponds to one TRP.

At 602, the terminal sends, according to the channel information determined corresponding to each CSI-RS resource and codebook parameter information, CSI to the network device. The CSI includes indication information corresponding to a plurality of CSI-RS resources and indication information corresponding to each CSI-RS resource, or the CSI includes indication information corresponding to a plurality of port groups in one CSI-RS resource and indication information corresponding to each port group, the port group includes a plurality of CSI-RS ports corresponding to the CSI-RS resource, and the CSI is configured to determine precoding of the terminal based on a codebook structure corresponding to the codebook parameter information.

The codebook parameter information is used by the terminal to report indication information, so that the network device can determine the precoding of the terminal. In addition, the codebook parameter information corresponds to the codebook structure. That is to say, the precoding of the terminal can be determined according to the codebook structure corresponding to the codebook parameter information and the CSI. In addition, the CSI in this embodiment of the disclosure is used to determine the precoding of the terminal based on the codebook structure corresponding to the codebook parameter information, and the CSI includes indication information. That is, the indication information included in the CSI is used to determine the precoding of the terminal based on the codebook structure corresponding to the codebook parameter information.

The CSI includes the indication information corresponding to the plurality of CSI-RS resources and the indication information corresponding to each CSI-RS resource. The indication information corresponding to the plurality of CSI-RS resources means that the indication information for determining the precoding of the terminal included in the CSI can be applied to each CSI-RS resource. That is, sending indication information can be applied to each CSI-RS resource. The indication information corresponding to each CSI-RS resource means that the parameters for determining the precoding of the terminal included in the CSI are applied to one CSI-RS resource. That is, the indication information corresponding to each CSI-RS resource is applied to the corresponding CSI-RS resource, but is not applied to other CSI-RS resources.

Alternatively, the CSI includes indication information corresponding to the plurality of port groups in one CSI-RS resource and indication information corresponding to each port group, and the port group includes a plurality of CSI-RS ports corresponding to the CSI-RS resource. The indication information corresponding to the plurality of port groups means that the indication information for determining the precoding of the terminal included in the CSI can be applied to each port group. That is, sending indication information can be applied to each port group. The indication information corresponding to each port group means that the indication information for determining the precoding of the terminal included in the CSI is applied to one port group. That is, the parameters corresponding to each port group are applied to the corresponding port group, but are not applied to other port groups.

In an embodiment of the disclosure, after the terminal determines the channel information corresponding to each CSI-RS resource in the at least one CSI-RS resource, the terminal determines the indication information that needs to be reported to the network device based on the acquired channel information and codebook parameter information. The terminal then sends the CSI including the indication information to the network device, and the CSI is used to determine precoding parameters of the terminal.

If the at least one CSI-RS resource includes a plurality of CSI-RS resources, the terminal determines the channel information corresponding to each CSI-RS resource. If the at least one CSI-RS resource includes one CSI-RS resource, and the one CSI-RS resource corresponds to a plurality of CSI-RS ports, the terminal determines the channel information corresponding to each port group in the plurality of port groups.

In some embodiments, the network device configures the codebook parameter information for the terminal via a radio resource control (RRC) signaling, or other signaling.

In some embodiments, the terminal determines, according to the channel information corresponding to each CSI-RS resource and the codebook parameter information, the SD basis vector indication information, the combination coefficient indication information and the FD basis vector indication information, and the terminal sends to the network device the CSI including the SD basis vector indication information or the port selection indication information, the combination coefficient indication information and the FD basis vector indication information.

In an embodiment of the disclosure, after the terminal measures each CSI-RS resource, the terminal can determine the channel information corresponding to each CSI-RS resource, and the terminal can also determine the SD basis vector indication information based on the determined channel information and the codebook parameter information. After the terminal determines the SD basis vector indication information, the terminal can further determine the combination coefficient indication information and the FD basis vector indication information according to the SD basis vector indication information and the codebook parameter information. After the terminal determines the SD basis vector indication information, the combination coefficient indication information and the FD basis vector indication information, the terminal can further determine the CSI. The CSI can indicate the above three types of information determined by the terminal, and the CSI is sent to the network device.

Based on the embodiment illustrated in FIG. 6, the CSI sent by the terminal indicates types of information, and the included types of information includes different situations.

In the first type of information, the CSI includes at least one of following information (1)-(3).

(1) N pieces of SD basis vector indication information or N pieces of port selection indication information, where N is the same as a number of CSI-RS resources and N is a positive integer greater than 1.

The SD basis vector indication information is represented by a SD basis vector. The SD basis vector indication information indicates $L_i$ SD basis vectors selected by the terminal, where i belongs to {1,2...,N}. In some embodiments, the SD basis vector indication information is a SD beam basis vector, which may be referred to as a beam basis vector, or as a SD basis vector, or as a beam. The port selection indication information indicates $L_i$ CSI-RS ports selected by the terminal.

In addition, the CSI sent by the terminal to the network device includes N pieces of SD basis vector indication information or N pieces of port selection indication information, which actually correspond to the number of CSI-RS resources. It may also be understood as a one-to-one correspondence between pieces of SD basis vector indication information or pieces of port selection indication information and CSI-RS resources. In addition, each CSI-RS resource corresponds to one TRP, that is, the N CSI-RS resources correspond to N TRPs, and the terminal reports the piece of SD basis vector indication information or the piece of port selection indication information corresponding to each TRP.

For example, the SD basis vector indication information is used for explanation. The SD basis vector indicated by the SD basis vector indication information is $W_{1,i}$, where $W_{1,i} \in \mathbb{C}^{N_t \times 2L_i}$, or $W_{1,i} \in \mathbb{C}^{P \times 2L_i}$. $W_{1,i}$ represents a matrix consisting of $L_i$ SD basis vectors corresponding to an $i^{th}$ CSI-RS resource, N represents the number of the CSI-RS resources, $N_t$ represents a number of transmitting antenna ports, $L_i$ represents a number of SD basis vectors or a number of CSI-RS ports corresponding to the $i^{th}$ CSI-RS resource, $i \in \{1, ..., N\}$, and P is a number of CSI-RS ports. $\mathbb{C}^{X \times Y}$ represents a complex matrix with dimensions of X rows and Y columns, for example, X is $N_t$ and Y is $2L_i$, that is, $\mathbb{C}^{N_t \times 2L_i}$. The complex matrix in the following embodiments is similar to $\mathbb{C}^{N_t \times 2L_i}$ in this embodiment of the disclosure, which is not repeated herein.

Optionally, if the number of CSI-RS resources is 2, the number of SD basis vectors corresponding to each CSI-RS resource is 4, and $L_i$ is 4, then $W_{1,i} \in \mathbb{C}^{N_t \times 8}$.

It should be noted that this embodiment of the disclosure is described by taking N pieces of SD basis vector indication information or N pieces of port selection indication information corresponding to CSI-RS resources as an example. In another embodiment, the N pieces of SD basis vector indication information or the N pieces of port selection indication information may also correspond to the plurality of port groups in one CSI-RS resource.

The CSI includes N pieces of SD basis vector indication information or N pieces of port selection indication information, and N is the same as the number of port groups, and N is a positive integer greater than 1.

The CSI sent by the terminal to the network device includes N pieces of SD basis vector indication information or N pieces of port selection indication information, which actually correspond to the number of port groups. It may also be understood as a one-to-one correspondence between pieces of SD basis vector indication information or pieces of port selection indication information and port groups. In addition, each port group corresponds to one TRP, that is, the N port groups correspond to N TRPs, and the terminal reports the piece of SD basis vector indication information or the piece of port selection indication information corresponding to each TRP.

For example, the SD basis vector indication information is used for explanation. The SD basis vector indicated by the SD basis vector indication information is $W_{1,i}$, where $W_{1,i} \in \mathbb{C}^{N_t \times 2L_i}$, or $W_{1,i} \in \mathbb{C}^{P \times 2L_i}$. $W_{1,i}$ represents a matrix consisting of $L_i$ SD basis vectors corresponding to an $i^{th}$ port group, N represents the number of at least two port groups, $N_t$ represents a number of transmitting antenna ports, $L_i$ represents a number of SD basis vectors or a number of CSI-RS ports corresponding to the $i^{th}$ port group, $i \in \{1, ..., N\}$, and P is a number of CSI-RS ports.

Optionally, if the number of port groups is 2, the number of SD basis vectors corresponding to each port group is 4, and $L_i$ is 4, then $W_{1,i} \in \mathbb{C}^{N_t \times 8}$.

(2) combination coefficient indication information, and the combination coefficient indication information corresponds to the plurality of CSI-RS resources.

In an embodiment of the disclosure, the CSI sent by the terminal to the network device includes combination coefficient indication information, which is actually shared by the plurality of CSI-RS resources, and may also be understood as combination coefficient indication information corresponding to the plurality of CSI-RS resources. In addition, each CSI-RS resource corresponds to one TRP, that is, the N CSI-RS resources correspond to N TRPs, and the terminal reports combination coefficient indication information shared by the plurality of TRPs.

For example, a combination coefficient matrix indicated by the combination coefficient indication information is $\tilde{W}_2$, where $\widetilde{W}_2 \in \mathbb{C}^{\sum_{i=1}^{N} 2L_i \times M}$. N represents the number of CSI-RS resources, $L_i$ represents a number of pieces of SD basis vector indication information or a number of CSI-RS ports corresponding to the $i^{th}$ CSI-RS resource, $i \in \{1, ..., N\}$, and M represents a number of frequency domain (FD) basis vectors corresponding to the CSI-RS resource.

Optionally, if the number of CSI-RS resources is 2, the number of SD basis vectors corresponding to each CSI-RS resource is 4, $L_i$ is 4, and the number of FD basis vectors corresponding to at least two CSI-RS resources is 4, then M is 4, and $\widetilde{W}_2 \in \mathbb{C}^{12 \times 4}$.

It should be noted that this embodiment of the disclosure is described by taking combination coefficient indication information corresponding to one CSI-RS resource as an example. In another embodiment, combination coefficient indication information may also correspond to a plurality of port groups in one CSI-RS resource.

The CSI includes combination coefficient indication information, and the combination coefficient indication information corresponds to the plurality of port groups.

In an embodiment of the disclosure, the CSI sent by the terminal to the network device includes combination coefficient indication information, which is actually shared by the plurality of port groups, and may also be understood as combination coefficient indication information corresponding to the plurality of port groups. In addition, each port group corresponds to one TRP, that is, the N port groups correspond to N TRPs, and the terminal reports combination coefficient indication information shared by the plurality of TRPs.

For example, a combination coefficient matrix indicated by the combination coefficient indication information is $\tilde{W}_2$, where $\widetilde{W}_2 \in \mathbb{C}^{\sum_{i=1}^{N} 2L_i \times M}$. N represents the number of port groups, $L_i$ represents a number of SD basis vectors or a number of CSI-RS ports corresponding to the $i^{th}$ port group, i $\in \{1, ..., N\}$, and $M$ represents a number of FD basis vectors corresponding to the port group.

Optionally, if the number of port groups is 2, and the number of SD basis vectors corresponding to each port group is 4, $L_i$ is 4, and the number of FD basis vectors corresponding to at least two port groups is 4, then $M$ is 4, and $\widetilde{W}_2 \in \mathbb{C}^{12 \times 4}$.

(3) FD basis vector indication information, and the FD basis vector indication information corresponds to the plurality of CSI-RS resources.

The FD basis vector indication information indicates M FD basis vectors selected by the terminal. The FD basis vector indication information is used to represent a change rule of the channel in the FD. The FD basis vectors can be specifically used to represent a change rule of a weighted coefficient of each SD basis vector in each FD unit. The changing rule represented by the FD base is related to factors such as a multipath delay.

In an embodiment of the disclosure, the CSI sent by the terminal to the network device includes FD basis vector indication information, which is actually shared by the plurality of CSI-RS resources, and may also be understood as FD basis vector indication information corresponding to the plurality of CSI-RS resources. In addition, each CSI-RS resource corresponds to one TRP, that is, the N CSI-RS resources correspond to N TRPs, and the terminal reports FD basis vector indication information shared by the plurality of TRPs.

For example, a FD basis vector indicated by the FD basis vector indication information is $W_f$, representing a FD basis vector matrix, $N_3$ represents a number of precoding matrix indication (PMI) subbands, and $M$ represents a number of FD basis vectors corresponding to the CSI-RS resources.

Optionally, if the number of FD basis vectors corresponding to at least two CSI-RS resources is 4, then $M$ is 4, and $W_f \in \mathbb{C}^{N_3 \times 4}$.

It should be noted that this embodiment of the disclosure is described by taking FD basis vector indication information corresponding to one CSI-RS resource as an example. In another embodiment, FD basis vector indication information may also correspond to a plurality of port groups in one CSI-RS resource.

The CSI includes FD basis vector indication information, and the FD basis vector indication information corresponds to the plurality of port groups.

In an embodiment of the disclosure, the CSI sent by the terminal to the network device includes FD basis vector indication information, which is actually shared by the plurality of port groups, and may also be understood as FD basis vector indication information corresponding to the plurality of port groups. In addition, each port group corresponds to one TRP, that is, the N port groups correspond to N TRPs, and the terminal reports FD basis vector indication information shared by the plurality of TRPs.

For example, a FD basis vector indicated by the FD basis vector indication information is $W_f$, representing a FD basis vector matrix, $W_f \in \mathbb{C}^{N_3 \times M}$, $N_3$ represents a number of PMI subbands, and M represents a number of FD basis vectors corresponding to the port group.

Optionally, if the number of FD basis vectors corresponding to at least two port groups is 4, then $M$ is 4, and $W_f \in \mathbb{C}^{N_3 \times 4}$.

It should be noted that the SD basis vector indication information, the combination coefficient indication information and the FD basis vector indication information indicated by the CSI in this embodiment of the disclosure correspond to the CSI-RS resources or the port groups at the same time.

In addition, it should be noted that this embodiment of the disclosure is described by taking specific information indicated by the CSI sent by the terminal to the network device as an example. In another embodiment, the network device needs to configure codebook parameter information for the terminal first, and then the terminal sends CSI to the network device according to the codebook parameter information.

The codebook parameter information configured by the network device for the terminal includes at least one of: a number of SD basis vectors corresponding to each CSI-RS resource, a number of FD basis vectors corresponding to the CSI-RS resource, a number of PMI subbands, or a number of transmitting antenna ports. Alternatively, the codebook parameter information configured by the network device for the terminal includes at least one of: a number of SD basis vectors corresponding to each port group, a number of FD basis vectors corresponding to the port group, a number of PMI subbands, or a number of transmitting antenna ports.

In some embodiments, after the network device configures codebook parameter information for the terminal, the terminal determines parameters indicated by the CSI according to the configured codebook parameter information, and then sends the CSI to the network device.

In the second type of information, the plurality of CSI-RS resources are grouped to obtain G CSI-RS resource groups, and the CSI indicates information corresponding to each CSI-RS resource group in the G CSI-RS resource groups. G is the same as the number of CSI-RS resource groups in the plurality of CSI-RS resources, the CSI-RS resource group includes at least one CSI-RS resource, and G is a positive integer greater than 1. Alternatively, the plurality of port groups are grouped to obtain G first groups, and the CSI indicates information corresponding to each of the G first groups. G is the same as the number of first groups among the plurality of port groups, the first group includes at least one port group, and G is a positive integer greater than 1.

The CSI indicates at least one of following information:

(1) G pieces of SD basis vector indication information or G pieces of port selection indication information (1)-(3).

The SD basis vector indication information is represented by a SD basis vector. The SD basis vector indication information indicates $L_g$ SD basis vectors selected by the terminal, where $L_g$ represents a number of SD basis vectors corresponding to a $g^{th}$ CSI-RS resource group, g ∈ {1, ..., G}. $L_g$ represents a number and a value of SD basis vectors corresponding to each CSI-RS resource in the $g^{th}$ CSI-RS resource group, Alternatively, the port selection indication information indicates $L_g$ CSI-RS ports selected by the terminal, where $L_g$ represents a number of CSI-RS ports corresponding to a $g^{th}$ first group, g ∈ {1, ..., G}. $L_g$ represents a number and a value of CSI-RS ports corresponding to each port group in the $g^{th}$ first group.

In addition, the CSI sent by the terminal to the network device indicates G pieces of SD basis vector indication information or G pieces of port selection indication information, which actually correspond to the number of G CSI-RS resource groups. It may also be understood as a one-to-one correspondence between pieces of SD basis vector indication information or pieces of port selection indication information and CSI-RS resource groups. In addition, each CSI-RS resource group includes at least one CSI-RS resource, and each CSI-RS resource corresponds to one TRP, that is, the terminal reports the piece of SD basis vector indication information or the piece of port selection indication information corresponding to the CSI-RS resource in each CSI-RS resource group.

For example, the SD basis vector is used for explanation. The SD basis vector is $W_{1,g}$, where $W_{1,g} \in \mathbb{C}^{N_g N_t \times 2L_g}$. $W_{1,g}$ represents a matrix consisting of one or more SD basis vectors corresponding to the $g^{th}$ CSI-RS resource group, $N_g$ represents a number of CSI-RS resources or a number of port groups in the $g^{th}$ group, $N_t$ represents a number of transmitting antenna ports, $L_g$ represents a number of SD basis vectors or a number of CSI-RS ports selected for the $g^{th}$ group, and $\mathbb{C}^{N_g N_t \times 2L_g}$ represents a complex matrix with dimensions of $N_g N_t \times 2L_g$.

Optionally, this embodiment of the disclosure includes 4 CSI-RS resources, where CSI-RS resource 1 and CSI-RS resource 2 are the 1st CSI-RS resource group, CSI-RS resource 3 and CSI-RS resource 4 are the 2nd CSI-RS resource group, and the CSI-RS resource 1, the CSI-RS resource 2, the CSI-RS resource 3 and the CSI-RS resource 4 correspond to TRP1, TRP2, TRP3 and TRP4 respectively, which may also be understood as TRP1 and TRP2 being the 1st CSI-RS resource group, TRP3 and TRP4 being the 2nd CSI-RS resource group. The number of SD basis vectors is $L_1=L_2=4$, $L_3 = L_4 = 3$, then $W_{1,1} \in \mathbb{C}^{2N_t \times 16}$ and $W_{1,2} \in \mathbb{C}^{2N_t \times 12}$. $\mathbb{C}^{2N_t \times 16}$ represents a complex matrix with dimensions of $2N_t \times 16$, and $\mathbb{C}^{2N_t \times 12}$ represents a complex matrix with dimensions of $2N_t \times 12$.

It should be noted that this embodiment of the disclosure is described by taking grouping CSI-RS resources to obtain G CSI-RS resource groups as an example. In another embodiment, G first groups may be obtained by grouping a plurality of port groups in one CSI-RS resource.

In addition, the CSI sent by the terminal to the network device indicates G pieces of SD basis vector indication information or G pieces of port selection indication information, which actually correspond to the number of G first groups. It may also be understood as a one-to-one correspondence between pieces of SD basis vector indication information or pieces of port selection indication information and first groups. In addition, each first group includes at least one port group, and each port group corresponds to one TRP, that is, the terminal reports the piece of SD basis vector indication information or the piece of port selection indication information corresponding to the port group in each first group.

For example, the SD basis vector is used for explanation. The SD basis vector is $W_{1,g}$, where $W_{1,g} \in \mathbb{C}^{N_g N_t \times 2L_g}$. $W_{1,g}$ represents a matrix consisting of SD basis vectors corresponding to the $g^{th}$ first group, $N_g$ represents a number of CSI-RS resources or a number of port groups in the $g^{th}$ group, $N_t$ represents a number of transmitting antenna ports, $L_g$ represents a number of SD basis vectors or a number of CSI-RS ports selected for the $g^{th}$ group, and $\mathbb{C}^{N_g N_t \times 2L_g}$ represents a complex matrix with dimensions of $N_g N_t \times 2L_g$.

Optionally, this embodiment of the disclosure includes 4 port groups, where port group 1 and port group 2 are the 1st first group, port group 3 and port group 4 are the 2nd first group, and the port group 1, the port group 2, the port group 3 and the port group 4 correspond to TRP1, TRP2, TRP3 and TRP4 respectively, which may also be understood as TRP1 and TRP2 being the 1st first group, TRP3 and TRP4 being the 2nd first group. The number of SD basis vectors is $L_1 = L_2 = 4$, $L_3 = L_4 = 3$, then $W_{1,1} \in \mathbb{C}^{2N_t \times 16}$ and $W_{1,2} \in \mathbb{C}^{2N_t \times 12}$. $\mathbb{C}^{2N_t \times 16}$ represents a complex matrix with dimensions of $2N_t \times 16$, and $\mathbb{C}^{2N_t \times 12}$ represents a complex matrix with dimensions of $2N_t \times 12$.

(2) G pieces of combination coefficient indication information.

In an embodiment of the disclosure, the CSI sent by the terminal to the network device indicates G pieces of combination coefficient indication information, which actually correspond to the number of G CSI-RS resource groups. It may also be understood as a one-to-one correspondence between pieces of combination coefficient indication information and CSI-RS resource groups. In addition, each CSI-RS resource group includes at least one CSI-RS resource, and each CSI-RS resource corresponds to one TRP, that is, the terminal reports the piece of combination coefficient indication information corresponding to the CSI-RS resource in each CSI-RS resource group.

For example, the combination coefficient indication information is $\tilde{W}_{2,g}$, representing a combination coefficient matrix. In $\widetilde{W}_{2,g} \mathbb{C}^{2L_g \times M_g}$, $N_g$ represents a number of CSI-RS resources in the $g^{th}$ group, $L_g$ represents a number of CSI-RS ports selected for the $g^{th}$ group, $M_g$ represents a number of FD basis vectors selected for the $g^{th}$ group, and $\mathbb{C}^{2L_g \times M_g}$ represents a complex matrix with dimensions of $2L_g \times M_g$.

Optionally, this embodiment of the disclosure includes 4 CSI-RS resources, where CSI-RS resource 1 and CSI-RS resource 2 are the 1st CSI-RS resource group, CSI-RS resource 3 and CSI-RS resource 4 are the 2nd CSI-RS resource group, and the CSI-RS resource 1, the CSI-RS resource 2, the CSI-RS resource 3 and the CSI-RS resource 4 correspond to TRP1, TRP2, TRP3 and TRP4 respectively, which may also be understood as TRP1 and TRP2 being the 1st CSI-RS resource group, TRP3 and TRP4 being the 2nd CSI-RS resource group. The number of SD basis vectors is $L_1 = L_2 = 4$, $L_3 = L_4 = 3$. The number of FD basis vectors corresponding to one of the two groups is $M_1 = 4$, the number of FD basis vectors corresponding to the other of the two groups is $M_2 = 7$, $\widetilde{W}_{2,1} \in \mathbb{C}^{16 \times 4}$, and $\widetilde{W}_{2,2} \in \mathbb{C}^{12 \times 3}$.

It should be noted that this embodiment of the disclosure is described by taking grouping CSI-RS resources to obtain G CSI-RS resource groups as an example. In another embodiment, G first groups may be obtained by grouping a plurality of port groups in one CSI-RS resource.

In an embodiment of the disclosure, the CSI sent by the terminal to the network device indicates G pieces of combination coefficient indication information, which actually correspond to the number of G first groups. It may also be understood as a one-to-one correspondence between pieces of combination coefficient indication information and first groups. In addition, each first group includes at least one port group, and each port group corresponds to one TRP, that is, the terminal reports combination coefficient indication information corresponding to the port group in each first group.

For example, the combination coefficient indication information is $\tilde{W}_{2,g}$, representing a combination coefficient matrix. In $\widetilde{W}_{2,g} \mathbb{C}^{2L_g \times M_g}$, $N_g$ represents a number of port groups in the $g^{th}$ group, $L_g$ represents a number of CSI-RS ports selected for the $g^{th}$ group, $M_g$ represents a number of FD basis vectors selected for the $g^{th}$ group, and $\mathbb{C}^{2L_g \times M_g}$ represents a complex matrix with dimensions of $2L_g \times M_g$.

Optionally, this embodiment of the disclosure includes 4 port groups, where port group 1 and port group 2 are the 1st first group, port group 3 and port group 4 are the 2nd first group, and the port group 1, the port group 2, the port group 3 and the port group 4 correspond to TRP1, TRP2, TRP3 and TRP4 respectively, which may also be understood as TRP1 and TRP2 being the 1st first group, TRP3 and TRP4 being the 2nd first group. The number of SD basis vectors is $L_1 = L_2 = 4$, $L_3 = L_4 = 3$. The number of FD basis vectors corresponding to one of the two groups is $M_1 = 4$, the number of FD basis vectors corresponding to the other of the two groups is $M_2 = 7$, $\widetilde{W}_{2,1} \in \mathbb{C}^{16 \times 4}$, and $\widetilde{W}_{2,2} \in \mathbb{C}^{12 \times 3}$.

(3) G pieces of FD basis vector indication information.

In an embodiment of the disclosure, the CSI sent by the terminal to the network device indicates G pieces of FD basis vectors, which actually correspond to the number of G CSI-RS resource groups. It may also be understood as a one-to-one correspondence between pieces of FD basis vector indication information and CSI-RS resource groups. In addition, each CSI-RS resource group includes at least one CSI-RS resource, and each CSI-RS resource corresponds to one TRP, that is, the terminal reports the FD basis vector corresponding to the CSI-RS resource in each CSI-RS resource group.

For example, the FD basis vector is $W_{f,g}^H$, representing a FD basis vector matrix. In $W_{f,g}^H \in \mathbb{C}^{N_3 \times M_g}$, $N$ represents a number of CSI-RS resources, $M_g$ represents a number of FD basis vectors selected for the $g^{th}$ group, $H$ is a conjugate transpose, and $\mathbb{C}^{N_3 \times M_g}$ represents a complex matrix with dimensions of $N_3 \times M_g$.

Optionally, this embodiment of the disclosure includes 4 CSI-RS resources, where CSI-RS resource 1 and CSI-RS resource 2 are the 1st CSI-RS resource group, CSI-RS resource 3 and CSI-RS resource 4 are the 2nd CSI-RS resource group, and the CSI-RS resource 1, the CSI-RS resource 2, the CSI-RS resource 3 and the CSI-RS resource 4 correspond to TRP1, TRP2, TRP3 and TRP4 respectively, which may also be understood as TRP1 and TRP2 being the 1st CSI-RS resource group, TRP3 and TRP4 being the 2nd CSI-RS resource group. The number of SD basis vectors is $L_1 = L_2 = 4$, $L_3 = L_4 = 3$. The number of FD basis vectors corresponding to one of the two groups is $M_1 = 4$, the number of FD basis vectors corresponding to the other of the two groups is $M_2 = 7$, $W_{f,1} \in \mathbb{C}^{N_3 \times 4}$, and $W_{f,2} \in \mathbb{C}^{N_3 \times 7}$.

It should be noted that this embodiment of the disclosure is described by taking grouping CSI-RS resources to obtain G CSI-RS resource groups as an example. In another embodiment, G first groups may be obtained by grouping a plurality of port groups in one CSI-RS resource.

In an embodiment of the disclosure, the CSI sent by the terminal to the network device indicates G FD basis vectors. The G pieces of FD basis vector indication information actually corresponds to the number of G first groups, which may also be understood as a one-to-one correspondence between pieces of FD basis vector indication information and first groups. In addition, each first group includes at least one port group, and each port group corresponds to one TRP, that is, the terminal reports the FD basis vector corresponding to the port group in each first group.

For example, the FD basis vector is $W_{f,g}^H$, representing a FD basis vector matrix. In $W_{f,g}^H \in \mathbb{C}^{N_3 \times M_g}$, $H$ is a conjugate transpose, $N_g$ represents a number of CSI-RS resources or a number of port groups in the $g^{th}$ group, H is the conjugate transpose, $N_3$ represents a number of PMI subbands, $M_g$ represents a number of FD basis vectors selected for the $g^{th}$ group, and $\mathbb{C}^{N_3 \times M_g}$ represents a complex matrix with dimensions of $N_3 \times M_g$.

Optionally, this embodiment of the disclosure includes 4 port groups, where port group 1 and port group 2 are the 1st first group, port group 3 and port group 4 are the 2nd first group, and the port group 1, the port group 2, the port group 3 and the port group 4 correspond to TRP1, TRP2, TRP3 and TRP4 respectively, which may also be understood as TRP1 and TRP2 being the 1st first group, TRP3 and TRP4 being the 2nd first group. The number of SD basis vectors is $L_1 = L_2 = 4$, $L_3 = L_4 = 3$. The number of FD basis vectors corresponding to one of the two groups is $M_1 = 4$, the number of FD basis vectors corresponding to the other of the two groups is $M_2 = 7$, $W_{f,1} \in \mathbb{C}^{N_3 \times 4}$, and $W_{f,1} \in \mathbb{C}^{N_3 \times 7}$.

It should be noted that the SD basis vector indication information, the combination coefficient indication information and the FD basis vector indication information indicated by the CSI in this embodiment of the disclosure correspond to the CSI-RS resource group or the first group in the port group at the same time.

It should be noted that this embodiment of the disclosure is described by taking specific information indicated by the CSI sent by the terminal to the network device as an example. In another embodiment, the network device needs to configure codebook parameter information for the terminal first, and then the terminal sends CSI to the network device according to the codebook parameter information.

The codebook parameter information configured by the network device for the terminal includes at least one of: a number of SD basis vectors corresponding to each CSI-RS resource, a number of FD basis vectors corresponding to the CSI-RS resource, a number of PMI subbands, or a number of transmitting antenna ports. Alternatively, the codebook parameter information configured by the network device for the terminal includes at least one of: a number of SD basis vectors corresponding to each port group, a number of FD basis vectors corresponding to the port group, a number of PMI subbands, or a number of transmitting antenna ports.

In some embodiments, after the network device configures codebook parameter information for the terminal, the terminal determines parameters indicated by the CSI according to the configured codebook parameter information, and then sends the CSI to the network device.

In the third type of information, the CSI indicates at least one of following information (1)-(3).

(1) SD basis vector indication information or port selection indication information, and the SD basis vector indication information or the port selection indication information corresponds to a plurality of CSI-RS resources.

The SD basis vector indication information is represented by a SD basis vector. The SD basis vector indication information indicates N*$N_t$ SD basis vectors selected by the terminal. The port selection indication information indicates N*$N_t$ CSI-RS ports selected by the terminal, where N represents a number of CSI-RS resources or a number of port groups, and $N_t$ represents a number of transmitting antenna ports.

In addition, the CSI sent by the terminal to the network device indicates SD basis vector indication information or port selection indication information, which actually corresponds to the number of CSI-RS resources. It may also be understood as the SD basis vector indication information or the port selection indication information being applied to a plurality of CSI-RS resources. In addition, each CSI-RS resource corresponds to one TRP, that is, the SD basis vector indication information or the port selection indication information corresponds to N TRPs, and the terminal reports the SD basis vector indication information or the port selection indication information corresponding to the N TRPs.

For example, the SD basis vector is used for explanation. The SD basis vector is $W_1$, where $W_1 \in \mathbb{C}^{NN_t \times 2L}$ or $W_1 \in \mathbb{C}^{NP \times 2L}$. $W_1$ represents a matrix consisting of L SD basis vectors corresponding to the plurality of CSI-RS resources, N represents a number of CSI-RS resources, $N_t$ represents a number of transmitting antenna ports, L represents a number of SD basis vectors or a number of CSI-RS ports corresponding to the CSI-RS resources, P is a number of CSI-RS ports, $\mathbb{C}^{NN_t \times 2L}$ represents a complex matrix with dimensions of $NN_t \times 2L$, and $\mathbb{C}^{NP \times 2L}$ represents a complex matrix with dimensions of $NP \times 2L$.

It should be noted that this embodiment of the disclosure is described by taking SD basis vector indication information or port selection indication information corresponding to CSI-RS resources as an example. In another embodiment, SD basis vector indication information or port selection indication information may also correspond to a plurality of port groups in one CSI-RS resource.

The CSI indicates SD basis vector indication information or port selection indication information, and the SD basis vector indication information or the port selection indication information corresponds to the plurality of port groups.

In addition, the CSI sent by the terminal to the network device indicates the SD basis vector indication information or the port selection indication information, which actually corresponds to the number of port groups. It may also be understood as the SD basis vector indication information or the port selection indication information being applied to the plurality of port groups. In addition, each port group corresponds to one TRP, that is, the SD basis vector indication information or the port selection indication information corresponds to N TRPs, and the terminal reports a SD basis vector corresponding to the N TRPs.

For example, the SD basis vector is used for explanation. The SD basis vector is $W_1$, where $W_1 \in \mathbb{C}^{NN_t \times 2L}$ or $W_1 \in \mathbb{C}^{NP \times 2L}$. $W_1$ represents a matrix consisting of L SD basis vectors corresponding to the plurality of port groups, N represents a number of port groups, $N_t$ represents a number of transmitting antenna ports, L represents a number of SD basis vectors or a number of CSI-RS ports corresponding to the CSI-RS resources, P is a number of CSI-RS ports, $\mathbb{C}^{NN_t \times 2L}$ represents a complex matrix with dimensions of $NN_t \times 2L$, and $\mathbb{C}^{NP \times 2L}$ represents a complex matrix with dimensions of $NP \times 2L$.

(2) combination coefficient indication information, and the combination coefficient indication information corresponds to a plurality of CSI-RS resources.

In an embodiment of the disclosure, the CSI sent by the terminal to the network device indicates combination coefficient indication information, which is actually shared by the plurality of CSI-RS resources. It may also be understood as combination coefficient indication information corresponding to the plurality of CSI-RS resources. In addition, each CSI-RS resource corresponds to one TRP, that is, the N CSI-RS resources correspond to N TRPs, and the terminal reports combination coefficient indication information shared by the plurality of TRPs.

For example, the combination coefficient indication information is $\tilde{W}_2$, representing a combination coefficient matrix, where $\widetilde{W}_2 \in \mathbb{C}^{2L \times M}$. N represents a number of CSI-RS resources, L represents a number of SD basis vectors or a number of CSI-RS ports corresponding to the CSI-RS resources, M represents a number of FD basis vectors corresponding to the CSI-RS resources, and $\mathbb{C}^{2L \times M}$ represents a complex matrix with dimensions of $2L \times M$.

Optionally, if the number of CSI-RS resources is 2, the number of SD basis vectors corresponding to each CSI-RS resource is 4, $L_i$ is 4, and the number of FD basis vectors corresponding to at least two CSI-RS resources is 4, then M is 4, and $\widetilde{W}_2 \in \mathbb{C}^{12 \times 4}$.

It should be noted that this embodiment of the disclosure is described by taking combination coefficient indication information corresponding to one CSI-RS resource as an example. In another embodiment, combination coefficient indication information may also correspond to a plurality of port groups in one CSI-RS resource.

In an embodiment of the disclosure, the CSI sent by the terminal to the network device includes combination coefficient indication information, which is actually shared by the plurality of port groups. It may also be understood as combination coefficient indication information corresponding to the plurality of port groups. In addition, each port group corresponds to one TRP, that is, the N port groups correspond to N TRPs, and the terminal reports combination coefficient indication information shared by the plurality of TRPs.

For example, the combination coefficient indication information is $\tilde{W}_2$, represents a combination coefficient matrix, where $\widetilde{W}_2 \in \mathbb{C}^{2L \times M}$. N represents a number of port groups, L represents a number of SD basis vectors or a number of CSI-RS ports corresponding to the CSI-RS resources, and M represents a number of FD basis vectors corresponding to the port groups.

Optionally, if the number of port groups is 2, and the number of SD basis vectors corresponding to each port group is 4, $L_i$ is 4, and the number of FD basis vectors corresponding to at least two port groups is 4, then $M$ is 4, and $\widetilde{W}_2 \in \mathbb{C}^{12 \times 4}$.

(3) FD basis vector indication information, and the FD basis vector indication information corresponds to the plurality of CSI-RS resources.

The FD basis vector indication information indicates M FD basis vectors selected by the terminal. In an embodiment of the disclosure, the CSI sent by the terminal to the network device indicates FD basis vector indication information, which is actually shared by the plurality of CSI-RS resources. It may also be understood as FD basis vector indication information corresponding to the plurality of CSI-RS resources. In addition, each CSI-RS resource corresponds to one TRP, that is, the N CSI-RS resources correspond to N TRPs, and the terminal reports FD basis vector indication information shared by the plurality of TRPs.

For example, the FD basis vector indication information is $W_f$, representing a FD basis vector matrix, where $W_f \in \mathbb{C}^{N_3 \times M}$. $N_3$ represents a number of PMI subbands, $M$ represents a number of FD basis vectors corresponding to the CSI-RS resources, and $\mathbb{C}^{N_3 \times M}$ represents a complex matrix with dimensions of $N_3 \times M$.

Optionally, if the number of FD basis vectors corresponding to at least two CSI-RS resources is 4, then $M$ is 4, and $W_f \in \mathbb{C}^{N_3 \times 4}$.

It should be noted that this embodiment of the disclosure is described by taking SD basis vector indication information corresponding to one CSI-RS resource as an example. In another embodiment, SD basis vector indication information may also correspond to a plurality of port groups in one CSI-RS resource.

In an embodiment of the disclosure, the CSI sent by the terminal to the network device includes FD basis vector indication information, which is actually shared by the plurality of port groups. It may also be understood as FD basis vector indication information corresponding to the plurality of port groups. In addition, each port group corresponds to one TRP, that is, the N port groups correspond to N TRPs, and the terminal reports FD basis vector indication information shared by the plurality of TRPs.

For example, the FD basis vector indication information is $W_f$, representing a FD basis vector matrix, where $W_f \in \mathbb{C}^{N_3 \times M}$. $N_3$ represents a number of PMI subbands, and $M$ represents a number of FD basis vectors corresponding to the port group, and $\mathbb{C}^{N_3 \times M}$ represents a complex matrix with dimensions of $N_3 \times M$.

Optionally, if the number of FD basis vectors corresponding to at least two port groups is 4, then $M$ is 4, and $W_f \in \mathbb{C}^{N_3 \times 4}$.

It should be noted that this embodiment of the disclosure is described by taking specific information indicated by the CSI sent by the terminal to the network device as an example. In another embodiment, the network device needs to configure codebook parameter information for the terminal first, and then the terminal sends CSI to the network device according to the codebook parameter information.

The codebook parameter information configured by the network device for the terminal includes at least one of: a number of SD basis vectors corresponding to each CSI-RS resource, a number of FD basis vectors corresponding to the CSI-RS resource, a number of PMI subbands, or a number of transmitting antenna ports. Alternatively, the codebook parameter information configured by the network device for the terminal includes at least one of: a number of SD basis vectors corresponding to each port group, a number of FD basis vectors corresponding to the port group, a number of PMI subbands, or a number of transmitting antenna ports.

In some embodiments, after the network device configures codebook parameter information for the terminal, the terminal determines parameters indicated by the CSI according to the configured codebook parameter information, and then sends the CSI to the network device.

It should be noted that all the above three ways are described by taking the combination coefficient indication information as an example. In another embodiment, the combination coefficient indication information includes a plurality of types of information.

Optionally, the combination coefficient indication information includes non-zero coefficient information and non-zero coefficient position information, the non-zero coefficient information indicates a non-zero coefficient in the combination coefficient indication information, and the non-zero coefficient position information indicates a position of the non-zero coefficient in the combination coefficient indication information.

It should be noted that this embodiment of the disclosure is described by taking specific information indicated by the CSI sent by the terminal to the network device as an example. In another embodiment, the network device needs to configure codebook parameter information for the terminal fir st, and then the terminal sends CSI to the network device according to the codebook parameter information.

The codebook parameter information configured by the network device for the terminal includes at least one of: a number of SD basis vectors corresponding to each CSI-RS resource, a number of FD basis vectors corresponding to the CSI-RS resource, a number of PMI subbands, or a number of transmitting antenna ports. Alternatively, the codebook parameter information configured by the network device for the terminal includes at least one of: a number of SD basis vectors corresponding to each port group, a number of FD basis vectors corresponding to the port group, a number of PMI subbands, or a number of transmitting antenna ports.

In some embodiments, after the network device configures codebook parameter information for the terminal, the terminal determines parameters indicated by the CSI according to the configured codebook parameter information, and then sends the CSI to the network device.

In the solution according to this embodiment of the disclosure, the parameters indicated by the CSI include a plurality of situations, which expands the ways of the indicated parameters and thus improves the diversity of the indicated parameters.

In some embodiments, the terminal determines, according to channel information or valid channel information corresponding to each CSI-RS resource and the codebook parameter information, the SD basis vector indication information or the port selection indication information, the combination coefficient indication information and the FD basis vector indication information. Then, the terminal sends to the network device, CSI including the SD basis vector indication information or the port selection indication information, the combination coefficient indication information and the FD basis vector indication information.

The valid channel information refers to channel information that can be used, which may also be understood as channel information including valid parameters.

In an embodiment of the disclosure, after measuring each CSI-RS resource, the terminal may determine the channel information or valid channel information corresponding to each CSI-RS resource, and the terminal can also determine the SD basis vector indication information or the port selection indication information according to the determined channel information or valid channel information and the codebook parameter information, and after the terminal determines the SD basis vector indication information or the port selection indication information, the terminal can also determine the combination coefficient indication information and the FD basis vector indication information. Then the terminal determines the CSI. The CSI can indicate the above three types of information determined by the terminal, and the CSI is then sent to the network device.

In the solution according to this embodiment of the disclosure, after measuring the CSI-RS corresponding to each CSI-RS resource, the indication information reported to the network device includes the information shared by the plurality of TRPs and individual parameters for each TRP, so the network device may determine the precoding of the terminal according to the parameters reported by the terminal, which not only reduces the feedback overhead by reporting the shared parameters, but also improves the precoding gain of the terminal by integrating the parameters of the plurality of TRPs.

Based on the embodiment illustrated in FIG. 6, the terminal receives configuration information from the network device, in which the configuration information is used to configure codebook parameter information, and the codebook parameter information is used by the terminal to determine the CSI.

In an embodiment of the disclosure, the network device sends configuration information to the terminal, and configures codebook parameter information for the terminal via the configuration information. Subsequently, the terminal can send the CSI to the network device based on the codebook parameter information.

In some embodiments, before the network device sends the configuration information to the terminal, the network device also determines the codebook structure first, so as to configure, based on the codebook structure, the terminal with codebook parameter information matching the codebook structure.

Optionally, the terminal determines the codebook structure, and then indicates the determined codebook structure to the network device via indication information.

The terminal sends first indication information to the network device, in which the first indication information indicates an adopted codebook structure.

Optionally, the network device determines the codebook structure, and then indicates the codebook structure to the terminal via indication information.

The terminal receives second indication information from the network device, in which the second indication information indicates an adopted codebook structure.

It should be noted that this embodiment of the disclosure is described by taking the indication information indicating the codebook structure as an example. In another embodiment, the codebook structure between the network device and the terminal is agreed upon by a protocol, and the network device directly configures the terminal with codebook parameter information corresponding to the agreed codebook structure.

In the solution according to this embodiment of the disclosure, after the network device determines the codebook structure, the network device configures codebook parameter information for the terminal according to the codebook structure, which improves the accuracy of the codebook parameter information configured by the network device.

FIG. 7 illustrates a flowchart of a method for determining precoding based on a codebook according to an exemplary embodiment of the disclosure, which can be exemplarily applied to the network device illustrated in FIG. 1. The method includes at least part of following contents.

At 701, the network device receives CSI from the terminal, in which the CSI includes indication information corresponding to a plurality of CSI-RS resources and indication information corresponding to each CSI-RS resource, or the CSI includes indication information corresponding to a plurality of port groups in one CSI-RS resource and indication information corresponding to each port group, the port group includes a plurality of CSI-RS ports corresponding to the CSI-RS resource, and the CSI is determined by the terminal based on channel information corresponding to each CSI-RS resource in at least one CSI-RS resource and codebook parameter information.

The CSI-RS resources are used to transmit the CSI-RS. In addition, the CSI-RS resources are configured by the network device, and the network device can send the CSI-RS to the terminal via the configured CSI-RS resources.

In this embodiment of the disclosure, the terminal measures the CSI-RS based on the at least one CSI-RS resource to obtain channel information corresponding to each CSI-RS resource measured.

In some embodiments, the CSI-RS resource is a channel measurement resource (CMR). That is, the CSI-RS resource in this embodiment of the disclosure is a CMR resource.

Optionally, different CMRs belong to the same CSI-RS resource set or different CSI-RS resource sets.

In some embodiments, each of the at least one CSI-RS resource corresponds to one TRP, and at least two TRPs are configured for CJT.

In some other embodiments, each of the plurality of port groups in the one CSI-RS resource corresponds to one TRP, and at least two TRPs are configured for CJT.

One CSI-RS resource corresponds to a plurality of CSI-RS ports, a plurality of port groups are obtained by grouping the plurality of CSI-RS ports, each port group includes at least one CSI-RS port, and each port group corresponds to one TRP.

The codebook parameter information is used by the terminal to report indication information, so that the network device can determine the precoding of the terminal. In addition, the codebook parameter information corresponds to the codebook structure. That is to say, the precoding of the terminal can be determined according to the codebook structure corresponding to the codebook parameter information and the CSI. In addition, the CSI in this embodiment of the disclosure is used to determine the precoding of the terminal based on the codebook structure corresponding to the codebook parameter information, and the CSI includes indication information. That is, the indication information included in the CSI is used to determine the precoding of the terminal based on the codebook structure corresponding to the codebook parameter information.

The CSI includes the indication information corresponding to the plurality of CSI-RS resources and the indication information corresponding to each CSI-RS resource. The indication information corresponding to the plurality of CSI-RS resources means that the indication information for determining the precoding of the terminal included in the CSI can be applied to each CSI-RS resource. That is, sending indication information can be applied to each CSI-RS resource. The indication information corresponding to each CSI-RS resource means that the parameters for determining the precoding of the terminal included in the CSI are applied to one CSI-RS resource. That is, the indication information corresponding to each CSI-RS resource is applied to the corresponding CSI-RS resource, but is not applied to other CSI-RS resources.

Alternatively, the CSI includes indication information corresponding to the plurality of port groups in one CSI-RS resource and indication information corresponding to each port group, and the port group includes a plurality of CSI-RS ports corresponding to the CSI-RS resource. The indication information corresponding to the plurality of port groups means that the indication information for determining the precoding of the terminal included in the CSI can be applied to each port group. That is, sending indication information can be applied to each port group. The indication information corresponding to each port group means that the indication information for determining the precoding of the terminal included in the CSI is applied to one port group. That is, the parameters corresponding to each port group are applied to the corresponding port group, but are not applied to other port groups.

In an embodiment of the disclosure, after the terminal determines the channel information corresponding to each CSI-RS resource in the at least one CSI-RS resource, the terminal determines the indication information that needs to be reported to the network device based on the acquired channel information and codebook parameter information. The terminal then sends the CSI including the indication information to the network device, and the CSI is used to determine precoding parameters of the terminal.

If the at least one CSI-RS resource includes a plurality of CSI-RS resources, the terminal determines the channel information corresponding to each CSI-RS resource. If the at least one CSI-RS resource includes one CSI-RS resource, and the one CSI-RS resource corresponds to a plurality of CSI-RS ports, the terminal determines the channel information corresponding to each port group in the plurality of port groups.

In some embodiments, the network device configures the codebook parameter information for the terminal via a RRC signaling, or other signaling.

At 702, the network device determines precoding of the terminal according to the CSI and the codebook structure corresponding to the codebook parameter information.

The codebook parameter information corresponds to a codebook structure. If the codebook structure is different, the network device determines the precoding of the terminal based on the codebook structure in different ways.

In an embodiment of the disclosure, after the network device receives the CSI, the network device can determine parameters shared by the plurality of CSI-RS resources and parameters corresponding to each CSI-RS resource based on the CSI, indicated by the CSI, or determine parameters shared by the plurality of port groups in one CSI-RS resource and parameters corresponding to each port group, indicated by the CSI, and determine the precoding of the terminal according to the determined parameters and the codebook structure corresponding to the codebook parameter information.

In the solution according to this embodiment of the disclosure, after the terminal measures the CSI-RS corresponding to each CSI-RS resource, the indication information reported to the network device includes parameters shared by the CSI-RS resources and the parameters corresponding to each CSI-RS resource, or includes the parameters shared by the plurality of port groups corresponding to one CSI-RS resource and the parameters corresponding to each port group. The plurality of CSI-RS resources or the plurality of port groups may be understood as corresponding to the plurality of TRPs. That is, the disclosure determines parameters shared by the plurality of TRPs and individual parameters for each TRP, so the network device may determine the precoding of the terminal according to the parameters reported by the terminal, which not only reduces the feedback overhead by reporting the shared parameters, but also improves the precoding gain of the terminal by integrating the parameters of the plurality of TRPs.

Based on the embodiment illustrated in FIG. 7, the CSI sent by the terminal includes types of information, and the included types of information includes different situations.

In the first type of information, the CSI includes at least one of following information (1)-(3).

(1) N pieces of SD basis vector indication information or N pieces of port selection indication information, where N is the same as a number of CSI-RS resources and N is a positive integer greater than 1.

The SD basis vector indication information is represented by a SD basis vector. The SD basis vector indication information indicates $L_i$ SD basis vectors selected by the terminal, where i belongs to {1,2...,N}. In some embodiments, the SD basis vector indication information is a SD beam basis vector, which may be referred to as a beam basis vector, or as a SD basis vector, or as a beam. The port selection indication information indicates $L_i$ CSI-RS ports selected by the terminal.

In addition, the CSI sent by the terminal to the network device includes N pieces of SD basis vector indication information or N pieces of port selection indication information, which actually correspond to the number of CSI-RS resources. It may also be understood as a one-to-one correspondence between pieces of SD basis vector indication information or pieces of port selection indication information and CSI-RS resources. In addition, each CSI-RS resource corresponds to one TRP, that is, the N CSI-RS resources correspond to N TRPs, and the terminal reports the piece of SD basis vector indication information or the piece of port selection indication information corresponding to each TRP.

For example, the SD basis vector indication information is used for explanation. The SD basis vector indicated by the SD basis vector indication information is $W_{1,i}$, where $W_{1,i} \in \mathbb{C}^{N_t \times 2L_i}$, or $W_{1,i} \in \mathbb{C}^{P \times 2L_i}$. $W_{1,i}$ represents a matrix consisting of $L_i$ SD basis vectors corresponding to an i$^{th}$ CSI-RS resource, $N$ represents the number of the CSI-RS resources, $N_t$ represents a number of transmitting antenna ports, $L_i$ represents a number of SD basis vectors or a number of CSI-RS ports corresponding to the i$^{th}$ CSI-RS resource, i $\in$ {1, ... , N}, and P is a number of CSI-RS ports. $\mathbb{C}^{X \times Y}$ represents a complex matrix with dimensions of X rows and Y columns, for example, X is $N_t$ and Y is $2L_i$, that is, $\mathbb{C}^{N_t \times 2L_i}$. The complex matrix in the following embodiments is similar to $\mathbb{C}^{N_t \times 2L_i}$ in this embodiment of the disclosure, which is not repeated herein.

Optionally, if the number of CSI-RS resources is 2, the number of SD basis vectors corresponding to each CSI-RS resource is 4, and $L_i$ is 4, then $W_{1,i} \in \mathbb{C}^{N_t \times 8}$.

It should be noted that this embodiment of the disclosure is described by taking N pieces of SD basis vector indication information or N pieces of port selection indication information corresponding to CSI-RS resources as an example. In another embodiment, the N pieces of SD basis vector indication information or the N pieces of port selection indication information may also correspond to the plurality of port groups in one CSI-RS resource.

The CSI includes N pieces of SD basis vector indication information or N pieces of port selection indication information, and N is the same as the number of port groups, and N is a positive integer greater than 1.

The CSI sent by the terminal to the network device includes N pieces of SD basis vector indication information or N pieces of port selection indication information, which actually correspond to the number of port groups. It may also be understood as a one-to-one correspondence between pieces of SD basis vector indication information or pieces of port selection indication information and port groups. In addition, each port group corresponds to one TRP, that is, the N port groups correspond to N TRPs, and the terminal reports the piece of SD basis vector indication information or the piece of port selection indication information corresponding to each TRP.

For example, the SD basis vector indication information is used for explanation. The SD basis vector indicated by the SD basis vector indication information is $W_{1,i}$, where $W_{1,i} \in \mathbb{C}^{N_t \times 2L_i}$, or $W_{1,i} \in \mathbb{C}^{P \times 2L_i}$. $W_{1,i}$ represents a matrix consisting of $L_i$ SD basis vectors corresponding to an $i^{th}$ port group, $N$ represents the number of at least two port groups, $N_t$ represents a number of transmitting antenna ports, $L_i$ represents a number of SD basis vectors or a number of CSI-RS ports corresponding to the $i^{th}$ port group, $i \in \{1, \ldots, N\}$, and $P$ is a number of CSI-RS ports.

Optionally, if the number of port groups is 2, the number of SD basis vectors corresponding to each port group is 4, and $L_i$ is 4, then $W_{1,i} \in \mathbb{C}^{N_t \times 8}$.

(2) combination coefficient indication information, and the combination coefficient indication information corresponds to the plurality of CSI-RS resources.

In an embodiment of the disclosure, the CSI sent by the terminal to the network device includes combination coefficient indication information, which is actually shared by the plurality of CSI-RS resources. It may also be understood as combination coefficient indication information corresponding to the plurality of CSI-RS resources. In addition, each CSI-RS resource corresponds to one TRP, that is, the N CSI-RS resources correspond to N TRPs, and the terminal reports combination coefficient indication information shared by the plurality of TRPs.

For example, a combination coefficient matrix indicated by the combination coefficient indication information is $\tilde{W}_2$, where $\widetilde{W}_2 \in \mathbb{C}^{\sum_{i=1}^{N} 2L_i \times M}$. N represents the number of CSI-RS resources, $L_i$ represents a number of pieces of SD basis vector indication information or a number of CSI-RS ports corresponding to the $i^{th}$ CSI-RS resource, $i \in \{1, \ldots, N\}$, and $M$ represents a number of FD basis vectors corresponding to the CSI-RS resource.

Optionally, if the number of CSI-RS resources is 2, the number of SD basis vectors corresponding to each CSI-RS resource is 4, $L_i$ is 4, and the number of FD basis vectors corresponding to at least two CSI-RS resources is 4, then $M$ is 4, and $\widetilde{W}_2 \in \mathbb{C}^{12 \times 4}$.

It should be noted that this embodiment of the disclosure is described by taking combination coefficient indication information corresponding to one CSI-RS resource as an example. In another embodiment, combination coefficient indication information may also correspond to a plurality of port groups in one CSI-RS resource.

The CSI includes combination coefficient indication information, and the combination coefficient indication information corresponds to the plurality of port groups.

In an embodiment of the disclosure, the CSI sent by the terminal to the network device includes combination coefficient indication information, which is actually shared by the plurality of port groups. It may also be understood as combination coefficient indication information corresponding to the plurality of port groups. In addition, each port group corresponds to one TRP, that is, the N port groups correspond to N TRPs, and the terminal reports combination coefficient indication information shared by the plurality of TRPs.

For example, a combination coefficient matrix indicated by the combination coefficient indication information is $\tilde{W}_2$, where $\widetilde{W}_2 \in \mathbb{C}^{\sum_{i=1}^{N} 2L_i \times M}$. N represents the number of port groups, $L_i$ represents a number of SD basis vectors or a number of CSI-RS ports corresponding to the $i^{th}$ port group, $i \in \{1, \ldots, N\}$, and $M$ represents a number of FD basis vectors corresponding to the port group.

Optionally, if the number of port groups is 2, and the number of SD basis vectors corresponding to each port group is 4, $L_i$ is 4, and the number of FD basis vectors corresponding to at least two port groups is 4, then $M$ is 4, and $\widetilde{W}_2 \in \mathbb{C}^{12 \times 4}$.

(3) FD basis vector indication information, and the FD basis vector indication information corresponds to the plurality of CSI-RS resources.

The FD basis vector indication information indicates M FD basis vectors selected by the terminal. The FD basis vector indication information is used to represent a change rule of the channel in the FD. Specifically, the FD basis vectors can be used to represent a change rule of a weighted coefficient of each SD basis vector in each FD unit. The change rule represented by the FD base is related to factors such as a multipath delay.

In an embodiment of the disclosure, the CSI sent by the terminal to the network device includes FD basis vector indication information, which is actually shared by the plurality of CSI-RS resources. It may also be understood as FD basis vector indication information corresponding to the plurality of CSI-RS resources. In addition, each CSI-RS resource corresponds to one TRP, that is, the N CSI-RS resources correspond to N TRPs, and the terminal reports FD basis vector indication information shared by the plurality of TRPs.

For example, a FD basis vector indicated by the FD basis vector indication information is $W_f$, representing a FD basis vector matrix, where $W_f \in \mathbb{C}^{N_3 \times M}$. $N_3$ represents a number of PMI subbands, and $M$ represents a number of FD basis vectors corresponding to the CSI-RS resources.

Optionally, if the number of FD basis vectors corresponding to at least two CSI-RS resources is 4, then $M$ is 4, and $W_f \in \mathbb{C}^{N_3 \times 4}$.

It should be noted that this embodiment of the disclosure is described by taking FD basis vector indication information corresponding to one CSI-RS resource as an example. In another embodiment, FD basis vector indication information may also correspond to a plurality of port groups in one CSI-RS resource.

The CSI includes FD basis vector indication information, and the FD basis vector indication information corresponds to the plurality of port groups.

In an embodiment of the disclosure, the CSI sent by the terminal to the network device includes FD basis vector indication information, which is actually shared by the plurality of port groups. It may also be understood as FD basis vector indication information corresponding to the plurality of port groups. In addition, each port group corresponds to one TRP, that is, the N port groups correspond to N TRPs, and the terminal reports FD basis vector indication information shared by the plurality of TRPs.

For example, a FD basis vector indicated by the FD basis vector indication information is $W_f$, representing a FD basis vector matrix, $W_f \in \mathbb{C}^{N_3 \times M}$, $N_3$ represents a number of PMI subbands, and $M$ represents a number of FD basis vectors corresponding to the port group.

Optionally, if the number of FD basis vectors corresponding to at least two port groups is 4, then $M$ is 4, and $W_f \in \mathbb{C}^{N_3 \times 4}$.

It should be noted that the SD basis vector indication information, the combination coefficient indication information and the FD basis vector indication information indicated by the CSI in this embodiment of the disclosure correspond to the CSI-RS resources or the port groups at the same time.

In addition, it should be noted that this embodiment of the disclosure is described by taking specific information indicated by the CSI sent by the terminal to the network device as an example. In another embodiment, the network device needs to configure codebook parameter information for the terminal first, and then the terminal sends CSI to the network device according to the codebook parameter information.

The codebook parameter information configured by the network device for the terminal includes at least one of: a number of SD basis vectors corresponding to each CSI-RS resource, a number of FD basis vectors corresponding to the CSI-RS resource, a number of PMI subbands, or a number of transmitting antenna ports. Alternatively, the codebook parameter information configured by the network device for the terminal includes at least one of: a number of SD basis vectors corresponding to each port group, a number of FD basis vectors corresponding to the port group, a number of PMI subbands, or a number of transmitting antenna ports.

In some embodiments, after the network device configures codebook parameter information for the terminal, the terminal determines parameters indicated by the CSI according to the configured codebook parameter information, and then sends the CSI to the network device.

It should be noted that, in the first situation, the codebook structure is expressed by following formulas:

$$W = \begin{bmatrix} W_{1,1} & & \\ & \ddots & \\ & & W_{1,N} \end{bmatrix} \widetilde{W}_2 W_f^H, \quad W_{1,i} \in \mathbb{C}^{N_t \times 2L_i}, \text{ or } W_{1,i} \in \mathbb{C}^{P \times 2L_i}, \widetilde{W}_2 \in \mathbb{C}^{\sum_{i=1}^{N} 2L_i \times M}, W_f \in \mathbb{C}^{N_3 \times M},$$

where W represents the codebook structure, N represents the number of the CSI-RS resources, $N_t$ represents a number of transmitting antenna ports, P is a number of CSI-RS ports, $L_i$ represents a number of SD basis vectors or a number of CSI-RS ports corresponding to an ith CSI-RS resource, $i \in \{1, \ldots, N\}$, M represents a number of FD basis vectors corresponding to the ith CSI-RS resource, or a number of FD basis vectors corresponding to the ith port group, $N_3$ represents a number of PMI subbands, $W_{1,i}$ represents a matrix consisting of $L_i$ SD basis vectors or unit basis vectors for port selection corresponding to the ith CSI-RS resource, $\widetilde{W}_2$ represents a matrix consisting of the combination coefficient indication information, $W_f$ represents a matrix consisting of M FD basis vectors, and $\mathbb{C}^{X \times Y}$ represents a complex matrix with dimensions of X rows and Y columns.

Alternatively, where the $W$ represents the codebook structure, $N$ represents the number of the port groups, $N_t$ represents a number of transmitting antenna ports, $P$ is a number of CSI-RS ports, $L_i$ represents a number of SD basis vectors or a number of CSI-RS ports corresponding to an ith port group, i $\in \{1, ... , N\}$, $M$ represents a number of FD basis vectors corresponding to the ith port group, $N_3$ represents a number of PMI subbands, $W_{1,i}$ represents a matrix consisting of $L_i$ SD basis vectors or unit basis vectors for port selection corresponding to the ith port group, $\tilde{W}_2$ represents a matrix consisting of the combination coefficient indication information, $W_f$ represents a matrix consisting of M FD basis vectors, and $\mathbb{C}^{X \times Y}$ represents a complex matrix with dimensions of X rows and Y columns.

In some embodiments, if $W_f$ is off, M=1. The terminal selects $L_1$=2, $L_2$=4 and $L_3$=8 ports respectively according to estimated valid information of each port, and calculates, based on the selected ports, a port combination coefficient as $W_2 \in \mathbb{C}^{28 \times 1}$. The network device determines a calculation formula for the precoding of the terminal

$$W = \begin{bmatrix} W_{1,1} & & \\ & \ddots & \\ & & W_{1,3} \end{bmatrix} W_2$$

. The UE reports indication information of $W_{1,1}$, $W_{1,2}$ and $W_{1,3}$, respectively and each quantization coefficient information in $\tilde{W}_2$, so that the network device uses them to calculate the precoding of the terminal.

In the second type of information, the plurality of CSI-RS resources are grouped to obtain G CSI-RS resource groups, and the CSI indicates information corresponding to each of the G CSI-RS resource groups. G is the same as the number of CSI-RS resource groups in the plurality of CSI-RS resources, the CSI-RS resource group includes at least one CSI-RS resource, and G is a positive integer greater than 1. Alternatively, the plurality of port groups are grouped to obtain G first groups, and the CSI indicates information corresponding to each of the G first groups. G is the same as the number of first groups among the plurality of port groups, the first group includes at least one port group, and G is a positive integer greater than 1.

The CSI indicates at least one of following information:

(1) G pieces of SD basis vector indication information or G pieces of port selection indication information (1)-(3).

The SD basis vector indication information is represented by a SD basis vector. The SD basis vector indication information indicates $L_g$ SD basis vectors selected by the terminal, where $L_g$ represents a number of SD basis vectors corresponding to a gth CSI-RS resource group, g $\in \{1, ..., G\}$. $L_g$ represents a number and a value of SD basis vectors corresponding to each CSI-RS resource in the gth CSI-RS resource group, Alternatively, the port selection indication information indicates $L_g$ CSI-RS ports selected by the terminal, where $L_g$ represents a number of CSI-RS ports corresponding to a gth first group, g $\in \{1, ..., G\}$. $L_g$ represents a number and a value of CSI-RS ports corresponding to each port group in the gth first group.

In addition, the CSI sent by the terminal to the network device indicates G pieces of SD basis vector indication information or G pieces of port selection indication information, which actually correspond to the number of G CSI-RS resource groups. It may also be understood as a one-to-one correspondence between pieces of SD basis vector indication information or pieces of port selection indication information and CSI-RS resource groups. In addition, each CSI-RS resource group includes at least one CSI-RS resource, and each CSI-RS resource corresponds to one TRP, that is, the terminal reports the piece of SD basis vector indication information or the piece of port selection indication information corresponding to the CSI-RS resource in each CSI-RS resource group.

For example, the SD basis vector is used for explanation. The SD basis vector is $W_{1,g}$, where $W_{1,g} \in \mathbb{C}^{N_g N_t \times 2L_g}$. $W_{1,g}$ represents a matrix consisting of one or more SD basis vectors corresponding to the gth CSI-RS resource group, $N_g$ represents a number of CSI-RS resources or a number of port groups in the gth group, $N_t$ represents a number of transmitting antenna ports, $L_g$ represents a number of SD basis vectors or a number of CSI-RS ports selected for the gth group, and $\mathbb{C}^{N_g N_t \times 2L_g}$ represents a complex matrix with dimensions of $N_g N_t \times 2L_g$.

Optionally, this embodiment of the disclosure includes 4 CSI-RS resources, where CSI-RS resource 1 and CSI-RS resource 2 are the 1st CSI-RS resource group, CSI-RS resource 3 and CSI-RS resource 4 are the 2nd CSI-RS resource group, and the CSI-RS resource 1, the CSI-RS resource 2, the CSI-RS resource 3 and the CSI-RS resource 4 correspond to TRP1, TRP2, TRP3 and TRP4 respectively, which may also be understood as TRP1 and TRP2 being the 1st CSI-RS resource group, TRP3 and TRP4 being the 2nd CSI-RS resource group. The number of SD basis vectors is $L_1$=$L_2$ = 4, $L_3$ = $L_4$ = 3, then $W_{1,1} \in \mathbb{C}^{2N_t \times 16}$ and $W_{1,2} \in \mathbb{C}^{2N_t \times 12}$. $\mathbb{C}^{2N_t \times 16}$ represents a complex matrix with dimensions of $2N_t \times$

**16,** and $\mathbb{C}^{2N_t \times 12}$ represents a complex matrix with dimensions of $2N_t \times 12$.

It should be noted that this embodiment of the disclosure is described by taking grouping CSI-RS resources to obtain G CSI-RS resource groups as an example. In another embodiment, G first groups may be obtained by grouping a plurality of port groups in one CSI-RS resource.

In addition, the CSI sent by the terminal to the network device indicates G pieces of SD basis vector indication information or G pieces of port selection indication information, which actually correspond to the number of G first groups. It may also be understood as a one-to-one correspondence between pieces of SD basis vector indication information or pieces of port selection indication information and first groups. In addition, each first group includes at least one port group, and each port group corresponds to one TRP, that is, the terminal reports the piece of SD basis vector indication information or the piece of port selection indication information corresponding to the port group in each first group.

For example, the SD basis vector is used for explanation. The SD basis vector is $W_{1,g}$, where $W_{1,g} \in \mathbb{C}^{N_g N_t \times 2L_g}$. $W_{1,g}$ represents a matrix consisting of SD basis vectors corresponding to the $g^{th}$ first group, $N_g$ represents a number of CSI-RS resources or a number of port groups in the $g^{th}$ group, $N_t$ represents a number of transmitting antenna ports, $L_g$ represents a number of SD basis vectors or a number of CSI-RS ports selected for the $g^{th}$ group, and $\mathbb{C}^{N_g N_t \times 2L_g}$ represents a complex matrix with dimensions of $N_g N_t \times 2L_g$.

Optionally, this embodiment of the disclosure includes 4 port groups, where port group 1 and port group 2 are the $1^{st}$ first group, port group 3 and port group 4 are the $2^{nd}$ first group, and the port group 1, the port group 2, the port group 3 and the port group 4 correspond to TRP1, TRP2, TRP3 and TRP4 respectively, which may also be understood as TRP1 and TRP2 being the $1^{st}$ first group, TRP3 and TRP4 being the $2^{nd}$ first group. The number of SD basis vectors is $L_1 = L_2 = 4$, $L_3 = L_4 = 3$, then $W_{1,1} \in \mathbb{C}^{2N_t \times 16}$ and $W_{1,2} \in \mathbb{C}^{2N_t \times 12}$. $\mathbb{C}^{2N_t \times 16}$ represents a complex matrix with dimensions of $2N_t \times 16$, and $\mathbb{C}^{2N_t \times 12}$ represents a complex matrix with dimensions of $2N_t \times 12$.

(2) G pieces of combination coefficient indication information.

In an embodiment of the disclosure, the CSI sent by the terminal to the network device indicates G pieces of combination coefficient indication information, which actually correspond to the number of G CSI-RS resource groups. It may also be understood as a one-to-one correspondence between pieces of combination coefficient indication information and CSI-RS resource groups. In addition, each CSI-RS resource group includes at least one CSI-RS resource, and each CSI-RS resource corresponds to one TRP, that is, the terminal reports the piece of combination coefficient indication information corresponding to the CSI-RS resource in each CSI-RS resource group.

For example, the combination coefficient indication information is $\tilde{W}_{2,g}$, representing a combination coefficient matrix. In $\widetilde{W}_{2,g} \mathbb{C}^{2L_g \times M_g}$, $N_g$ represents a number of CSI-RS resources in the $g^{th}$ group, $L_g$ represents a number of CSI-RS ports selected for the $g^{th}$ group, $M_g$ represents a number of FD basis vectors selected for the $g^{th}$ group, and $\mathbb{C}^{2L_g \times M_g}$ represents a complex matrix with dimensions of $2L_g \times M_g$.

Optionally, this embodiment of the disclosure includes 4 CSI-RS resources, where CSI-RS resource 1 and CSI-RS resource 2 are the $1^{st}$ CSI-RS resource group, CSI-RS resource 3 and CSI-RS resource 4 are the $2^{nd}$ CSI-RS resource group, and the CSI-RS resource 1, the CSI-RS resource 2, the CSI-RS resource 3 and the CSI-RS resource 4 correspond to TRP1, TRP2, TRP3 and TRP4 respectively, which may also be understood as TRP1 and TRP2 being the $1^{st}$ CSI-RS resource group, TRP3 and TRP4 being the $2^{nd}$ CSI-RS resource group. The number of SD basis vectors is $L_1 = L_2 = 4$, $L_3 = L_4 = 3$. The number of FD basis vectors corresponding to one of the two groups is $M_1 = 4$, the number of FD basis vectors corresponding to the other of the two groups is $M_2 = 7$, $\widetilde{W}_{2,1} \in \mathbb{C}^{16 \times 4}$, and $\widetilde{W}_{2,2} \in \mathbb{C}^{12 \times 3}$.

It should be noted that this embodiment of the disclosure is described by taking grouping CSI-RS resources to obtain G CSI-RS resource groups as an example. In another embodiment, G first groups may be obtained by grouping a plurality of port groups in one CSI-RS resource.

In an embodiment of the disclosure, the CSI sent by the terminal to the network device indicates G pieces of combination coefficient indication information, which actually correspond to the number of G first groups. It may also be understood as a one-to-one correspondence between pieces of combination coefficient indication information and first groups. In addition, each first group includes at least one port group, and each port group corresponds to one TRP, that is, the terminal reports combination coefficient indication information corresponding to the port group in each first group.

For example, the combination coefficient indication information is $\tilde{W}_{2,g}$, representing a combination coefficient matrix. In $\widetilde{W}_{2,g} \mathbb{C}^{2L_g \times M_g}$, $N_g$ represents a number of port groups in the $g^{th}$ group, $L_g$ represents a number of CSI-RS ports selected for the $g^{th}$ group, $M_g$ represents a number of FD basis vectors selected for the $g^{th}$ group, and $\mathbb{C}^{2L_g \times M_g}$ represents a complex matrix with dimensions of $2L_g \times M_g$.

Optionally, this embodiment of the disclosure includes 4 port groups, where port group 1 and port group 2 are the $1^{st}$ first group, port group 3 and port group 4 are the $2^{nd}$ first group, and the port group 1, the port group 2, the port group 3 and the port group 4 correspond to TRP1, TRP2, TRP3 and TRP4 respectively, which may also be understood as TRP1 and TRP2 being the $1^{st}$ first group, TRP3 and TRP4 being the $2^{nd}$ first group. The number of SD basis vectors is $L_1 = L_2 = 4$, $L_3 = L_4 = 3$. The number of FD basis vectors corresponding to one of the two groups is $M_1 = 4$, the number of FD basis vectors corresponding to the other of the two groups is $M_2 = 7$, $\widetilde{W}_{2,1} \in \mathbb{C}^{16 \times 4}$, and $\widetilde{W}_{2,2} \in \mathbb{C}^{12 \times 3}$.

(3) G pieces of FD basis vector indication information.

In an embodiment of the disclosure, the CSI sent by the terminal to the network device indicates G pieces of FD basis vectors, which actually correspond to the number of G CSI-RS resource groups. It may also be understood as a one-to-one correspondence between pieces of FD basis vector indication information and CSI-RS resource groups. In addition, each CSI-RS resource group includes at least one CSI-RS resource, and each CSI-RS resource corresponds to one TRP, that is, the terminal reports the FD basis vector corresponding to the CSI-RS resource in each CSI-RS resource group.

For example, the FD basis vector is $W_{f,g}^H$, representing a FD basis vector matrix. In $W_{f,g}^H \in \mathbb{C}^{N_3 \times M_g}$, $N$ represents a number of CSI-RS resources, $M_g$ represents a number of FD basis vectors selected for the $g^{th}$ group, $H$ is a conjugate transpose, and $\mathbb{C}^{N_3 \times M_g}$ represents a complex matrix with dimensions of $N_3 \times M_g$.

Optionally, this embodiment of the disclosure includes 4 CSI-RS resources, where CSI-RS resource 1 and CSI-RS resource 2 are the $1^{st}$ CSI-RS resource group, CSI-RS resource 3 and CSI-RS resource 4 are the $2^{nd}$ CSI-RS resource group, and the CSI-RS resource 1, the CSI-RS resource 2, the CSI-RS resource 3 and the CSI-RS resource 4 correspond to TRP1, TRP2, TRP3 and TRP4 respectively, which may also be understood as TRP1 and TRP2 being the $1^{st}$ CSI-RS resource group, TRP3 and TRP4 being the $2^{nd}$ CSI-RS resource group. The number of SD basis vectors is $L_1 = L_2 = 4$, $L_3 = L_4 = 3$. The number of FD basis vectors corresponding to one of the two groups is $M_1 = 4$, the number of FD basis vectors corresponding to the other of the two groups is $M_2 = 7$, $W_{f,1} \in \mathbb{C}^{N_3 \times 4}$, and $W_{f,2} \in \mathbb{C}^{N_3 \times 7}$.

It should be noted that this embodiment of the disclosure is described by taking grouping CSI-RS resources to obtain G CSI-RS resource groups as an example. In another embodiment, G first groups may be obtained by grouping a plurality of port groups in one CSI-RS resource.

In an embodiment of the disclosure, the CSI sent by the terminal to the network device indicates G FD basis vectors. The G pieces of FD basis vector indication information actually corresponds to the number of G first groups, which may also be understood as a one-to-one correspondence between pieces of FD basis vector indication information and first groups. In addition, each first group includes at least one port group, and each port group corresponds to one TRP, that is, the terminal reports the FD basis vector corresponding to the port group in each first group.

For example, the FD basis vector is $W_{f,g}^H$, representing a FD basis vector matrix. In $W_{f,g}^H \in \mathbb{C}^{N_3 \times M_g}$, $H$ is a conjugate transpose, $N_g$ represents a number of CSI-RS resources or a number of port groups in the $g^{th}$ group, H is the conjugate transpose, $N_3$ represents a number of PMI subbands, $M_g$ represents a number of FD basis vectors selected for the $g^{th}$ group, and $\mathbb{C}^{N_3 \times M_g}$ represents a complex matrix with dimensions of $N_3 \times M_g$.

Optionally, this embodiment of the disclosure includes 4 port groups, where port group 1 and port group 2 are the $1^{st}$ first group, port group 3 and port group 4 are the $2^{nd}$ first group, and the port group 1, the port group 2, the port group 3 and the port group 4 correspond to TRP1, TRP2, TRP3 and TRP4 respectively, which may also be understood as TRP1 and TRP2 being the $1^{st}$ first group, TRP3 and TRP4 being the $2^{nd}$ first group. The number of SD basis vectors is $L_1 = L_2 = 4$, $L_3 = L_4 = 3$. The number of FD basis vectors corresponding to one of the two groups is $M_1 = 4$, the number of FD basis vectors corresponding to the other of the two groups is $M_2 = 7$, $W_{f,1} \in \mathbb{C}^{N_3 \times 4}$, and $W_{f,1} \in \mathbb{C}^{N_3 \times 7}$.

It should be noted that the SD basis vector indication information, the combination coefficient indication information and the FD basis vector indication information indicated by the CSI in this embodiment of the disclosure correspond to the CSI-RS resource group or the first group in the port group at the same time.

It should be noted that this embodiment of the disclosure is described by taking specific information indicated by the CSI sent by the terminal to the network device as an example. In another embodiment, the network device needs to configure codebook parameter information for the terminal first, and then the terminal sends CSI to the network device according to the codebook parameter information.

The codebook parameter information configured by the network device for the terminal includes at least one of: a number of SD basis vectors corresponding to each CSI-RS resource, a number of FD basis vectors corresponding to the CSI-RS resource, a number of PMI subbands, or a number of transmitting antenna ports. Alternatively, the codebook parameter information configured by the network device for the terminal includes at least one of: a number of SD basis vectors corresponding to each port group, a number of FD basis vectors corresponding to the port group, a number of PMI subbands, or a number of transmitting antenna ports.

In some embodiments, after the network device configures codebook parameter information for the terminal, the terminal determines parameters indicated by the CSI according to the configured codebook parameter information, and then sends the CSI to the network device.

It should be noted that, in the second situation, the codebook structure is expressed by following formulas:

$$W = \begin{bmatrix} W_{1,1}\widetilde{W}_{2,1}W_{f,1}^H \\ \vdots \\ W_{1,g}\widetilde{W}_{2,g}W_{f,g}^H \end{bmatrix}, \ W_{1,g} \in \mathbb{C}^{N_g N_t \times 2L_g}, \ \widetilde{W}_{2,g}\mathbb{C}^{2L_g \times M_g}, \ W_{f,g}^H \in \mathbb{C}^{N_3 \times M_g}$$

where $W$ represents the codebook structure, $W_{1,g}$ represents a matrix consisting of SD basis vectors or unit basis vectors for port selection corresponding to CSI-RS resources in the $g^{th}$ group, $N_g$ represents a number of CSI-RS resources in the $g^{th}$ group, $N_t$ represents a number of transmitting antenna ports, $W_{f,g}$ represents a matrix consisting of $M_g$ FD basis vectors corresponding to the CSI-RS resource in the $g^{th}$ group, $M_g$ represents a number of FD basis vectors selected for the $g^{th}$ group, $\breve{W}_{2,g}$ represents a matrix consisting of combination coefficients corresponding to CSI-RS resources in the $g^{th}$ group, $L_g$ represents a number of SD basis vectors or a number of CSI-RS ports selected for the $g^{th}$ group, G represents being the same as the number of CSI-RS resource groups in the plurality of CSI-RS resources, G is a positive integer greater than 1, $H$ is a conjugate transpose, $N_3$ represents a number of PMI subbands, $\mathbb{C}^{X \times Y}$ represents a complex matrix with dimensions of X rows and Y columns.

Alternatively, where $W$ represents the codebook structure, $W_{1,g}$ represents a matrix consisting of SD basis vectors or unit basis vectors for port selection corresponding to port groups in the $g^{th}$ group, $N_g$ represents a number of port groups in the $g^{th}$ group, $N_t$ represents a number of transmitting antenna ports, $W_{f,g}$ represents a matrix consisting of $M_g$ FD basis vectors corresponding to port groups in the $g^{th}$ group, $M_g$ represents a number of FD basis vectors selected for the $g^{th}$ group, $\tilde{W}_{2,g}$ represents a matrix consisting of combination coefficients corresponding to port groups in the $g^{th}$ group, $L_g$ represents a number of SD basis vectors or a number of CSI-RS ports selected for the $g^{th}$ group, G represents being the same as the number of first groups among the port groups, G is a positive integer greater than 1, $H$ is a conjugate transpose, $N_3$ represents a number of PMI subbands, and $\mathbb{C}^{X \times Y}$ represents a complex matrix with dimensions of X rows and Y columns.

In the third type of information, the CSI indicates at least one of following information (1)-(3).

(1) SD basis vector indication information or port selection indication information, and the SD basis vector indication information or the port selection indication information corresponds to a plurality of CSI-RS resources.

The SD basis vector indication information is represented by a SD basis vector. The SD basis vector indication information indicates N*$N_t$ SD basis vectors selected by the terminal. The port selection indication information indicates N*$N_t$ CSI-RS ports selected by the terminal, where N represents a number of CSI-RS resources or a number of port groups, and $N_t$ represents a number of transmitting antenna ports.

In addition, the CSI sent by the terminal to the network device indicates SD basis vector indication information or port selection indication information, which actually corresponds to the number of CSI-RS resources. It may also be understood as the SD basis vector indication information or the port selection indication information being applied to a plurality of CSI-RS resources. In addition, each CSI-RS resource corresponds to one TRP, that is, the SD basis vector indication information or the port selection indication information corresponds to N TRPs, and the terminal reports the SD basis vector indication information or the port selection indication information corresponding to the N TRPs.

For example, the SD basis vector is used for explanation. The SD basis vector is $W_1$, where $W_1 \in \mathbb{C}^{NN_t \times 2L}$ or $W_1 \in \mathbb{C}^{NP \times 2L}$. $W_1$ represents a matrix consisting of L SD basis vectors corresponding to the plurality of CSI-RS resources, N represents a number of CSI-RS resources, $N_t$ represents a number of transmitting antenna ports, L represents a number of SD basis vectors or a number of CSI-RS ports corresponding to the CSI-RS resources, P is a number of CSI-RS ports, $\mathbb{C}^{NN_t \times 2L}$ represents a complex matrix with dimensions of $NN_t \times 2L$, and $\mathbb{C}^{NP \times 2L}$ represents a complex matrix with dimensions of $NP \times 2L$.

It should be noted that this embodiment of the disclosure is described by taking SD basis vector indication information or port selection indication information corresponding to CSI-RS resources as an example. In another embodiment, SD basis vector indication information or port selection indication information may also correspond to a plurality of port groups in one CSI-RS resource.

The CSI indicates SD basis vector indication information or port selection indication information, and the SD basis vector indication information or the port selection indication information corresponds to the plurality of port groups.

In addition, the CSI sent by the terminal to the network device indicates the SD basis vector indication information or the port selection indication information, which actually corresponds to the number of port groups. It may also be understood as the SD basis vector indication information or the port selection indication information being applied to the plurality of port groups. In addition, each port group corresponds to one TRP, that is, the SD basis vector indication information or the port selection indication information corresponds to N TRPs, and the terminal reports a SD basis vector corresponding to the N TRPs.

For example, the SD basis vector is used for explanation. The SD basis vector is $W_1$, where $W_1 \in \mathbb{C}^{NN_t \times 2L}$ or $W_1 \in \mathbb{C}^{NP \times 2L}$. $W_1$ represents a matrix consisting of L SD basis vectors corresponding to the plurality of port groups, N represents a number of port groups, $N_t$ represents a number of transmitting antenna ports, L represents a number of SD basis vectors or a number of CSI-RS ports corresponding to the CSI-RS resources, P is a number of CSI-RS ports, $\mathbb{C}^{NN_t \times 2L}$ represents a complex matrix with dimensions of $NN_t \times 2L$, and $\mathbb{C}^{NP \times 2L}$ represents a complex matrix with dimensions of $NP \times 2L$.

(2) combination coefficient indication information, and the combination coefficient indication information corresponds to a plurality of CSI-RS resources.

In an embodiment of the disclosure, the CSI sent by the terminal to the network device indicates combination coefficient indication information, which is actually shared by the plurality of CSI-RS resources. It may also be understood as combination coefficient indication information corresponding to the plurality of CSI-RS resources. In addition, each CSI-RS resource corresponds to one TRP, that is, the N CSI-RS resources correspond to N TRPs, and the terminal reports combination coefficient indication information shared by the plurality of TRPs.

For example, the combination coefficient indication information is $\tilde{W}_2$, representing a combination coefficient matrix, where $\widetilde{W}_2 \in \mathbb{C}^{2L \times M}$. N represents a number of CSI-RS resources, L represents a number of SD basis vectors or a number of CSI-RS ports corresponding to the CSI-RS resources, M represents a number of FD basis vectors corresponding to the CSI-RS resources, and $\mathbb{C}^{2L \times M}$ represents a complex matrix with dimensions of $2L \times M$.

Optionally, if the number of CSI-RS resources is 2, the number of SD basis vectors corresponding to each CSI-RS resource is 4, $L_i$ is 4, and the number of FD basis vectors corresponding to at least two CSI-RS resources is 4, then M is 4, and $\widetilde{W}_2 \in \mathbb{C}^{12 \times 4}$.

It should be noted that this embodiment of the disclosure is described by taking combination coefficient indication information corresponding to one CSI-RS resource as an example. In another embodiment, combination coefficient indication information may also correspond to a plurality of port groups in one CSI-RS resource.

In an embodiment of the disclosure, the CSI sent by the terminal to the network device includes combination coefficient indication information, which is actually shared by the plurality of port groups. It may also be understood as combination coefficient indication information corresponding to the plurality of port groups. In addition, each port group corresponds to one TRP, that is, the N port groups correspond to N TRPs, and the terminal reports combination coefficient indication information shared by the plurality of TRPs.

For example, the combination coefficient indication information is $\tilde{W}_2$, represents a combination coefficient matrix, where $\widetilde{W}_2 \in \mathbb{C}^{2L \times M}$. N represents a number of port groups, L represents a number of SD basis vectors or a number of CSI-RS ports corresponding to the CSI-RS resources, and M represents a number of FD basis vectors corresponding to the port groups.

Optionally, if the number of port groups is 2, and the number of SD basis vectors corresponding to each port group is 4, $L_i$ is 4, and the number of FD basis vectors corresponding to at least two port groups is 4, then $M$ is 4, and $\widetilde{W}_2 \in \mathbb{C}^{12 \times 4}$.

(3) FD basis vector indication information, and the FD basis vector indication information corresponds to the plurality of CSI-RS resources.

The FD basis vector indication information indicates M FD basis vectors selected by the terminal. In an embodiment of the disclosure, the CSI sent by the terminal to the network device indicates FD basis vector indication information, which is actually shared by the plurality of CSI-RS resources. It may also be understood as FD basis vector indication information corresponding to the plurality of CSI-RS resources. In addition, each CSI-RS resource corresponds to one TRP, that is, the N CSI-RS resources correspond to N TRPs, and the terminal reports FD basis vector indication information shared by the plurality of TRPs.

For example, the FD basis vector indication information is $W_f$, representing a FD basis vector matrix, where

$W_f \in \mathbb{C}^{N_3 \times M}$. $N_3$ represents a number of PMI subbands, $M$ represents a number of FD basis vectors corresponding to the CSI-RS resources, and $\mathbb{C}^{N_3 \times M}$ represents a complex matrix with dimensions of $N_3 \times M$.

Optionally, if the number of FD basis vectors corresponding to at least two CSI-RS resources is 4, then $M$ is 4, and $W_f \in \mathbb{C}^{N_3 \times 4}$.

It should be noted that this embodiment of the disclosure is described by taking SD basis vector indication information corresponding to one CSI-RS resource as an example. In another embodiment, SD basis vector indication information may also correspond to a plurality of port groups in one CSI-RS resource.

In an embodiment of the disclosure, the CSI sent by the terminal to the network device includes FD basis vector indication information, which is actually shared by the plurality of port groups. It may also be understood as FD basis vector indication information corresponding to the plurality of port groups. In addition, each port group corresponds to one TRP, that is, the N port groups correspond to N TRPs, and the terminal reports FD basis vector indication information shared by the plurality of TRPs.

For example, the FD basis vector indication information is $W_f$, representing a FD basis vector matrix, where $W_f \in \mathbb{C}^{N_3 \times M}$. $N_3$ represents a number of PMI subbands, and $M$ represents a number of FD basis vectors corresponding to the port group, and $\mathbb{C}^{N_3 \times M}$ represents a complex matrix with dimensions of $N_3 \times M$.

Optionally, if the number of FD basis vectors corresponding to at least two port groups is 4, then M is 4, and $W_f \in \mathbb{C}^{N_3 \times 4}$.

It should be noted that this embodiment of the disclosure is described by taking specific information indicated by the CSI sent by the terminal to the network device as an example. In another embodiment, the network device needs to configure codebook parameter information for the terminal first, and then the terminal sends CSI to the network device according to the codebook parameter information.

The codebook parameter information configured by the network device for the terminal includes at least one of: a number of SD basis vectors corresponding to each CSI-RS resource, a number of FD basis vectors corresponding to the CSI-RS resource, a number of PMI subbands, or a number of transmitting antenna ports. Alternatively, the codebook parameter information configured by the network device for the terminal includes at least one of: a number of SD basis vectors corresponding to each port group, a number of FD basis vectors corresponding to the port group, a number of PMI subbands, or a number of transmitting antenna ports.

In some embodiments, after the network device configures codebook parameter information for the terminal, the terminal determines parameters indicated by the CSI according to the configured codebook parameter information, and then sends the CSI to the network device.

It should be noted that, in the third situation, the codebook structure is expressed by following formulas:

$$W = W_1 \widetilde{W}_2 W_f^H, \quad W_1 \in \mathbb{C}^{N N_t \times 2L}, \text{ or } W_1 \in \mathbb{C}^{NP \times 2L}, \quad \widetilde{W}_2 \in \mathbb{C}^{2L \times M}, \quad W_f \in \mathbb{C}^{N_3 \times M}$$

where $W$ represents the codebook structure, $N$ represents the number of the CSI-RS resources, $N_t$ represents a number of transmitting antenna ports, $L$ represents a number of SD basis vectors or CSI-RS ports corresponding to the CSI-RS resources, $M$ represents a number of FD basis vectors corresponding to the CSI-RS resources, $N_3$ represents a number of PMI subbands, $W_1$ represents a matrix consisting of $L$ SD basis vectors or unit basis vectors for port selection for the CSI-RS resources, $\tilde{W}_2$ represents a matrix consisting of the combination coefficient indication information, $W_f$ represents a matrix consisting of M frequency domain basis vectors, H is a conjugate transpose, and $\mathbb{C}^{X \times Y}$ represents a complex matrix with dimensions of X rows and Y columns.

It should be noted that all the above three ways are described by taking the combination coefficient indication information as an example. In another embodiment, the combination coefficient indication information includes a plurality of types of information.

Optionally, the combination coefficient indication information includes non-zero coefficient information and non-zero coefficient position information, the non-zero coefficient information indicates a non-zero coefficient in the combination coefficient indication information, and the non-zero coefficient position information indicates a position of the non-zero coefficient in the combination coefficient indication information.

In some embodiments, the network device receives CSI from the terminal, in which the CSI includes the SD basis vector indication information or the port selection indication information, the combination coefficient indication information and the FD basis vector indication information.

The SD basis vector indication information or the port selection indication information, the combination coefficient indication information and the FD basis vector indication information are determined by the terminal according to the channel information or the valid channel information corresponding to each CSI-RS resource and the codebook parameter information.

It should be noted that this embodiment of the disclosure is described by taking specific information indicated by the CSI sent by the terminal to the network device as an example. In another embodiment, the network device needs to configure codebook parameter information for the terminal first, and then the terminal sends CSI to the network device according to the codebook parameter information.

The codebook parameter information configured by the network device for the terminal includes at least one of: a number of SD basis vectors corresponding to each CSI-RS resource, a number of FD basis vectors corresponding to the CSI-RS resource, a number of PMI subbands, or a number of transmitting antenna ports. Alternatively, the codebook parameter information configured by the network device for the terminal includes at least one of: a number of SD basis vectors corresponding to each port group, a number of FD basis vectors corresponding to the port group, a number of PMI subbands, or a number of transmitting antenna ports.

In some embodiments, after the network device configures codebook parameter information for the terminal, the terminal determines parameters indicated by the CSI according to the configured codebook parameter information, and then sends the CSI to the network device.

In the solution according to this embodiment of the disclosure, the parameters indicated by the CSI include a plurality of situations, which expands the ways of the indicated parameters and thus improves the diversity of the indicated parameters.

Based on the embodiment illustrated in FIG. 7, the network device configures codebook parameters for the terminal via configuration information. The network device sends the configuration information to the terminal. The configuration information is used to configure codebook parameter information, and the codebook parameter information is used by the terminal to determine the CSI.

In an embodiment of the disclosure, the network device sends configuration information to the terminal, and configures the codebook parameter information for the terminal via the configuration information. Subsequently, the terminal can send the CSI to the network device based on the codebook parameter information.

In some embodiments, before the network device sends the configuration information to the terminal, the network device also determines the codebook structure first, so as to configure, based on the codebook structure, the terminal with codebook parameter information matching the codebook structure.

Optionally, the terminal determines the codebook structure, and then indicates the determined codebook structure to the network device via indication information.

The terminal sends first indication information to the network device, in which the first indication information indicates an adopted codebook structure.

Optionally, the network device determines the codebook structure, and then indicates the codebook structure to the terminal via indication information.

The terminal receives second indication information from the network device, in which the second indication information indicates an adopted codebook structure.

It should be noted that the embodiments of the disclosure are described by taking the indication information indicating the codebook structure as an example. In another embodiment, the codebook structure between the network device and the terminal is agreed upon by a protocol, and the network device directly configures the terminal with codebook parameter information corresponding to the agreed codebook structure.

In the solution according to this embodiment of the disclosure, after the network device determines the codebook structure, the network device configures codebook parameter information for the terminal according to the codebook structure, which improves the accuracy of the codebook parameter information configured by the network device.

FIG. 8 illustrates a block diagram of an apparatus for determining precoding based on a codebook according to an exemplary embodiment of the disclosure. Referring to FIG. 8, the apparatus includes a determination module 801 and a sending module 802.

The determination module 801 is configured to determine channel information corresponding to each CSI-RS resource based on at least one CSI-RS resource.

The sending module 802 is configured to send, according to the channel information determined corresponding to each CSI-RS resource and codebook parameter information, CSI to a network device. The CSI includes indication information corresponding to a plurality of CSI-RS resources and indication information corresponding to each CSI-RS resource, or the CSI includes indication information corresponding to a plurality of port groups in one CSI-RS resource and indication information corresponding to each port group, the port group includes a plurality of CSI-RS ports corresponding to the CSI-RS resource.

The CSI is configured to determine the precoding of the terminal based on a codebook structure corresponding to the codebook parameter information.

In some embodiments, the CSI includes at least one of following information: N pieces of SD basis vector indication information or N pieces of port selection indication information, where N is the same as a number of the CSI-RS resources or the same as a number of the port groups, and N is a positive integer greater than 1; one piece of combination coefficient indication information, in which the combination coefficient indication information corresponds to the plurality of CSI-RS resources or the plurality of port groups in the one CSI-RS resource; or one piece of FD basis vector indication information, in which the one piece of FD basis vector indication information corresponds to the plurality of CSI-RS resources or the plurality of port groups in the one CSI-RS resource.

In some embodiments, the CSI includes at least one of following information: G pieces of SD basis vector indication information or G pieces of port selection indication information; G pieces of combination coefficient indication information; or G pieces of FD basis vector indication information. G is the same as a number of CSI-RS resource groups in the plurality of CSI-RS resources, and the CSI-RS resource group includes at least one CSI-RS resource, or G is the same as a number of first groups among the plurality of port groups in the one CSI-RS resource, and the first group includes at least one port group, and G is a positive integer greater than 1.

In some embodiments, the CSI includes at least one of following information: one piece of SD basis vector indication information or one piece of port selection indication information, in which the SD indication information or the port selection indication information corresponds to the plurality of CSI-RS resources, or the plurality of port groups in the one CSI-RS resource; one piece of combination coefficient indication information, in which the combination coefficient indication information corresponds to the plurality of CSI-RS resources or the plurality of port groups in the one CSI-RS resource; or one piece of FD basis vector indication information, in which the FD basis vector indication information corresponds to the plurality of CSI-RS resources or the plurality of port groups in the one CSI-RS resource.

In some embodiments, the combination coefficient indication information includes non-zero coefficient information and non-zero coefficient position information, the non-zero coefficient information indicates a non-zero coefficient in the combination coefficient indication information, and the non-zero coefficient position information indicates a position of the non-zero coefficient in the combination coefficient indication information.

In some embodiments, the determination module 801 is configured to determine, according to channel information or valid channel information corresponding to each CSI-RS resource and the codebook parameter information, the SD basis vector indication information or the port selection indication information, the combination coefficient indication information and the FD basis vector indication information.

The sending module is also configured to send the CSI to the network device, in which the CSI includes the SD basis vector indication information or the port selection indication information, the combination coefficient indication information and the FD basis vector indication information.

In some embodiments, referring to FIG. 9, the apparatus further includes: a receiving module 803 is configured to receive configuration information from the network device, in which the configuration information is used to configure the codebook parameter information, and the codebook parameter information is used by the terminal to determine the CSI.

In some embodiments, the sending module 802 is further configured to: send first indication information to the network device, in which the first indication information indicates an adopted codebook structure; or receive second indication information from the network device, in which the second indication information indicates an adopted codebook structure.

In some embodiments, the CSI-RS resource is a CMR.

In some embodiments, different CMRs belong to the same CSI-RS resource set or different CSI-RS resource sets.

In some embodiments, each of the plurality of CSI-RS resources corresponds to one TRP, and at least two TRPs are configured for CJT; or each of the plurality of port groups in the one CSI-RS resource corresponds to one TRP, and at least two TRPs are configured for CJT.

It should be noted that the apparatus according to the above embodiments, when implementing the functions of the apparatus, only the division of the above-mentioned functional modules is taken as an example. In actual applications, the above-mentioned functions can be assigned to different functional modules as needed. That is, the internal structure of the apparatus can be divided into different functional modules to complete all or part of the functions described above. In addition, the apparatus and the method according to the above embodiments belong to the same concept, and the specific implementations of the apparatus are detailed in the method embodiments, which will not be repeated here.

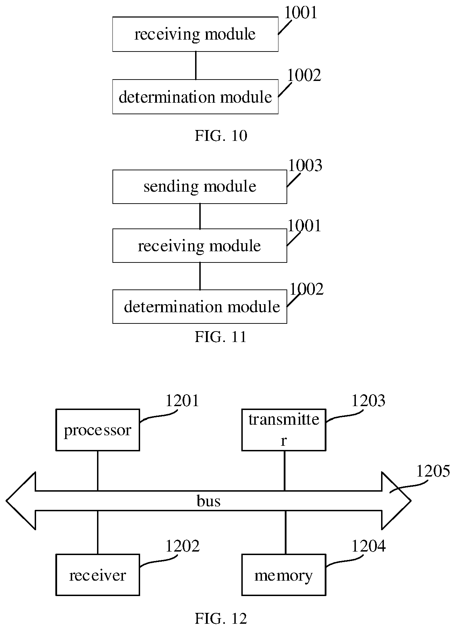

FIG. 10 illustrates a block diagram of an apparatus for determining precoding based on a codebook according to an exemplary embodiment of the disclosure. Referring to FIG. 10, the apparatus includes a receiving module 1001 and a determination module 1002.

The receiving module 1001 is configured to receive CSI from a terminal, in which the CSI includes indication information corresponding to a plurality of CSI-RS resources and indication information corresponding to each CSI-RS resource, or the CSI includes indication information corresponding to a plurality of port groups in one CSI-RS resource and indication information corresponding to each port group, the port group includes a plurality of CSI-RS ports corresponding to the CSI-RS resource, and the CSI is determined by a terminal based on channel information corresponding to each CSI-RS resource in at least one CSI-RS resource and codebook parameter information.

The determination module 1002 is configured to determine, according to the CSI and a codebook structure corresponding to the codebook parameter information, precoding of the terminal.

In some embodiments, the CSI includes at least one of following information: N pieces of SD basis vector indication information or N pieces of port selection indication information, where N is the same as a number of the CSI-RS resources or a number of the port groups, and N is a positive integer greater than 1; one piece of combination coefficient indication information, in which the one piece of combination coefficient indication information corresponds to the plurality of CSI-RS resources, or corresponds to the plurality of port groups in the one CSI-RS resource; one piece of FD basis vector indication information, in which the one piece of FD basis vector indication information corresponds to the plurality of CSI-RS resources or the plurality of port groups in the one CSI-RS resource.

In some embodiments, the codebook structure is expressed by following formulas:

$$W = \begin{bmatrix} W_{1,1} & & \\ & \ddots & \\ & & W_{1,N} \end{bmatrix} \widetilde{W}_2 W_f^H, \quad W_{1,i} \in \mathbb{C}^{N_t \times 2L_i} \text{ or } W_{1,i} \in \mathbb{C}^{P \times 2L_i}, \widetilde{W}_2 \in \mathbb{C}^{\Sigma_{i=1}^N 2L_i \times M}, W_f \in \mathbb{C}^{N_3 \times M}$$

where $W$ represents the codebook structure, $N$ represents the number of the CSI-RS resources or the number of the port groups, $N_t$ represents a number of transmitting antenna ports, $P$ is a number of CSI-RS ports, $L_i$ represents a number of SD basis vectors or a number of CSI-RS ports corresponding to an $i^{th}$ CSI-RS resource, $i \in \{1, ..., N\}$, or a number of SD basis vectors or a number of CSI-RS ports corresponding to an $i^{th}$ port group, i E {1, ..., N}, M represents a number of FD basis vectors corresponding to the $i^{th}$ CSI-RS resource, or a number of FD basis vectors corresponding to the $i^{th}$ port group, $N_3$ represents a number of PMI subbands, $W_{1,i}$ represents a matrix consisting of $L_i$ SD basis vectors or unit basis vectors for port selection corresponding to the $i^{th}$ CSI-RS resource, or a matrix consisting of $L_i$ SD basis vectors or unit basis vectors for port selection corresponding to the $i^{th}$ port group, $\widetilde{W}_2$ represents a matrix consisting of the combination coefficient indication information, $W_f$ represents a matrix consisting of M FD basis vectors, $H$ is a conjugate transpose, and $\mathbb{C}^{X \times Y}$ represents a complex matrix with dimensions of X rows and Y columns.

In some embodiments, the CSI includes at least one of following information: G pieces of SD basis vector indication information or G pieces of port selection indication information; G pieces of combination coefficient indication information; or G pieces of FD basis vector indication information. G is the same as a number of CSI-RS resource groups in the plurality of CSI-RS resources, and the CSI-RS resource group includes at least one CSI-RS resource, or G is the same as a number of first groups among the plurality of port groups in the one CSI-RS resource, and the first group includes at least one port group, and G is a positive integer greater than 1.

In some embodiments, the codebook structure is expressed by following formulas:

$$W = \begin{bmatrix} W_{1,1} \widetilde{W}_{2,1} W_{f,1}^H \\ \vdots \\ W_{1,g} \widetilde{W}_{2,g} W_{f,g}^H \end{bmatrix}, \quad W_{1,g} \in \mathbb{C}^{N_g N_t \times 2L_g}, \quad \widetilde{W}_{2,g} \mathbb{C}^{2L_g \times M_g}, \quad W_{f,g}^H \in \mathbb{C}^{N_3 \times M_g}$$

where the W represents the codebook structure, $W_{1,g}$ represents a matrix consisting of SD basis vectors or unit basis vectors for port selection corresponding to CSI-RS resources in a $g^{th}$ group, g E {1, ..., G}, or a matrix consisting of SD basis vectors or unit basis vectors for port selection corresponding to port groups in a $g^{th}$ group, $N_g$ represents a number of CSI-RS resources or a number of port groups in the $g^{th}$ group, $N_t$ represents a number of transmitting antenna ports, $W_{f,g}$ represents a matrix consisting of $M_g$ FD basis vectors corresponding to CSI-RS resources in the $g^{th}$ group, or a matrix consisting of $M_g$ FD basis vectors corresponding to port groups in the $g^{th}$ group, $M_g$ represents a number of FD basis vectors selected for the $g^{th}$ group, $\widetilde{W}_{2,g}$ represents a matrix consisting of combination coefficients corresponding to CSI-RS resources in the $g^{th}$ group, or a matrix consisting of combination coefficients corresponding to port groups in the $g^{th}$ group, $L_g$ represents a number of SD basis vectors or a number of CSI-RS ports selected for the $g^{th}$ group, G represents being the same as the number of CSI-RS resource groups in the plurality of CSI-RS resources or the number of first groups among the port groups, G is a positive integer greater than 1, $N_3$ represents a number of PMI subbands, $H$ is a conjugate transpose, and $\mathbb{C}^{X \times Y}$ represents a complex matrix with dimensions of X rows and Y columns.

In some embodiments, the CSI includes at least one of following information: one piece of SD basis vector indication information, in which the SD basis vector indication information corresponds to the plurality of CSI-RS resources or the plurality of port groups in the one CSI-RS resource; one piece of combination coefficient indication information, in which the one piece of combination coefficient indication information corresponds to the plurality of CSI-RS resources or the plurality of port groups in the one CSI-RS resource; or one piece of FD basis vector indication information, in which the one piece of FD basis vector indication information corresponds to the plurality of CSI-RS resources or the plurality of port groups in the one CSI-RS resource.

In some embodiments, the codebook structure is expressed by following formulas:

$$W = W_1 \widetilde{W}_2 W_f^H, \quad W_1 \in \mathbb{C}^{NN_t \times 2L}, \text{or } W_1 \in \mathbb{C}^{NP \times 2L}, \quad \widetilde{W}_2 \in \mathbb{C}^{2L \times M}, \quad W_f \in \mathbb{C}^{N_3 \times M}$$

where $W$ represents the codebook structure, $N$ represents the number of the CSI-RS resources or the number of the port groups, $N_t$ represents a number of transmitting antenna ports, $L$ represents a number of SD basis vectors or CSI-RS ports corresponding to the CSI-RS resources, or a number of SD basis vectors or CSI-RS ports corresponding to the port groups, $M$ represents a number of FD basis vectors corresponding to the CSI-RS resources, or a number of FD basis vectors corresponding to the port groups, $N_3$ represents a number of PMI subbands, $W_1$ represents a matrix consisting of $L$ SD basis vectors or unit basis vectors for port selection for the CSI-RS resources, or a matrix consisting of $L$ SD basis vectors or unit basis vectors for port selection for the port groups, $\widetilde{W}_2$ represents a matrix consisting of the combination coefficient indication information, $W_f$ represents a matrix consisting of M FD basis vectors, $H$ is a conjugate transpose, and $\mathbb{C}^{X \times Y}$ represents a complex matrix with dimensions of X rows and Y columns.

In some embodiments, the combination coefficient indication information includes non-zero coefficient information and non-zero coefficient position information, the non-zero coefficient information indicates a non-zero coefficient in the combination coefficient indication information, and the non-zero coefficient position information indicates a position of the non-zero coefficient in the combination coefficient indication information.

In some embodiments, the receiving module 1001 is further configured to receive the CSI from the terminal, in which the CSI includes the SD basis vector indication information, the combination coefficient indication information and the FD basis vector indication information. The SD basis vector indication information or the port selection indication information, the combination coefficient indication information and the FD basis vector indication information are determined by the terminal according to channel information or valid channel information corresponding to each CSI-RS resource and the codebook parameter information.

In some embodiments, referring to FIG. 11, the apparatus further comprises: a sending module 1003, configured to send configuration information to the terminal, in which the configuration information is used to configure codebook parameter information, and the codebook parameter information is used by the terminal to determine the CSI.

In some embodiments, the receiving module 1001 is further configured to: receive first indication information from a terminal, in which the first indication information indicates an adopted codebook structure; or send second indication information to the terminal, in which the second indication information indicates an adopted codebook structure.

In some embodiments, the CSI-RS resource is a CMR.

In some embodiments, different CMRs belong to the same CSI-RS resource set or different CSI-RS resource sets.

In some embodiments, each of the plurality of CSI-RS resources corresponds to one TRP, and at least two TRPs are configured for CJT; or each of the plurality of port groups in the one CSI-RS resource corresponds to one TRP, and at least two TRPs are configured for CJT.

It should be noted that the apparatus according to the above embodiments, when implementing the functions of the apparatus, only the division of the above-mentioned functional modules is taken as an example. In actual applications, the above-mentioned functions can be assigned to different functional modules as needed. That is, the internal structure of the apparatus can be divided into different functional modules to complete all or part of the functions described above. In addition, the apparatus and the method according to the above embodiments belong to the same concept, and the specific implementations of the apparatus are detailed in the method embodiments, which will not be repeated here.

FIG. 12 illustrates a structure diagram of a communication device according to an exemplary embodiment of the disclosure. The communication device includes: a processor 1201, a receiver 1202, a transmitter 1203, a memory 1204 and a bus 1205.

The processor 1201 includes one or more processing cores. The processor 1201 executes various functional applications and information processing by running software programs and modules.

The receiver 1202 and the transmitter 1203 may be implemented as a communication component, which may be a communication chip.

The memory 1204 is connected to the processor 1201 via the bus 1205 .

The memory 1204 may be used to store at least one program code, and the at least one program code is executed by the processor 1201, to implement each step in the above method embodiments.

Furthermore, the communication device may be a terminal or a network device. The memory 1204 may be implemented by any type of volatile or non-volatile storage device or their combination, and the volatile or non-volatile storage devices include but are not limited to: a magnetic disk or an optical disk, an electrically erasable programmable read-only memory (EEPROM), an erasable programmable read-only memory (EPROM), a static random access memory (SRAM), a read-only memory (ROM), a magnetic memory, a flash memory, and a programmable read-only memory (PROM).

In an exemplary embodiment, a computer-readable storage medium is also provided, in which executable program code is stored. The executable program code is loaded and executed by a processor, to implement the method for determining precoding based on a codebook according to the above-mentioned various method embodiments, which is executed by the communication device.

In an exemplary embodiment, a chip is provided, which includes a programmable logic circuit and/or program instructions. When the chip runs on a terminal or a network device, it is used to implement the method for determining precoding based on a codebook according to each of the above-mentioned method embodiments.

In an exemplary embodiment, a computer program product is provided. When the computer program product is executed by a processor of a terminal or a network device, it is used to implement the method for determining precoding based on a codebook according to each of the above-mentioned method embodiments.

A person skilled in the art may understand that all or part of the steps to implement the above embodiments may be accomplished by hardware or by instructing related hardware via a program, and the program may be stored in a computer-readable storage medium, and the above-mentioned storage medium may be a ROM, a disk or an optical disk, etc.

The above descriptions are only optional embodiments of the disclosure and are not intended to limit the disclosure. Any modifications, equivalent substitutions, improvements, etc. made within the spirit and principles of the disclosure shall be included in the protection scope of the disclosure.

**Claims**

1. A method for determining precoding based on a codebook, performed by a terminal, the method comprising:

   determining, based on at least one channel status information reference signal (CSI-RS) resource, channel information corresponding to each CSI-RS resource; and
   sending, according to the channel information determined corresponding to each CSI-RS resource and codebook parameter information, CSI to a network device, wherein the CSI comprises indication information corresponding to a plurality of CSI-RS resources and indication information corresponding to each CSI-RS resource, or the CSI comprises indication information corresponding to a plurality of port groups in one CSI-RS resource and indication information corresponding to each port group, the port group comprises a plurality of CSI-RS ports corresponding to the CSI-RS resource;
   wherein the CSI is configured to determine precoding of the terminal based on a codebook structure corresponding to the codebook parameter information.

2. The method according to claim 1, wherein the CSI comprises at least one of following information:

   N pieces of spatial domain basis vector indication information or N pieces of port selection indication information, where N is the same as a number of the CSI-RS resources or a number of the port groups, and N is a positive integer greater than 1;
   combination coefficient indication information, wherein the combination coefficient indication information corresponds to the plurality of CSI-RS resources or the plurality of port groups in the one CSI-RS resource; or
   frequency domain basis vector indication information, wherein the frequency domain basis vector indication information corresponds to the plurality of CSI-RS resources or the plurality of port groups in the one CSI-RS resource.

3. The method according to claim 1, wherein the CSI comprises at least one of following information:

   G pieces of spatial domain basis vector indication information or G pieces of port selection indication information;
   G pieces of combination coefficient indication information; or
   G pieces of frequency domain basis vector indication information;
   wherein G is the same as a number of CSI-RS resource groups in the plurality of CSI-RS resources, and the CSI-RS resource group comprises at least one CSI-RS resource, or G is the same as a number of first groups among the plurality of port groups in the one CSI-RS resource, and the first group comprises at least one port group, and G is a positive integer greater than 1.

4. The method according to claim 1, wherein the CSI comprises at least one of following information:

   spatial domain basis vector indication information or port selection indication information, wherein the spatial domain basis vector indication information or the port selection indication information corresponds to the plurality of CSI-RS resources, or the plurality of port groups in the one CSI-RS resource;

combination coefficient indication information, wherein the combination coefficient indication information corresponds to the plurality of CSI-RS resources or the plurality of port groups in the one CSI-RS resource; or

frequency domain basis vector indication information, wherein the frequency domain basis vector indication information corresponds to the plurality of CSI-RS resources or the plurality of port groups in the one CSI-RS resource.

5. The method according to any one of claims 2 to 4, wherein the combination coefficient indication information comprises non-zero coefficient information and non-zero coefficient position information, the non-zero coefficient information indicates non-zero coefficient(s) in the combination coefficient indication information, and the non-zero coefficient position information indicates a position of the non-zero coefficient in the combination coefficient indication information.

6. The method according to any one of claims 2 to 5, wherein sending, according to the channel information determined corresponding to each CSI-RS resource and codebook parameter information, CSI to the network device comprises:

determining, according to channel information or valid channel information corresponding to each CSI-RS resource and the codebook parameter information, the spatial domain basis vector indication information or the port selection indication information, the combination coefficient indication information and the frequency domain basis vector indication information; and

sending the CSI to the network device, wherein the CSI comprises the spatial domain basis vector indication information or the port selection indication information, the combination coefficient indication information and the frequency domain basis vector indication information.

7. The method according to claim 1, further comprising:
receiving configuration information from the network device, wherein the configuration information is used to configure the codebook parameter information, and the codebook parameter information is used by the terminal to determine the CSI.

8. The method according to claim 7, further comprising:

sending first indication information to the network device, wherein the first indication information indicates an adopted codebook structure; or

receiving second indication information from the network device, wherein the second indication information indicates an adopted codebook structure.

9. The method according to claim 1, wherein the CSI-RS resource is a channel measurement resource (CMR).

10. The method according to claim 9, wherein different CMRs belong to the same CSI-RS resource set or different CSI-RS resource sets.

11. The method according to claim 1, wherein each of the plurality of CSI-RS resources corresponds to one transmission reception point (TRP), and at least two TRPs are configured for coherent joint transmission (CJT); or
each of the plurality of port groups in the one CSI-RS resource corresponds to one TRP, and at least two TRPs are configured for CJT.

12. A method for determining precoding based on a codebook, performed by a network device, the method comprising:

receiving channel status information (CSI) from a terminal, wherein the CSI comprises indication information corresponding to a plurality of channel status information reference signal (CSI-RS) resources and indication information corresponding to each CSI-RS resource, or the CSI comprises indication information corresponding to a plurality of port groups in one CSI-RS resource and indication information corresponding to each port group, the port group comprises a plurality of CSI-RS ports corresponding to the CSI-RS resource, and the CSI is determined by a terminal based on channel information corresponding to each CSI-RS resource in at least one CSI-RS resource and codebook parameter information; and

determining, according to the CSI and a codebook structure corresponding to the codebook parameter information, precoding of the terminal.

**13.** The method according to claim 12, wherein the CSI comprises at least one of following information:

N pieces of spatial domain basis vector indication information or N pieces of port selection indication information, where N is the same as a number of the CSI-RS resources or a number of the port groups, and N is a positive integer greater than 1;
combination coefficient indication information, wherein the combination coefficient indication information corresponds to the plurality of CSI-RS resources or the plurality of port groups in the one CSI-RS resource; or
frequency domain basis vector indication information, wherein the frequency domain basis vector indication information corresponds to the plurality of CSI-RS resources or the plurality of port groups in the one CSI-RS resource.

**14.** The method according to claim 13, wherein the codebook structure is expressed by following formulas:

$$W = \begin{bmatrix} W_{1,1} & & \\ & \ddots & \\ & & W_{1,N} \end{bmatrix} \widetilde{W}_2 W_f^H, \quad W_{1,i} \in \mathbb{C}^{N_t \times 2L_i} \text{ or } W_{1,i} \in \mathbb{C}^{P \times 2L_i}, \ \widetilde{W}_2 \in \mathbb{C}^{\sum_{i=1}^{N} 2L_i \times M}, \ W_f \in \mathbb{C}^{N_3 \times M}$$

where W represents the codebook structure, N represents the number of the CSI-RS resources or the number of the port groups, $N_t$ represents a number of transmitting antenna ports, P is a number of CSI-RS ports, $L_i$ represents a number of spatial domain basis vectors or a number of CSI-RS ports corresponding to an $i^{th}$ CSI-RS resource, i $\in$ {1, ..., N}, or a number of spatial domain basis vectors or a number of CSI-RS ports corresponding to an $i^{th}$ port group, i $\in$ {1, ..., N}, M represents a number of frequency domain basis vectors corresponding to the $i^{th}$ CSI-RS resource, or a number of frequency domain basis vectors corresponding to the $i^{th}$ port group, $N_3$ represents a number of precoding matrix indication (PMI) subbands, $W_{1,i}$ represents a matrix consisting of $L_i$ spatial domain basis vectors or unit basis vectors for port selection corresponding to the $i^{th}$ CSI-RS resource, or a matrix consisting of $L_i$ spatial domain basis vectors or unit basis vectors for port selection corresponding to the $i^{th}$ port group, $\tilde{W}_2$ represents a matrix consisting of the combination coefficient indication information, $W_f$ represents a matrix consisting of M frequency domain basis vectors, $H$ is a conjugate transpose, and $\mathbb{C}^{X \times Y}$ represents a complex matrix with dimensions of X rows and Y columns.

**15.** The method according to claim 12, wherein the CSI comprises at least one of following information:

G pieces of spatial domain basis vector indication information or G pieces of port selection indication information;
G pieces of combination coefficient indication information; or
G pieces of frequency domain basis vector indication information;
wherein G is the same as a number of CSI-RS resource groups in the plurality of CSI-RS resources, and the CSI-RS resource group comprises at least one CSI-RS resource, or G is the same as a number of first groups among the plurality of port groups in the one CSI-RS resource, and the first group comprises at least one port group, and G is a positive integer greater than 1.

**16.** The method according to claim 15, wherein the codebook structure is expressed by following formulas:

$$W = \begin{bmatrix} W_{1,1} \widetilde{W}_{2,1} W_{f,1}^H \\ \vdots \\ W_{1,g} \widetilde{W}_{2,g} W_{f,g}^H \end{bmatrix}, \quad W_{1,g} \in \mathbb{C}^{N_g N_t \times 2L_g}, \ \widetilde{W}_{2,g} \mathbb{C}^{2L_g \times M_g}, \ W_{f,g}^H \in \mathbb{C}^{N_3 \times M_g}$$

where the W represents the codebook structure, $W_{1,g}$ represents a matrix consisting of spatial domain basis vectors or unit basis vectors for port selection corresponding to CSI-RS resources in a $g^{th}$ group, g $\in$ {1, ..., G}, or a matrix consisting of spatial domain basis vectors or unit basis vectors for port selection corresponding to port groups in a $g^{th}$ group, $N_g$ represents a number of CSI-RS resources or a number of port groups in the $g^{th}$ group, $N_t$ represents a number of transmitting antenna ports, $W_{f,g}$ represents a matrix consisting of $M_g$ frequency domain basis vectors corresponding to CSI-RS resources in the $g^{th}$ group, or a matrix consisting of $M_g$ frequency domain basis vectors corresponding to port groups in the $g^{th}$ group, $M_g$ represents a number of frequency domain basis vectors selected for the $g^{th}$ group, $\tilde{W}_{2,g}$ represents a matrix consisting of combination coefficients corresponding to CSI-RS resources in the $g^{th}$ group, or a matrix consisting of combination coefficients corresponding to port groups in the $g^{th}$ group, $L_g$

represents a number of spatial domain basis vectors or a number of CSI-RS ports selected for the g$^{th}$ group, G represents being the same as the number of CSI-RS resource groups in the plurality of CSI-RS resources or the number of first groups among the port groups, G is a positive integer greater than 1, $N_3$ represents a number of precoding matrix indication (PMI) subbands, **H** is a conjugate transpose, and $\mathbb{C}^{X \times Y}$ represents a complex matrix with dimensions of X rows and Y columns.

17. The method according to claim 12, wherein the CSI comprises at least one of following information:

   spatial domain basis vector indication information, wherein the spatial domain basis vector indication information corresponds to the plurality of CSI-RS resources, or the plurality of port groups in the one CSI-RS resource;
   combination coefficient indication information, wherein the combination coefficient indication information corresponds to the plurality of CSI-RS resources, or the plurality of port groups in the one CSI-RS resource;
   frequency domain basis vector indication information, wherein the frequency domain basis vector indication information corresponds to the plurality of CSI-RS resources, or the plurality of port groups in the one CSI-RS resource.

18. The method according to claim 17, wherein the codebook structure is expressed by following formulas:

$$W = W_1 \widetilde{W}_2 W_f^H, \quad W_1 \in \mathbb{C}^{NN_t \times 2L}, \text{ or } W_1 \in \mathbb{C}^{NP \times 2L}, \quad \widetilde{W}_2 \in \mathbb{C}^{2L \times M}, \quad W_f \in \mathbb{C}^{N_3 \times M}$$

   where **W** represents the codebook structure, N represents the number of the CSI-RS resources or the number of the port groups, $N_t$ represents a number of transmitting antenna ports, L represents a number of spatial domain basis vectors or CSI-RS ports corresponding to the CSI-RS resources, or a number of spatial domain basis vectors or CSI-RS ports corresponding to the port groups, M represents a number of frequency domain basis vectors corresponding to the CSI-RS resources, or a number of frequency domain basis vectors corresponding to the port groups, $N_3$ represents a number of precoding matrix indication (PMI) subbands, $W_1$ represents a matrix consisting of L spatial domain basis vectors or unit basis vectors for port selection for the CSI-RS resources, or a matrix consisting of L spatial domain basis vectors or unit basis vectors for port selection for the port groups, $\tilde{W}_2$ represents a matrix consisting of the combination coefficient indication information, $W_f$ represents a matrix consisting of M frequency domain basis vectors, **H** is a conjugate transpose, and $\mathbb{C}^{X \times Y}$ represents a complex matrix with dimensions of X rows and Y columns.

19. The method according to any one of claims 13 to 18, wherein the combination coefficient indication information comprises non-zero coefficient information and non-zero coefficient position information, the non-zero coefficient information indicates a non-zero coefficient in the combination coefficient indication information, and the non-zero coefficient position information indicates a position of the non-zero coefficient in the combination coefficient indication information.

20. The method according to any one of claims 13 to 19, wherein receiving the CSI from the terminal comprises:

   receiving the CSI from the terminal, wherein the CSI comprises the spatial domain basis vector indication information or the port selection indication information, the combination coefficient indication information and the frequency domain basis vector indication information;
   the spatial domain basis vector indication information or the port selection indication information, the combination coefficient indication information and the frequency domain basis vector indication information are determined by the terminal according to channel information or valid channel information corresponding to each CSI-RS resource and the codebook parameter information.

21. The method according to claim 12, further comprising:
   sending configuration information to the terminal, wherein the configuration information is used to configure the codebook parameter information, and the codebook parameter information is used by the terminal to determine the CSI.

22. The method according to claim 21, further comprising:

   receiving first indication information from the terminal, wherein the first indication information indicates an adopted codebook structure; or

sending second indication information to the terminal, wherein the second indication information indicates an adopted codebook structure.

23. The method according to claim 12, wherein the CSI-RS resource is a channel measurement resource (CMR).

24. The method according to claim 23, wherein different CMRs belong to the same CSI-RS resource set or different CSI-RS resource sets.

25. The method according to any one of claims 12 to 24, wherein each of the plurality of CSI-RS resources corresponds to one transmission reception point (TRP), and at least two TRPs are configured for coherent joint transmission (CJT); or each of the plurality of port groups in the one CSI-RS resource corresponds to a TRP, and at least two TRPs are configured for CJT.

26. An apparatus for determining precoding based on a codebook, comprising:

a determination module, configured to determine, based on at least one channel status information reference signal (CSI-RS) resource, channel information corresponding to each CSI-RS resource; and

a sending module, configured to send, according to the channel information determined and codebook parameter information corresponding to each CSI-RS resource, CSI to a network device, wherein the CSI comprises indication information corresponding to a plurality of CSI-RS resources and indication information corresponding to each CSI-RS resource, or the CSI comprises indication information corresponding to a plurality of port groups in one CSI-RS resource and indication information corresponding to each port group, the port group comprises a plurality of CSI-RS ports corresponding to the CSI-RS resource; and the CSI is configured to determine precoding of the terminal based on a codebook structure corresponding to the codebook parameter information.

27. An apparatus for determining precoding based on a codebook, comprising:

a receiving module, configured to receive channel status information (CSI) from a terminal, wherein the CSI comprises indication information corresponding to a plurality of channel status information reference signal (CSI-RS) resources and indication information corresponding to each CSI-RS resource, or the CSI comprises indication information corresponding to a plurality of port groups in one CSI-RS resource and indication information corresponding to each port group, the port group comprises a plurality of CSI-RS ports corresponding to the CSI-RS resource, and the CSI is determined by a terminal based on channel information corresponding to each CSI-RS resource in at least one CSI-RS resource and codebook parameter information;

a determination module, configured to determine, according to the CSI and a codebook structure corresponding to the codebook parameter information, precoding of the terminal.

28. A terminal, comprising:

a processor;

a transceiver connected to the processor;

wherein the processor is configured to load and execute executable instructions, to implement the method for determining precoding based on a codebook according to any one of claims 1 to 11.

29. A network device, comprising:

a processor;

a transceiver connected to the processor;

wherein the processor is configured to load and execute executable instructions, to implement the method for determining precoding based on a codebook according to any one of claims 12 to 25.

30. A computer-readable storage medium having executable program codes stored thereon which, when loaded and executed by a processor, implement the method for determining precoding based on a codebook according to any one of claims 1 to 25.

FIG. 1

FIG. 2

terminal

network device

step 301: determining by the terminal channel information corresponding to each CSI-RS resource based on at least one CSI-RS resource

step 302: sending by the terminal CSI to a network device, according to the channel information determined corresponding to each CSI-RS resource and codebook parameter information, in which the CSI includes indication information corresponding to a plurality of CSI-RS resources and indication information corresponding to each CSI-RS resource, or the CSI includes indication information corresponding to a plurality of port groups in one CSI-RS resource and indication information corresponding to each port group, the port group includes a plurality of CSI-RS ports corresponding to the CSI-RS resource; and the CSI is configured to determine precoding of the terminal based on a codebook structure corresponding to the codebook parameter information

step 303: receiving by the network device CSI from the terminal, in which the CSI includes indication information corresponding to a plurality of CSI-RS resources and indication information corresponding to each CSI-RS resource, or the CSI includes indication information corresponding to a plurality of port groups in one CSI-RS resource and indication information corresponding to each port group, the port group includes a plurality of CSI-RS ports corresponding to the CSI-RS resource, and the CSI is determined by the terminal based on channel information corresponding to each CSI-RS resource in at least one CSI-RS resource and codebook parameter information

step 304: determining by the network device precoding of the terminal, according to the CSI and a codebook structure corresponding to the codebook parameter information

FIG. 3

| terminal | | network device |
|---|---|---|

step 401: determining by the terminal the spatial domain basis indication information or the port selection indication information, the combination coefficient indication information and the frequency domain basis indication information, according to channel information or valid channel information corresponding to each CSI-RS resource and the codebook parameter information

step 402: sending by the terminal the CSI to the network device, in which the CSI includes the spatial domain basis vector indication information or the port selection indication information, the combination coefficient indication information and the frequency domain basis vector indication information

step 403: receiving by the network device the CSI from the terminal, in which the CSI includes the spatial domain basis vector indication information or the port selection indication information, the combination coefficient indication information and the frequency domain basis vector indication information

FIG. 4

| terminal | | network device |
|---|---|---|

step 501: sending by the network device configuration information to the terminal, in which the configuration information is used to configure the codebook parameter information, and the codebook parameter information is used by the terminal to determine the CSI

step 502: receiving by the terminal configuration information from the network device, in which the configuration information is used to configure the codebook parameter information, and the codebook parameter information is used by the terminal to determine the CSI

FIG. 5

determining by the terminal channel information corresponding to each CSI-RS resource based on at least two CSI-RS resources ⟋601

↓

sends by the terminal CSI to the network device, according to the channel information determined corresponding to each CSI-RS resource and codebook parameter information, in which the CSI includes indication information corresponding to a plurality of CSI-RS resources and indication information corresponding to each CSI-RS resource, or the CSI includes indication information corresponding to a plurality of port groups in one CSI-RS resource and indication information corresponding to each port group, the port group includes a plurality of CSI-RS ports corresponding to the CSI-RS resource, and the CSI is configured to determine precoding of the terminal based on a codebook structure corresponding to the codebook parameter information ⟋602

FIG. 6

receiving by the network device CSI from the terminal, in which the CSI includes indication information corresponding to a plurality of CSI-RS resources and indication information corresponding to each CSI-RS resource, or the CSI includes indication information corresponding to a plurality of port groups in one CSI-RS resource and indication information corresponding to each port group, the port group includes a plurality of CSI-RS ports corresponding to the CSI-RS resource, and the CSI is determined by the terminal based on channel information corresponding to each CSI-RS resource in at least one CSI-RS resource and codebook parameter information ⟋701

↓

determining by the network device precoding of the terminal, according to the CSI and the codebook structure corresponding to the codebook parameter information ⟋702

FIG. 7

determination module ⟋801

sending module ⟋802

FIG. 8

receiving module ⟋803

determination module ⟋801

sending module ⟋802

FIG. 9

receiving module 1001

determination module 1002

FIG. 10

sending module 1003

receiving module 1001

determination module 1002

FIG. 11

processor 1201

transmitter 1203

bus 1205

receiver 1202

memory 1204

FIG. 12

## INTERNATIONAL SEARCH REPORT

| International application No. |
|---|
| **PCT/CN2022/089672** |

**A. CLASSIFICATION OF SUBJECT MATTER**

H04W 72/04(2009.01)i; H04W 24/10(2009.01)i

According to International Patent Classification (IPC) or to both national classification and IPC

**B. FIELDS SEARCHED**

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

CNABS; CNTXT; CNKI; VEN; WOTXT; USTXT; EPTXT; 3GPP: 预编码, 码本, 信道状态信息参考信号, 信道, 信道状态信息, 指示, 端口, 空域, 信道测量资源, TRP, PMI, codebook, CSI-RS, channel, CSI, indicate, port, space domain, CMR

**C. DOCUMENTS CONSIDERED TO BE RELEVANT**

| Category* | Citation of document, with indication, where appropriate, of the relevant passages | Relevant to claim No. |
|---|---|---|
| X | CN 114390579 A (VIVO COMMUNICATION TECHNOLOGY CO., LTD.) 22 April 2022 (2022-04-22)<br>description, paragraphs [0061]-[0302] | 1, 7, 8, 12, 21, 22, 26-30 |
| X | CN 112292894 A (NEC CORP.) 29 January 2021 (2021-01-29)<br>description, paragraphs [0059]-[0137] | 1, 7, 8, 12, 21, 22, 26-30 |
| A | CN 111162826 A (BEIJING SPREADTRUM HIGH-TECH COMMUNICATIONS TECHNOLOGY CO., LTD.) 15 May 2020 (2020-05-15)<br>entire document | 1-30 |
| A | US 2021143870 A1 (TELEFONAKTIEBOLAGET LM ERICSSON (PUBL)) 13 May 2021 (2021-05-13)<br>entire document | 1-30 |
| A | ERICSSON. "CSI Feedback for Multi-TRP"<br>*3GPP TSG RAN WG1 Meeting 90bis R1-1718737*, 03 October 2017 (2017-10-03),<br>entire document | 1-30 |

☐ Further documents are listed in the continuation of Box C.    ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **08 December 2022** | **14 December 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.

**PCT/CN2022/089672**

| Patent document cited in search report | | | Publication date (day/month/year) | Patent family member(s) | | | Publication date (day/month/year) |
|---|---|---|---|---|---|---|---|
| CN | 114390579 | A | 22 April 2022 | None | | | |
| CN | 112292894 | A | 29 January 2021 | None | | | |
| CN | 111162826 | A | 15 May 2020 | None | | | |
| US | 2021143870 | A1 | 13 May 2021 | US | 11245444 | B2 | 08 February 2022 |

Form PCT/ISA/210 (patent family annex) (January 2015)